# EUROPEAN PATENT SPECIFICATION

(11) **EP 3 108 384 B1**
(45) Date of publication and mention of the grant of the patent: **16.06.2021**
(21) Application number: 15751462.1
(22) Date of filing: 20.02.2015
(51) Int. Cl.: H04W 4/02

(54) **SEARCHING AND ACCESSING SOFTWARE APPLICATION FUNCTIONALITY**
SUCHE UND ZUGRIFF AUF EINE SOFTWAREANWENDUNGSFUNKTION
RECHERCHE D'UNE FONCTIONNALITÉ D'APPLICATION LOGICIELLE ET ACCÈS À CELLE-CI

(30) Priority: 21.02.2014 US 201461943105 P
(43) Date of publication of application: 28.12.2016
(73) Proprietor: Samsung Electronics Co., Ltd., Gyeonggi-do 16677 (KR)
(72) Inventor: SHAPIRA, Liron, Mountain View, California 94041 (US); GLOVER, Eric, J., Palo Alto, CA 94306 (US)
(74) Representative: Nederlandsch Octrooibureau
(86) International application number: PCT/US2015/016866
(87) International publication number: WO 2015/127240

(56) References cited:
- US-A1- 2008 215 557
- US-A1- 2011 072 001
- US-A1- 2012 316 955
- US-A1- 2013 132 896
- US-A1- 2013 290 321
- US-A1- 2013 290 344
- US-A1- 2014 052 683

## Description

This disclosure generally relates to the field of search, and more particularly to techniques for generating search results that correspond to states within software applications.

In recent years, the use of computers, smartphones, and other Internet-connected computing devices has grown significantly. Correspondingly, the number of software applications available for such computing devices has also grown. Today, many diverse software applications can be accessed on a number of different computing devices, including, but not limited to, smartphones, personal computers, automobiles, and televisions. These software applications can include business driven applications, games, educational applications, news applications, shopping applications, messaging applications, media streaming applications, and social networking applications, as some examples. Because of the large number of software applications available today and the wide range of functionality they provide, computing device users often require the ability to search for and access specific software application functionality. US2008/215557 and US2013/290321 are considered prior art.

The invention is defined by the appended claims. One aspect of the disclosure provides a method of performing a search query. The method includes receiving a search query from a user device and identifying one or more function records using the search query. Each function record includes an application access mechanism (AAM) and an application state information (ASI). The AAM includes a reference to a native application and indicates one or more operations for the native application to perform. The ASI describes a state of the native application after the native application has performed the one or more operations indicated by the AAM. The method further includes selecting one or more AAMs from the identified one or more function records and identifying one or more AAMs of the selected one or more AAMs that are each compatible with the user device. The method further includes transmitting the identified one or more AAMs to the user device, and refraining from transmitting any AAMs of the selected one or more AAMs that are not compatible with the user device.

Implementations of the disclosure may include one or more of the following optional features. In some implementations, identifying the one or more AAMs of the selected one or more AAMs that are each compatible with the user device includes determining that the identified one or more AAMs are each compatible with an operating system of the user device. Additionally, in some examples, each of the selected one or more AAMs further includes edition information that indicates an operating system with which the native application referenced by the AAM is compatible. Determining that the identified one or more AAMs are each compatible with the operating system of the user device may include receiving an indication of the operating system of the user device. For each of the selected one or more AAMs, the method may include determining whether the AAM is compatible with the operating system of the user device using the edition information included in the AAM and the indication, including the AAM in the identified one or more AAMs in response to determining that the AAM is compatible with the operating system of the user device, and excluding the AAM from the identified one or more AAMs in response to determining that the AAM is not compatible with the operating system of the user device. In some implementations, each of the identified one or more function records further includes an additional AAM in addition to the AAM. The additional AAM includes a reference to an edition of the native application that is different than an edition of the native application referenced by the AAM. The different editions of the native application include different versions of the native application for different operating systems. Selecting the one or more AAMs from the identified one or more function records includes selecting the AAM and the additional AAM from each of the identified one or more function records. In some examples, determining that the identified one or more AAMs are each compatible with the operating system of the user device includes receiving an indication of the operating system, and for each of the identified one or more function records, the method includes determining whether one of the AAM and the additional AAM is compatible with the operating system using the indication, including one of the AAM and the additional AAM in the identified one or more AAMs in response to determining that the corresponding AAM is compatible with the operating system. The method also includes excluding any of the AAM and the additional AAM from the identified one or more AAMs in response to determining that the corresponding AAM is not compatible with the operating system.

In some examples, each of the identified one or more function records further includes a web address, e.g., a web access mechanism in addition to the AAM. The web address is configured to direct a web browser to a web version of the native application referenced by the AAM. In some examples, selecting the one or more AAMs from the identified one or more function records includes selecting the AAM from each of the identified one or more function records. Determining that the identified one or more AAMs are each compatible with the operating system of the user device may include receiving an indication of the operating system. Determining that the identified one or more AAMs are each compatible with the operating system of the user device also includes, for each of the identified one or more function records, determining whether the AAM is compatible with the operating system using the indication, including the AAM in the identified one or more AAMs in response to determining that the AAM is compatible with the operating system, and excluding the AAM from the identified one or more AAMs and transmitting the web address to the user device in response to determining that the AAM is not compatible with the operating system.

In some implementations, each of the identified one or more function records further includes an additional AAM in addition to the AAM and a web address. The additional AAM includes a reference to an edition of the native application that is different than an edition of the native application referenced by the AAM. The different editions of the native application include different versions of the native application for different operating systems. The web address is configured to direct a web browser to a web version of the native application. Selecting the one or more AAMs from the identified one or more function records includes selecting the AAM and the additional AAM from each of the identified one or more function records. Determining that the identified one or more AAMs are each compatible with the operating system of the user device includes receiving an indication of the operating system. For each of the identified one or more function records, determining that the identified one or more AAMs are each compatible with the operating system of the user device further includes determining whether one of the AAM and the additional AAM is compatible with the operating system using the indication, including one of the AAM and the additional AAM in the identified one or more AAMs in response to determining that the corresponding AAM is compatible with the operating system, and excluding the AAM and the additional AAM from the identified one or more AAMs and transmitting the web address to the user device in response to determining that the AAM and the additional AAM are not compatible with the operating system.

Identifying the one or more AAMs of the selected one or more AAMs that are each compatible with the user device may include determining that the identified one or more AAMs are each compatible with a native application that is installed on the user device. Each of the selected one or more AAMs may further include edition information that indicates a version the native application referenced by the AAM with which the AAM is compatible. Determining that the identified one or more AAMs are each compatible with a native application that is installed on the user device includes: receiving an indication of a version of each of one or more native applications that are installed on the user device; and for each of the selected one or more AAMs determining whether the AAM is compatible with any of the one or more native applications using the edition information included in the AAM and the indication, including the AAM in the identified one or more AAMs in response to determining that the AAM is compatible with any of the one or more native applications, and excluding the AAM from the identified one or more AAMs in response to determining that the AAM is not compatible with any of the one or more native applications. Additionally, in some examples, each of the identified one or more function records includes an additional AAM in addition to the AAM, where the additional AAM includes a reference to an edition of the native application that is different than an edition of the native application referenced by the AAM. The different editions of the native application include different versions of the native application for the same operating system. Selecting the one or more AAMs from the identified one or more function records includes selecting the AAM and the additional AAM from each of the identified one or more function records. Determining that the identified one or more AAMs are each compatible with a native application that is installed on the user device includes: receiving an indication of a version of each of one or more native applications that are installed on the user device; and for each of the identified one or more function records, determining whether any of the AAM and the additional AAM is compatible with any of the one or more native applications using the indication, including any of the AAM and the additional AAM in the identified one or more AAMs in response to determining that the corresponding AAM is compatible with any of the one or more native applications, and excluding any of the AAM and the additional AAM from the identified one or more AAMs in response to determining that the corresponding AAM is not compatible with any of the one or more native applications.

Each of the identified one or more function records further includes a web address in addition to the AAM, wherein the web address is configured to direct a web browser to a web version of the native application referenced by the AAM, wherein selecting the one or more AAMs from the identified one or more function records includes selecting the AAM from each of the identified one or more function records. Determining that the identified one or more AAMs are each compatible with a native application that is installed on the user device includes: receiving an indication of a version of each of one or more native applications that are installed on the user device; and for each of the identified one or more function records, determining whether the AAM is compatible with any of the one or more native applications using the indication, including the AAM in the identified one or more AAMs in response to determining that the AAM is compatible with any of the one or more native applications, and excluding the AAM from the identified one or more AAMs and transmitting the web address to the user device in response to determining that the AAM is not compatible with any of the one or more native applications.

In some implementations, each of the identified one or more function records further includes an additional AAM in addition to the AAM and a web address. The additional AAM includes a reference to an edition of the native application that is different than an edition of the native application referenced by the AAM. The different editions of the native application include different versions of the native application for the same operating system. The web address is configured to direct a web browser to a web version of the native application. Selecting the one or more AAMs from the identified one or more function records includes selecting the AAM and the additional AAM from each of the identified one or more function records. Determining that the identified one or more AAMs are each compatible with a native application that is installed on the user device includes: receiving an indication of a version of each of one or more native applications that are installed on the user device; and for each of the identified one or more function records, determining whether any of the AAM and the additional AAM is compatible with the one or more native applications using the indication, including any of the AAM and the additional AAM in the identified one or more AAMs in response to determining that the corresponding AAM is compatible with the one or more native applications, and excluding the AAM and the additional AAM from the identified one or more AAMs and transmitting the web address to the user device in response to determining that the AAM and the additional AAM are not compatible with any of the one or more native applications.

In some examples, identifying the one or more AAMs of the selected one or more AAMs that are each compatible with the user device includes determining that the identified one or more AAMs are each compatible with a device type of the user device. Each of the selected one or more AAMs further includes edition information that indicates a device type with which the native application referenced by the AAM is compatible. Determining that the identified one or more AAMs are each compatible with the device type of the user device includes: receiving an indication of the device type of the user device; and for each of the selected one or more AAMs, determining whether the AAM is compatible with the device type of the user device using the edition information included in the AAM and the indication, including the AAM in the identified one or more AAMs in response to determining that the AAM is compatible with the device type of the user device, and excluding the AAM from the identified one or more AAMs in response to determining that the AAM is not compatible with the device type of the user device. Each of the identified one or more function records further includes an additional AAM in addition to the AAM. The additional AAM includes a reference to an edition of the native application that is different than an edition of the native application referenced by the AAM. The different editions of the native application include different versions of the native application for different device types, where selecting the one or more AAMs from the identified one or more function records includes selecting the AAM and the additional AAM from each of the identified one or more function records. In some examples, determining that the identified one or more AAMs are each compatible with the device type of the user device includes: receiving an indication of the device type; and for each of the identified one or more function records, determining whether one of the AAM and the additional AAM is compatible with the device type using the indication, including one of the AAM and the additional AAM in the identified one or more AAM in response to determining that the corresponding AAM is compatible with the device type, and excluding any of the AAM and the additional AAM from the identified one or more AAM in response to determining that the corresponding AAM is not compatible with the device type.

In some examples, each of the identified one or more function records further includes a web address in addition to the AAM, wherein the web address is configured to direct a web browser to a web version of the native application referenced by the AAM. Selecting the one or more AAMs from the identified one or more function records comprises selecting the AAM from each of the identified one or more function records. Determining that the identified one or more AAMs are each compatible with the device type of the user device includes: receiving an indication of the device type; and for each of the identified one or more function records, determining whether the AAM is compatible with the device type using the indication, including the AAM in the identified one or more AAMs in response to determining that the AAM is compatible with the device type, and excluding the AAM from the identified one or more AAMs and transmitting the web address to the user device in response to determining that the AAM is not compatible with the device type.

In some examples, each of the identified one or more function records further includes an additional AAM in addition to the AAM and a web address, wherein the additional AAM includes a reference to an edition of the native application that is different than an edition of the native application referenced by the AAM, wherein the different editions of the native application include different versions of the native application for different device types, wherein the web address is configured to direct a web browser to a web version of the native application, wherein selecting the one or more AAMs from the identified one or more function records comprises selecting the AAM and the additional AAM from each of the identified one or more function records, and wherein determining that the identified one or more AAMs are each compatible with the device type of the user device includes: receiving an indication of the device type; and for each of the identified one or more function records, determining whether one of the AAM and the additional AAM is compatible with the device type using the indication, including one of the AAM and the additional AAM in the identified one or more AAMs in response to determining that the corresponding AAM is compatible with the device type, and excluding the AAM and the additional AAM from the identified one or more AAMs and transmitting the web address to the user device in response to determining that the AAM and the additional AAM are not compatible with the device type.

Identifying the one or more function records using the search query may include identifying the one or more function records based on one or more matches between one or more terms of the search query and one or more terms of the ASI included in the identified one or more function records. In some examples, for each of the identified one or more AAMs, the method includes transmitting link data to the user device. The link data includes at least one of text and an image that are associated with the state of the native application described by the ASI included in the one of the identified one or more function records from which the AAM was selected.

Yet another aspect of the disclosure provides a method that includes receiving a search query from a user device and identifying one or more function records using the search query. Each function record includes an AAM and an ASI. The AAM includes a reference to a native application and indicates one or more operations for the native application to perform. The ASI describes a state of the native application after the native application has performed the one or more operations indicated by the AAM. The method also includes selecting one or more AAMs from the identified one or more function records and transmitting the selected one or more AAMs to the user device. In some examples, identifying the one or more function records using the search query includes identifying the one or more function records based on matches between terms of the search query and terms of the ASI included in the identified one or more function records. Additionally or alternatively, identifying the one or more function records using the search query includes performing a search of a data store using the search query. The data store includes a plurality of function records that includes the identified one or more function records.

In some examples, the method further includes, for each of the identified one or more function records, generating a score using a machine-learned mode, where selecting the one or more AAMs from the identified one or more function records includes selecting the one or more AAMs based on the one or more scores. Generating the score for each of the identified one or more function records using the machine-learned model may include generating the score based on at least one of a function record scoring feature, a search query scoring feature, and a function record-search query scoring feature. In some examples, generating the score for each of the identified one or more function records using the machine-learned model includes generating the score based on the ASI of the respective function record. At least one of the identified one or more function records includes a quality score, and where generating the score for each of the identified one or more function records using the machine-learned model includes generating the score based on the quality score included in the respective function record. In some examples, the quality score included in the respective function record indicates the popularity of a place or thing described by the ASI of the function record, is a number that indicates how often the function record is retrieved during a search, or is a number that indicates how often an access mechanism of the function record is selected by a user.

In some examples, selecting the one or more AAMs from the identified one or more function records based on the one or more scores for the identified one or more function records includes selecting the one or more AAMs from one or more of the identified one or more function records that have the highest one or more scores. The machine-learned model may include one of a gradient-boosted decision tree and a logistic probability formula.

In some implementations, at least one of the selected one or more AAMs includes an application resource identifier. The application resource identifier is a string that includes the reference to the native application. The application resource identifier is in an application-specific format that is specific for the native application, and the application resource identifier indicates the one or more operations for the native application to perform. The application resource identifier includes a domain name and a path to be used by the native application to retrieve and display information to a user. In some examples, the at least one of the selected one or more AAMs further includes one or more operations for the user device to perform. The one or more operations for the user device to perform include one or more instructions for at least one of a search application of the user device, an operating system of the user device, and the native application. The one or more operations for the user device to perform include one or more instructions for the user device to launch the native application on the user device.

The one or more operations for the native application to perform indicated by at least one of the selected one or more AAMs include the reference to the native application, and the at least one of the selected one or more AAMs further includes one or more operations for the user device to perform. The one or more operations for the user device to perform include one or more instructions for at least one of a search application of the user device, an operating system of the user device, and the native application. The one or more operations for the user device to perform include one or more instructions for the user device to launch the native application on the user device. The one or more operations for the user device to perform may further include one or more instructions for the user device to set the native application into the state of the native application described by the ASI. At least one of the selected one or more AAMs includes one or more instructions for the user device to launch the native application referenced by the respective AAM.

At least one of the identified one or more function records may include a web address in addition to the AAM. The web address is configured to direct a web browser of the user device to a web version of the native application referenced by the AAM. The method further includes, for each of the identified one or more function records, transmitting the web address and the AAM to the user device. The web address is configured to set the web version of the native application into a state that is similar to a state of the native application described by the ASI included in the at least one of the identified one or more function records. The at least one of the identified one or more function records further includes an application download address. The application download address indicates a location for the user device to download the native application referenced in the AAM. The method further includes, for each of the identified one or more function records, transmitting the application download address to the user device.

In some implementations, at least one of the identified one or more function records includes an additional AAM in addition to the AAM. The additional AAM includes a reference to an edition of the native application that is different than an edition of the native application that is referenced by the AAM. The method may further include, for each of the identified one or more function records, transmitting the AAM and the additional AAM to the user device. The at least one of the identified one or more function records may further include a web address. The method further includes, for each of the identified one or more function records, transmitting the web address to the user device.

The least one of the identified one or more function records may further include an application download address. The application download address indicates a location for the user device to download the native application referenced in the AAM. The method may further include, for each of the identified one or more function records, transmitting the application download address to the user device.

In some implementations, at least one of the identified one or more function records further includes an application download address in addition to the AAM. The application download address indicates a location for the user device to download the native application referenced in the AAM. The method further includes, for each of the identified one or more function records, transmitting the application download address and the AAM to the user device. The application download address includes a first application download address. The at least one of the identified one or more function records further includes a second application download address that is different than the first application download address. The first and second application download addresses specify different digital distribution platforms that provide the native application referenced by the AAM for download. In other examples, the application download address includes a first application download address. The at least one of the identified one or more function records further includes a second application download address that is different than the first application download address, and the first and second application download addresses specify different editions of the native application referenced by the AAM.

In some implementations, the at least one of the identified one or more function records further includes a web address. The method further includes, for each of the identified one or more function records, transmitting the web address to the user device. The method may also include transmitting link data to the user device for at least one of the selected one or more AAMs. The link data includes at least one of text and an image that are associated with the state of the native application described by the ASI of the function record that includes the at least one of the selected one or more AAMs.

Yet another aspect of the disclosure provides a system that includes one or more computing devices. The computing devices are configured to receive a search query from a user device and identify one or more function records using the search query. Each function record includes an application access mechanism (AAM) and application state information (ASI). The AAM includes a reference to a native application and indicates one or more operations for the native application to perform. The ASI describes a state of the native application after the native application has performed the one or more operations indicated by the AAM. The one or more computing devices are also configured to select one or more AAMs from the identified one or more function records and transmit the selected one or more AAMs to the user device.

The system also includes a data store that includes a plurality of function records that includes the identified one or more function records. To identify the one or more function records, the one or more computing devices are configured to perform a search of the data store using the search query and identify the one or more function records based on matches between terms of the search query and terms of the ASI included in the identified one or more function records.

The one or more computing devices are further configured to generate a score using a machine-learned model for each of the identified one or more function records. In addition, to select the one or more AAMs from the identified one or more function records, the one or more computing devices are configured to select the one or more AAMs from one or more of the identified one or more function records that have the highest one or more scores.

In some examples, at least one of the selected one or more AAMs includes an application resource identifier. The application resource identifier is a string that includes the reference to the native application. The application resource identifier is in an application-specific format that is specific for the native application. The application resource identifier indicates the one or more operations for the native application to perform, and the at least one of the selected one or more AAMs further includes one or more instructions for the user device to launch the native application on the user device.

In some examples, at least one of the selected one or more AAMs includes one or more instructions for the user device to launch the native application referenced by the respective AAM. At least one of the identified one or more function records includes a web address in addition to the AAM. The web address is configured to direct a web browser of the user device to a web version of the native application referenced by the AAM and set the web version of the native application into a state that is similar to a state of the native application described by the ASI included in the at least one of the identified one or more function records, and the one or more computing devices are further configured to, for each of the identified one or more function records, transmit the web address and the AAM to the user device.

In some implementations, at least one of the identified one or more function records includes an additional AAM in addition to the AAM. The additional AAM includes a reference to an edition of the native application that is different than an edition of the native application that is referenced by the AAM, and the one or more computing devices are further configured to, for each of the identified one or more function records, transmit the AAM and the additional AAM to the user device.

At least one of the identified one or more function records may further include an application download address in addition to the AAM. The application download address indicates a location for the user device to download the native application referenced in the AAM. The one or more computing devices are further configured to, for each of the identified one or more function records, transmit the application download address and the AAM to the user device.

In some implementations, the one or more computing devices are further configured to identify one or more AAMs of the selected one or more AAMs that are compatible with the user device. To transmit the selected one or more AAMs to the user device, the one or more computing devices are configured to transmit the identified one or more AAMs that are compatible with the user device, and refrain from transmitting any AAM of the selected one or more AAMs that is not compatible with the user device.

In yet another aspect of the disclosure, a non-transitory computer-readable storage medium includes instructions that cause one or more computing devices to receive a search query from a user device and identify one or more function records using the search query. Each function record includes an application access mechanism (AAM) and application state information (ASI). The AAM includes a reference to a native application and indicates one or more operations for the native application to perform, and the ASI describes a state of the native application after the native application has performed the one or more operations indicated by the AAM. The instructions also cause the one or more computing devices to select one or more AAMs from the identified one or more function records, and transmit the selected one or more AAMs to the user device.

Another aspect of the disclosure provides a method that includes selecting function records. Each function record includes an application access mechanism (AAM), application state information (ASI), and a concept name. The AAM references a native application and indicates one or more operations for the native application to perform. The ASI describes a state of the native application after the native application has performed the one or more operations, and the concept name describes a concept associated with the ASI. Selecting the function records includes selecting function records that have the same concept name. The method also includes: aggregating the ASI included in the selected function records; generating a new function record that includes new ASI includes the aggregated ASI; and generating a new AAM for the new function record that is different than the AAMs included in the selected function records. The method also includes: receiving a search query from a user device;
identifying the new function record using the search query; selecting the new AAM from the new function record; and transmitting the new AAM to the user device.

In some implementations, identifying the new function record using the search query includes identifying the new function record based on matches between terms of the search query and terms of the aggregated ASI included in the new function record. The method may further include storing the new function record in a data store that includes a plurality of function records including the selected function records. Identifying the new function record using the search query includes performing a search of the data store using the search query. The method may also include: identifying one or more of the plurality of function records using the search query; selecting one or more AAMs from the identified one or more of the plurality of function records; and transmitting the selected one or more AAMs to the user device along with the new AAM.

In some examples, the new AAM references a native application and indicates one or more operations for the native application to perform. Performance of the one or more operations causes the native application to perform a search within the native application using the concept name.

The new AAM may reference a native application and indicate one or more operations for the native application to perform. Performance of the one or more operations causes the native application to access a category within the native application that corresponds to the concept name. Alternatively, the new AAM may reference a native application and indicate one or more operations for the native application to perform. The AAMs included in the selected function records reference different native applications, and the native application referenced by the new AAM includes one of a native application referenced by the AAMs included in the selected function records and another native application. In yet another example, the new AAM references a native application and indicates one or more operations for the native application to perform. The AAMs included in the selected function records each reference the same native application, and the native application referenced by the new AAM includes the same native application.

Each of the selected function records may further include location data that indicates a geographic area associated with the respective function record. The method further includes: aggregating the location data included in the selected function records; and generating new location data for the new function record. The new location data includes the aggregated location data. Identifying the new function record using the search query includes identifying the new function record based on the aggregated location data included in the new function record.

Yet another aspect of the disclosure provides a system that includes one or more computing devices. The one or more computing devices configured to select function records. Each function record includes an application access mechanism (AAM), application state information (ASI), and a concept name. The AAM references a native application and indicates one or more operations for the native application to perform. The ASI describes a state of the native application after the native application has performed the one or more operations. The concept name describes a concept associated with the ASI. To select the function records, the one or more computing devices are configured to select function records that have the same concept name. In addition, the one or more computing devices are configured to: aggregate the ASI included in the selected function records; generate a new function record that includes new ASI including the aggregated ASI; generate a new AAM for the new function record that is different than the AAMs included in the selected function records; and receive a search query from a user device. In addition, the one or more computing devices are configured to: identify the new function record using the search query; select the new AAM from the new function record; and transmit the new AAM to the user device.

In some implementation, the one or more computing devices are further configured to store the new function record in a data store that includes a plurality of function records including the selected function record. To identify the new function record using the search query, the one or more computing devices are configured to perform a search of the data store using the search query. The one or more computing devices are further configured to: identify one or more of the plurality of function records using the search query; select one or more AAMs from the identified one or more of the plurality of function records; and transmit the selected one or more AAMs to the user device along with the new AAM.

The new AAM may reference a native application and indicate one or more operations for the native application to perform, and performance of the one or more operations causes the native application to perform a search within the native application using the concept name. In other examples, the new AAM references a native application and indicates one or more operations for the native application to perform, and performance of the one or more operations causes the native application to access a category within the native application that corresponds to the concept name. In yet another example, the new AAM references a native application and indicates one or more operations for the native application to perform, where the AAMs included in the selected function records reference different native applications, and the native application referenced by the new AAM includes one of a native application referenced by the AAMs included in the selected function records and another native application. In yet another example, the new AAM references a native application and indicates one or more operations for the native application to perform, where the AAMs included in the selected function records each reference the same native application and the native application referenced by the new AAM includes the same native application.

In some implementation, each of the selected function records further includes location data that indicates a geographic area associated with the respective function record. The one or more computing devices are further configured to: aggregate the location data included in the selected function records; and generate new location data for the new function record, where the new location data includes the aggregated location data. To identify the new function record using the search query, the one or more computing devices are configured to identify the new function record based on the aggregated location data included in the new function record.

Another aspect of the disclosure provides a non-transitory computer-readable storage medium that includes instructions that cause one or more computing devices to select function records. Each function record includes an application access mechanism (AAM), application state information (ASI), and a concept name. The AAM references a native application and indicates one or more operations for the native application to perform, the ASI describes a state of the native application after the native application has performed the one or more operations, and the concept name describes a concept associated with the ASI. The instructions that cause the one or more computing devices to select the function records include instructions that cause the one or more computing devices to select function records that have the same concept name. In addition, the instructions that cause the one or more computing devices to select the function records include instructions to: aggregate the ASI included in the selected function records; generate a new function record that includes new ASI including the aggregated ASI; generate a new AAM for the new function record that is different than the AAM s included in the selected function records; and receive a search query from a user device. The instructions that cause the one or more computing devices to select the function records include instructions to: identify the new function record using the search query; select the new AAM from the new function record; and transmit the new AAM to the user device.

Another aspect of the disclosure provides a method that includes transmitting a search query to a search system configured to generate search results in response to a received search query. The method includes receiving search results from the search system in response to transmitting the search query. The search results include an application access mechanism (AAM) that references a native application and indicates one or more operations for the native application to perform. The search results further include an application download address that indicates a location at which the native application may be downloaded. The method also includes generating a user selectable link that includes the AAM and the application download address, and displaying the user selectable link. The method also includes: receiving a user selection of the user selectable link; and in response to receiving the user selection, downloading the native application using the application download address, installing the native application, launching the native application, and causing the native application to perform the one or more operations.

In some implementations, the AAM specifies an application state of the native application referenced by the AAM, and the native application performs the one or more operations indicated by the AAM sets the native application into the application state. The method may further include receiving a user input, where downloading, installing, and launching the native application, and causing the native application to perform the one or more operations in response to receiving the user selection includes downloading, installing, and launching the native application, and causing the native application to perform the one or more operations in response to receiving the user selection and in response to receiving the user input. The user selectable link may include a first user selectable link. The user selection includes a first user selection. Downloading, installing, and launching the native application, and causing the native application to perform the one or more operations in response to receiving the user selection and in response to receiving the user input includes in response to receiving the first user selection, accessing the location indicated by the application download address; displaying a graphical user interface (GUI) associated with the location, the GUI including a second user selectable link that is different than the first user selectable link, where the user input includes a second user selection of the second user selectable link that is different than the first user selection; and in response to receiving the second user selection, downloading the native application from the location, installing the native application, launching the native application, and causing the native application to perform the one or more operations.

In some implementations, downloading, installing, and launching the native application, and causing the native application to perform the one or more operations in response to receiving the user selection and in response to receiving the user input includes: in response to receiving the user selection, downloading the native application from the location, and installing the native application; and in response to receiving the user input, launching the native application, and causing the native application to perform the one or more operations. In some examples, the user selectable link includes a first user selectable link. The user selection includes a first user selection. Launching the native application and causing the native application to perform the one or more operations in response to receiving the user input includes: generating a second user selectable link that is different than the first use selectable link, wherein the second user selectable link includes the AAM, and displaying the second user selectable link, where the user input includes a second user selection of the second user selectable link that is different than the first user selection. And in response to receiving the second user selection, launching the native application, and causing the native application to perform the one or more operations.

In some examples, the AAM includes a first AAM, where the search results further include a second AAM that is different than the first AAM. The first and second AAMs reference different editions of the native application. The method further includes determining that the first AAM references the edition of the native application downloaded from the location indicated by the application download address. Generating the second user selectable link includes generating the second user selectable link such that the second user selectable link includes the first AAM and excludes the second AAM based on the determination.

In yet other examples, the AAM includes a first AAM, and the search results further include a second AAM that is different than the first AAM. The first and second AAMs reference different editions of the native application. Generating the second user selectable link includes generating the second user selectable link such that the second user selectable link further includes the second AAM. The method further includes determining that the first AAM references the edition of the native application downloaded from the location indicated by the application download address. Launching the native application and causing the native application to perform the one or more operations in response to receiving the second user selection includes launching the native application and causing the native application to perform the one or more operations based on the determination.

In some implementations, the method includes transmitting an indication that the native application is not installed to the search system. Receiving the search from the search system includes receiving the search results such that the search results include the application download address in response to transmitting the indication.

In some implementations, the AAM specifies an application state of the native application. The native application performs the one or more operations and sets the native application into the application state. The search results further include a web access mechanism (WAM) that references a web-based application and indicates one or more operations for the web-based application to perform. The WAM specifies a web application state of the web-based application, the web-based application performs the one or more operations and sets the web-based application into the web application state. The web application state of the web-based application is similar to the application state of the native application. Generating the user selectable link includes generating the user selectable link such that the user selectable link further includes the WAM. The method further includes, in response to receiving the user selection, launching the web-based application, and causing the web-based application to perform the one or more operations indicated by the WAM. The WAM may be configured to direct a web browser application to a web version of the application state of the native application specified by the AAM. The method may further include receiving a user input. launching the web-based application and causing the web-based application to perform the one or more operations indicated by the WAM in response to receiving the user selection includes launching the web-based application and causing the web-based application to perform the one or more operations in response to receiving the user selection and in response to receiving the user input.

In some examples, the method further includes performing one of the following: suspending the web-based application; altering a visible area of the web-based application; minimizing the web-based application; moving the web-based application to the background; or terminating the web-based application. Performing the one of minimizing, moving to the background, and terminating the web-based application includes performing the one of minimizing, moving to the background, and terminating the web-based application upon completing one or more of downloading, installing, and launching the native application, and causing the native application to perform the one or more operations. The method may also include receiving a user input, where performing the one of minimizing, moving to the background, and terminating the web-based application includes performing the one of minimizing, moving to the background, and terminating the web-based application in response to receiving the user input. In some examples, the method includes transmitting an indication that the native application is not installed to the search system; where receiving the search from the search system includes receiving the search results such that the search results include the WAM in response to transmitting the indication.

The search results may further include link data associated with the AAM. The link data includes one or more of text and image data that describes the AAM, and where generating the user selectable link includes generating the user selectable link using the link data. The AAM specifies an application state of the native application. The native application performs the one or more operations indicated by the AAM sets the native application into the application state. The one or more of text and image data included in the link data describes the application state.

Another aspect of the disclosure provides a system that includes one or more computing devices configured to transmit a search query to a search system. The search system is configured to generate search results in response to a received search query. The one or more computing devices are also configured to receive search results from the search system in response to transmitting the search query. The search results include an application access mechanism (AAM) that references a native application and indicates one or more operations for the native application to perform. The search results further include an application download address that indicates a location at which the native application may be downloaded. The one or more computing devices configured to generate a user selectable link that includes the AAM and the application download address, and display the user selectable link. The one or more computing devices configured to receive a user selection of the user selectable link; and in response to receiving the user selection, download the native application using the application download address, install the native application, launch the native application, and cause the native application to perform the one or more operations.

Another aspect of the disclosure provides a non-transitory computer-readable storage medium including instructions that cause one or more computing devices to transmit a search query to a search system configured to generate search results in response to a received search query. The instruction also causes the one or more computing devices to receive search results from the search system in response to transmitting the search query. The search results include an application access mechanism (AAM) that references a native application and indicates one or more operations for the native application to perform. The search results further include an application download address that indicates a location at which the native application may be downloaded. The instructs also cause the one or more computing devices to generate a user selectable link that includes the AAM and the application download address, and display the user selectable link. Finally, the instruction also cause the one or more computing devices to receive a user selection of the user selectable link; and in response to receiving the user selection, download the native application using the application download address, install the native application, launch the native application, and cause the native application to perform the one or more operations.

The details of one or more implementations of the disclosure are set forth in the accompanying drawings and the description below. Other aspects, features, and advantages will be apparent from the description and drawings, and from the claims.
FIG. 1 is a schematic view of an example environment including a search system.
FIG. 2 is a schematic view of an example user device in communication with a search system.
FIG. 3A is a functional block diagram of an example search module.
FIGS. 3B-3C are schematic views of example function records.
FIG. 4A is a functional block diagram of another example search module.
FIGS. 4B-4C are schematic views of other example function records.
FIGS. 4D-4E are schematic views of example access tables.
FIG. 5 is a flow diagram of an example method for performing a search for function records based on a received search query.
FIG. 6 is a flow diagram of an example method describing operation of a user device.
FIGS. 7A-7B are schematic views of example graphical user interfaces (GUIs) that may be generated on a user device according to the present disclosure.
FIGS. 8A-8B are schematic views of example function records that include multiple native application access mechanisms.
FIG. 9 is a schematic view of an example function record that includes a web access mechanism.
FIG. 10 is a schematic view of an example function record that includes application download addresses.
FIG. 11 is a schematic view of an example function record that includes a quality score.
FIG. 12 is a schematic view of an example GUI that includes a variety of user selectable links.
FIGS. 13A-13B are schematic views of example function records that include concept fields.
FIGS. 14A-14C are schematic views of example function records that were generated from previously existing function records based on concepts included in the previously existing function records.
FIG. 15 is a functional block diagram of an example search system that generates new function records based on concepts included in previously existing function records.
FIG. 16 is a flow diagram of a method for generating new function records based on concepts included in previously existing function records.
FIG. 17 is a flow diagram of another example method describing operation of a user device.
FIGS. 18A-18D is a schematic view of other example GUIs that may be generated on a user device according to the present disclosure.
FIG. 19 is a flow diagram of another example method describing operation of a user device.
FIGS. 20A-20D are schematic views of other example GUIs that may be generated on a user device according to the present disclosure.
FIG. 21 is a flow diagram of an example method for operating a search system.

Like reference symbols in the various drawings indicate like elements.

A search system of the present disclosure receives a search query from a user device and generates search results in response to the received search query. The search system transmits the search results to the user device that generated the search query. The search results include a list of application access mechanisms (AAMs) that may be selected by a user. An AAM may be a string that includes a reference to a native application and indicates one or more operations for a user device to perform. In response to selection of an AAM on a user device, the user device may launch the native application referenced in the AAM and perform the one or more operations indicated in the AAM.

Native applications can perform a variety of different functions for a user. For example, a restaurant reservation application can make reservations for restaurants. As another example, an Internet media player application can stream media (e.g., a song or movie) from the Internet. In some examples, a single native application can perform more than one function. For example, a restaurant reservation application may also allow a user to retrieve information about a restaurant and read user reviews for the restaurant in addition to making reservations. As another example, an Internet media player application may also allow a user to perform searches for digital media, purchase digital media, and generate media playlists.

An AAM includes data that a user device can use to access functionality provided by a native application. For example, an AAM can include data that causes a user device to launch a native application and perform a function associated with the native application. Performance of a function according to the AAM may set the native application into a specified state. Accordingly, the process of launching a native application and performing a function according to an AAM may be referred to herein as launching the native application and setting the native application into a state that is specified by the AAM. In one example, an AAM for a restaurant reservation application can include data that causes a user device to launch the restaurant reservation application and make a reservation at a restaurant. In this example, the restaurant reservation application may be set in a state that displays reservation information to a user, such as a reservation time, a description of the restaurant, and user reviews. In another example, an AAM for an Internet media player application can include data that causes a user device to launch the Internet media player application and stream media from the Internet. In this example, the Internet media player application may be set in a state that displays information regarding the media (e.g., music) being streamed, such as a song, artist, or album name.

AAMs may have various different formats and content. The format and content of an AAM may depend on the native application with which the AAM is associated and the operations that are to be performed by the native application in response to selection of the AAM. For example, an AAM for an Internet music player application may differ from an AAM for a shopping application. An AAM for an Internet music player application may include references to musical artists, songs, and albums, for example. The AAM for the Internet music player application may also reference operations, such as randomizing a list of songs and playing a song or album. An AAM for a shopping application may include references to different products that are for sale. The AAM for the shopping application may also include references to one or more operations, such as adding products to a shopping cart and proceeding to a checkout.

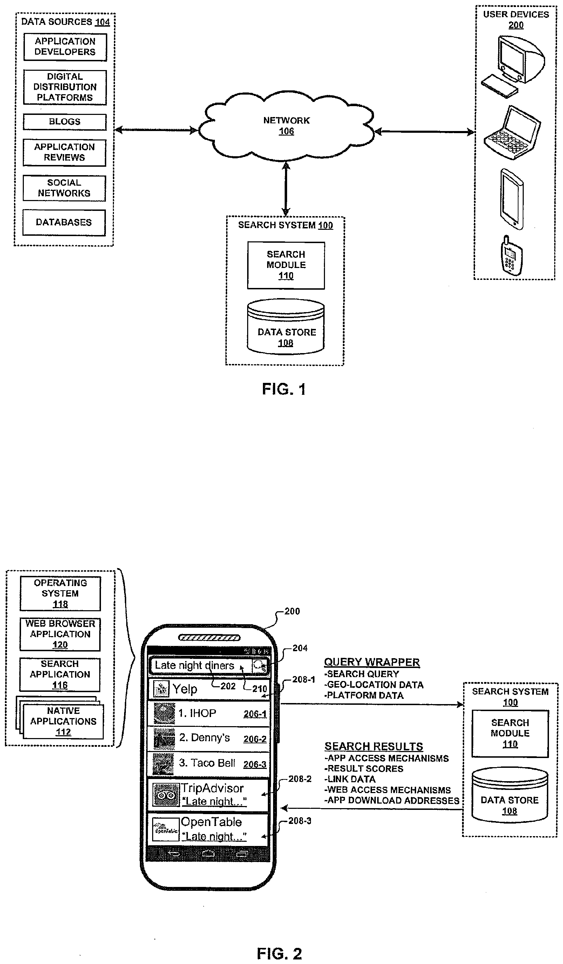

The search system transmits additional data in the search results along with the AAMs. For example, the search system may transmit data (e.g., text and/or images), which may be used by the user device to generate user selectable links (or "links") in the search results. A link may include text and/or images that a user may select (e.g., touch, or click on) via a user interface of the user device. Each user selectable link may be associated with an AAM such that when a user selects a link, the user device launches the native application referenced in the AAM and performs the one or more operations indicated in the AAM. The text and/or images of a link displayed to a user may indicate the operations that will be performed in response to selection of the link. For example, if the link is to a song in a music playing application, the text and/or images may identify the music playing application that will be launched by the user device and the song that will be played by the music playing application when the user selects the link. Example links are illustrated in FIGS. 2, 7A, 12, 18A, 18C, 20A, and 20C.

A user may select a link to cause the user device to launch the native application identified in the link and perform one or more operations according to the AAM associated with the link. Put another way, when a user selects a link, the user device launches a native application and sets the native application into a state defined by the AAM associated with the link. In general, a state of a native application may refer to the operations and/or the resulting outcome of the native application in response to selection of a link. A state of a native application may also be referred to herein as an "application state."

An application state specified by an AAM may depend on the functionality provided by the native application. For example, if a native application is configured to retrieve and display information from the Internet, the native application can be set into a state in which the native application retrieves information from the Internet and displays information to the user. In another example, if a native application is configured to play media from the Internet (e.g., music and/or video), the native application can be set into a state in which the native application is playing a song or a movie from the Internet. In another example, if a native application is configured to make restaurant reservations, the native application can be set into a state in which the native application displays available restaurant reservations to the user.

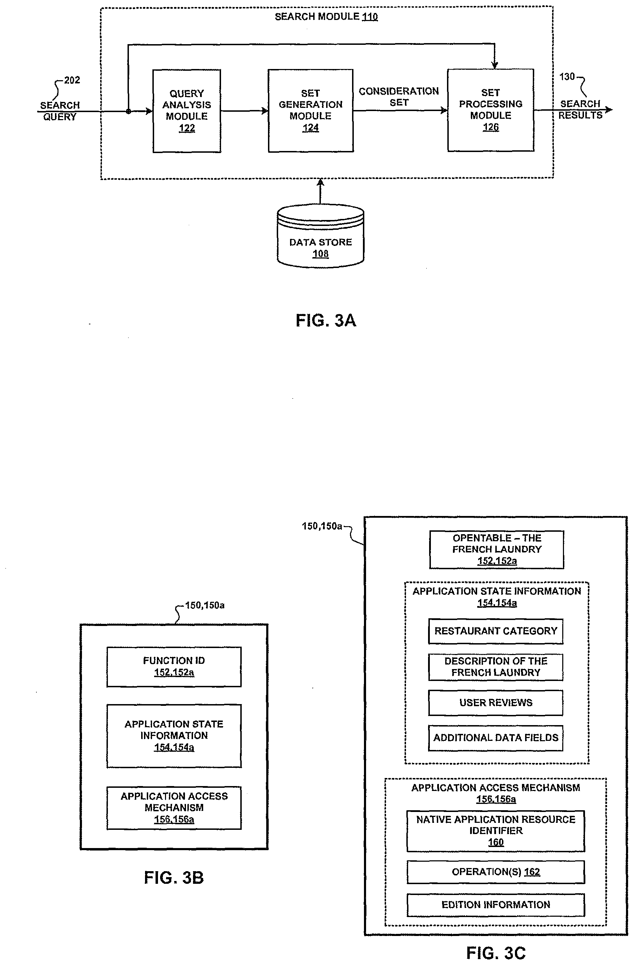

The search system includes a data store that the search system uses to generate the search results. The data store includes one or more different function records (e.g., the function record 150, 150a of FIG. 3B). Each function record may include data related to a function of a native application and/or the state of the native application resulting from performance of the function. As described herein, a function record may include a function identifier (ID), application state information (ASI), and an AAM.

An AAM included in a function record includes data that causes a user device to launch a native application and perform a function associated with the native application. For example, an AAM included in a function record may be a string that includes a reference to a native application and indicates one or more operations for a user device (e.g., the native application) to perform. An AAM may include an application resource identifier (ARI) and/or one or more operations for the user device to perform. An ARI may be a string having an application specific scheme in some examples. The ARI may include a reference to a native application and indicate one or more operations for the user device (e.g., the native application) to perform. For example, the ARI may include a reference to a native application, a domain name, and a path to be used by the application to retrieve and display information to the user.

In some examples, the AAM may include operations for the user device to perform in addition to the operation(s) indicated in the ARI. For example, a search application on the user device, an operating system (OS) of the user device, and/or a native application on the user device may perform the operations included in the AAM. In some examples, the operations may be included in a script. Examples of operations may include, but are not limited to, launching a native application, creating and sending a search request to an application server, setting a current geographic location in a native application, making a restaurant reservation, sending a text message, and adding an appointment to a calendar.

In some examples, an AAM may not include an ARI. Instead, the AAM can include one or more operations that reference a native application and indicate one or more operations for the user device to perform. The one or more operations may include instructions for at least one of the search application, the OS, and/or a native application on the user device. In response to selection of the AAM, the user device may perform the operations included in the AAM.

A function ID included in a function record may be a string that uniquely identifies the function record among the other function records in the data store. In some examples, the function ID may describe a function and/or an application state in human readable form. For example, the function ID may be a human readable string that describes a function performed according to the AAM and/or an application state resulting from performance of the function according to the AAM. In a more specific example, a function ID for an Internet music player application may include the name of the Internet music player application along with the name of the song that will be played when the Internet music player application is set into the state defined by the AAM included in the function record.

A function record includes ASI. The ASI includes data that describes an application state into which a native application is set according to the AAM in the function record. In some examples, the ASI may include data that describes the function performed according to the AAM included in the function record. The ASI can include text, numbers, and symbols that describe the application state. The types of data included in the ASI may depend on the type of information associated with the application state and the functionality specified by the AAM.

In some examples, the ASI may include data that may be presented to the user when the native application is in the application state defined by the AAM. For example, a function record associated with a shopping application may include ASI that describes products (e.g., names and prices) that are shown when the application is set into the application state defined by the AAM of the function record. As another example, a function record associated with a music player application may include ASI that describes a song (e.g., name and artist) that is played when the application is set into the application state defined by the AAM of the function record.

The ASI included in a function record may be generated in a variety of different ways. In one example, data to be included in the ASI may be retrieved via partnerships with database owners and developers of native applications. For example, the data may be automatically retrieved from online databases that include, but are not limited to, data related to movies, television programs, music, and restaurants. In some examples, some data included in the ASI may be manually generated by a human operator. The data included in the ASI may be updated over time so that the search system provides up-to-date results.

The search system generates search results including a list of AAMs that are included in selected function records. Initially, the search system analyzes the search query received from a user device. The search system then identifies a set of function records based on the received search query. For example, the search system may identify the set of function records based on one or more matches (e.g., text matches) between one or more terms of the search query and one or more terms of the ASI included in the identified function records.

The search system processes (e.g., scores) the identified set of function records. For example, the search system may determine how well the function records match the received search query. The search system may then select the AAMs from the function records that best match the received search query. The search system transmits search results including the selected AAMs to the user device that generated the search query. The search system may also transmit additional data along with the AAMs. For example, the search system may transmit data (e.g., text and/or images) to be included in user selectable links.

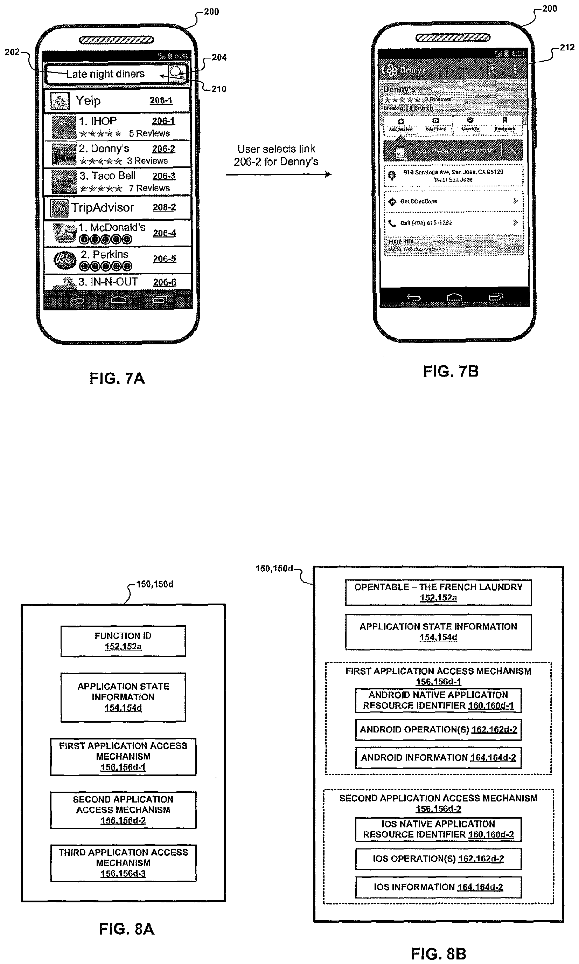

In some implementations, a function record (e.g., the function record 150d of FIG. 8A) may include multiple different AAMs. For example, the different AAMs may be associated with different editions of a native application. A native application edition (hereinafter, "application edition") refers to a particular implementation or variation of a native application. For example, an application edition may refer to a version of a native application, such as a version 1.0 of the application, or a version 2.0 of the application (e.g., a free version, or a paid version). In another example, an application edition may refer to an implementation of a native application for a specific platform, such as a specific OS.

The different AAMs included in the function record may cause the corresponding application editions to launch and perform similar functions. Accordingly, the different AAMs included in the function record may cause the corresponding application editions to be set into similar application states. In one example, if the different AAMs reference different editions of an information retrieval application, the different AAMs may cause the corresponding application editions to retrieve similar information. In another example, if the different AAMs reference different editions of an Internet music player application, the different AAMs may cause the corresponding application editions to play the same song.

In a specific example, a function record for a native application that retrieves restaurant information may include multiple different AAMs for multiple different application editions. Assuming the function record is associated with a specific Mexican restaurant, the AAMs for the different application editions may cause each application edition to retrieve information for the same specific Mexican restaurant. For example, a first AAM may cause a first application edition (e.g., on a first OS) to retrieve information for the specific Mexican restaurant. A second AAM may cause a second application edition (e.g., on a second OS) to retrieve information for the specific Mexican restaurant.

During some searches, the search system may identify one or more function records that include multiple AAMs. In these scenarios, the search system may process (e.g., score) the identified set of function records as described above. For each identified function record including multiple AAMs, the search system may select which of the AAMs to transmit to the user device. In some examples, the search system may transmit each AAM of the identified function record to the user device so that the user device may determine which AAM to use. In other examples, the search system may determine which of the multiple AAMs to transmit to the user device based on information included in a query wrapper received from the user device. For example, the search system may select and transmit one or more of the AAMs that are likely to be compatible with the user device, e.g., based on the OS version of the user device.

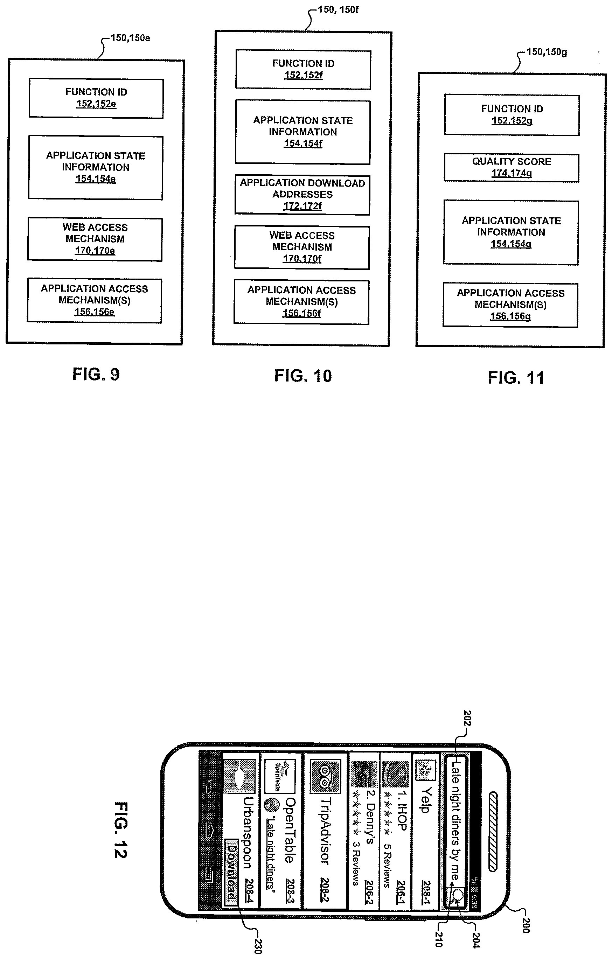

In some implementations, a function record 150 (e.g., the function record 150e of FIG. 9) may include a web access mechanism (WAM). The WAM may be a resource identifier that can be processed by a wide variety of user devices running different operating systems. In some examples, the WAM may include a uniform resource locator (URL) (i.e., a web address) used with the hypertext transfer protocol (HTTP). For example, the WAM may be a URL that is optimized for a desktop website (e.g., a so-called "full" site) or a mobile device website.

The WAM (e.g., a URL) included in a function record may be used by a web browser to access a web resource that includes similar information and/or performs similar functions as would be performed by a native application that receives an AAM of the function record. In one specific example, the WAM of a function record may direct the web browser of a user device to a web version of the native application referenced in the AAMs of the function record. For example, if the AAMs included in a function record for a specific Mexican restaurant cause each application edition to retrieve information for the specific Mexican restaurant, the WAM may direct the web browser of a user device to a web page entry for the specific Mexican restaurant.

During some searches, the search system may identify one or more function records that include AAMs and a WAM. In these scenarios, the search system may process (e.g., score) the identified set of function records in the manner described above. For each identified function record including AAMs and a WAM, the search system may determine whether to transmit the WAM and the AAMs. In some examples, the search system may transmit the WAM and each of the multiple AAMs to the user device so that the user device can determine which of the access mechanisms to use. In other examples, the search system may determine whether any of the AAMs should be transmitted to the user device. If the search system determines that none of the AAMs is likely to be compatible with the user device, the search system can refrain from sending the AAMs to the user device. Instead, the search system may transmit the WAM to the user device. As described above, the user device may use a web browser to access the web resource identified in the WAM.

In some implementations of the search system, a function record 150 (e.g., the function record 150g of FIG. 11) may include a quality score. The quality score may be a number used by the search system to generate a result score for a function record. For example, the quality score may be a record scoring feature input into one or more machine-learned models used to generate a result score, as described hereinafter.

The quality score may be determined based on metrics associated with a person, place, or thing described in the function record. For example, the quality score may be based on the popularity of a place described in the function record and/or ratings (e.g., user ratings) of the place described in the function record. In another example, if the function record describes a song, the quality score may be based on the popularity of the song described in the function record and/or ratings (e.g., user ratings) of the song described in the function record. The quality score may also be determined based on measurements associated with the function record. For example, the quality score may be determined based on data indicating how often the function record is retrieved during a search and how often access mechanisms (e.g., an AAM, a WAM, and/or an application download address (ADA)) of the function record are selected by a user.

FIG. 1 is a functional block diagram illustrating an example environment including a search system 100 that communicates with user devices 200 and data sources 104 via a network 106. FIG. 2 shows an example user device 200 in communication with the search system 100 via the network 106 (not shown in FIG. 2). The search system 100 is configured to receive a search query from a user device 200 and perform a search for function records included in a data store 108 based on the search query. The function records include AAMs 156 that can be used by a user device 200 to access different functions for a variety of native applications (e.g., the native applications 112 of FIG. 2) installed on the user device 200. The search system 100 transmits search results including a list of AAMs 156 to the user device 200 that generated the search query.

The user device 200 may generate user selectable links based on the received search results (e.g., the links 206-1, 206-2,..., 208-2, 208-3of FIG. 2). Each user selectable link displayed to the user may include an AAM 156. The user may select a link in the search results on the user device 200. In response to selection of a link, the user device 200 may launch the native application referenced by the AAM 156 and perform the one or more operations indicated in the AAM 156.

A software application may refer to computer software that causes a computing device to perform a task. In some examples, a software application may be referred to as an "application," an "app," or a "program." Example applications include, but are not limited to, word processing applications, spreadsheet applications, messaging applications, media streaming applications, social networking applications, and games.

Applications can be executed on a variety of different computing devices. For example, applications can be executed on mobile computing devices, such as smart phones, tablets, and wearable computing devices (e.g., headsets and/or watches). Applications can also be executed on other types of computing devices having other form factors, such as laptop computers, desktop computers, or other consumer electronic devices. In some examples, applications may be installed on a computing device prior to a user purchasing the device. In other examples, the user may download and install applications on the computing device.

The functionality of an application may be accessed on the computing device on which the application is installed. Additionally, or alternatively, the functionality of an application may be accessed via a remote computing device. In some examples, all of an application's functionality is included on the computing device on which the application is installed. These applications may function without communication with other computing devices (e.g., via the Internet). In other examples, an application installed on a computing device may access information from other remote computing devices during operation. For example, a weather application installed on a computing device may access the latest weather information via the Internet and display the accessed weather information to the user through the installed weather application. In still other examples, an application (e.g., a web based application) may be partially executed by the user's computing device and partially executed by a remote computing device. For example, a web application may be an application that is executed, at least in part, by a web server and accessed by a web browser of the user's computing device. Example web applications may include web-based email, online auctions, and online retail sites.

As described above, the search system 100 is configured to receive search queries from one or more user devices 200 via a network 106. A search query may include text, numbers, and/or symbols (e.g., punctuation) entered into the user device 200 by the user. For example, with reference to FIG. 2, the user may have entered a search query 202 into a search field (e.g., a search box) 210 of a search application 116 running on the user device 200. The user may have entered the search query 202 using a user interface such as, for example, a touchscreen keypad, a mechanical keypad, and/or via speech recognition. The user may have caused the user device 200 to transmit the search query 202 to the search system 100 by selecting (e.g., touching or clicking) a search button 204 of the search application 116. As described herein, in some examples, the search application 116 may be a native application dedicated to search, or a more general application, such as a web browser application.

In some examples, a user device 200 may transmit additional data along with the search query 202. The search query 202 and the additional data may be referred to as a query wrapper. The query wrapper may include data associated with the search query 202, such as geo-location data (e.g., the location of the user device 200), platform data (e.g., a version of an OS 118 of the user device 200 of FIG. 2, a device type, and a web-browser version), an identity of a user of the user device 200 (e.g., a username), partner specific data, and other data. The user device 200 transmits the query wrapper to the search system 100. The search system 100 can use the search query 202 and/or the additional data included in the query wrapper to generate the search results.

The search system 100 performs a search for function records included in the data store 108 in response to the received search query 202. The search system 100 generates search results that include a list of AAMs 156 selected from the function records identified during the search. In some examples, the search system 100 generates result scores for the selected AAMs 156. Each AAM 156 may be associated with a result score that indicates the rank of the AAM relative to the other AAMs 156 in the list of AAMs 156. The search system 100 may transmit the result scores to the user device 200 that generated the search query 202.

In some examples, the search system 100 may transmit additional data to the user device 200 along with the AAMs 156 and result scores. For example, the search system 100 may transmit link data (e.g., text and/or images). Link data can refer to data that is to be included in user selectable links on the user device 200. The user device 200 displays the user selectable links to the user. Each user selectable link may be associated with an AAM 156 included in the search results such that when a user selects a link, the user device 200 launches the native application referenced in the AAM 156 and sets the native application into the state specified by the AAM 156. A user may select a link by touching (e.g., tapping) or clicking on the link.

In some examples described herein, the search system 100 may transmit one or more WAMs to the user device 200 along with AAMs. WAMs may include web addresses that are accessible via a web browser application 120 of the user device 200, as shown in FIG. 2. In examples where the search system 100 transmits one or more WAMs, the search system 100 may transmit data (e.g., text and/or images) to be included in user selectable links associated with the WAMs. When a user selects a link associated with a WAM, the user device 200 may launch the web browser application 120 and perform the function indicated in the WAM. The generation of search results including WAMs is described herein with respect to FIG. 9.

FIG. 2 shows an example list of search results that may be displayed to a user on a user device 200. The search results include links 206-1,206-2,..., 208-3 (collectively, the "links 206, 208"). Each of the links 206, 208 includes link data. For example, each of the links 206, 208 includes an image (e.g., an application icon) and text (e.g., application name) that describe the native application and the application state (e.g., "IHOP," "Denny's," and "Taco Bell" entries in the native application "YELP®" by Yelp, Inc. (hereinafter, "Yelp")). Each of the links 206, 208 may be associated with an AAM 156 such that when the user selects a link, the user device 200 launches the native application and sets the native application into a state that is specified by the AAM 156 associated with the link. As described herein, the links 206, 208 may be arranged for the user based on result scores associated with the AAMs. In some examples, as illustrated in FIG. 2, links for the same native application (e.g., Yelp) may be combined together in the search results displayed to the user. For example, as shown in FIG. 2, the Yelp links 206-1, 206-2, and 206-3 are grouped together under a Yelp header 208-1. In other examples, links for different native applications may be mixed instead of grouped.

Referring back to FIG. 1, the search system 100 includes a data store 108 and a search module 110. The data store 108 includes one or more different function records, as described herein. Each function record may include data related to a function of a native application and/or the state of the native application resulting from performance of the function. A function record may include a function ID 152, ASI, and an AAM 156 used to access functionality provided by a native application. The data store 108 may include one or more databases, indices (e.g., inverted indices), tables, files, or other data structures, which may be used to implement the techniques of the present disclosure. The search module 110 receives a search query 202 and generates search results based on the data included in the data store 108.

As described above, the search system 100 may communicate with the user devices 200 and the data sources 104 via the network 106. Examples of the user devices 200, the data sources 104, and the network 106 are now described in turn with reference to FIGS. 1-2.

User devices 200 can be any computing devices that are capable of providing search queries to the search system 100. User devices 200 include, but are not limited to, smart phones, tablet computers, laptop computers, and desktop computers. User devices 200 may also include other computing devices having other form factors, such as computing devices included in vehicles, gaming devices, televisions, or other appliances (e.g., networked home automation devices and home appliances).

The user devices 200 may use a variety of different operating systems. In an example where a user device 200 is a mobile device, the user device 200 may run an OS including, but not limited to, ANDROID® developed by Google Inc., IOS® developed by Apple Inc., or WINDOWS PHONE® developed by Microsoft Corporation. Accordingly, the OS 118 running on the user device 200 of FIG. 2 may include one of ANDROID®, IOS®, or WINDOWS PHONE®. In an example where a user device 200 is a laptop or desktop computing device, the user device 200 may run an OS including, but not limited to, MICROSOFT WINDOWS® developed by Microsoft Corporation, MAC OS® developed by Apple Inc., or LINUX® (LINUX® is the registered trademark of Linus Torvalds in the U.S. and other countries). User devices 200 may also access the search system 100 while running operating systems 118 other than those operating systems 118 described above, whether presently available or developed in the future.

User devices 200 can communicate with the search system 100 via the network 106. In some examples, a user device 200 may communicate with the search system 100 using a native application installed on the user device 200 (e.g., the search application 116). In general, a user device 200 may communicate with the search system 100 using any application that can transmit search queries 202 to the search system 100. In some examples, a user device 200 may run an application that is dedicated to interfacing with the search system 100, such as an application dedicated to searches (e.g., the search application 116). In other examples, a user device 200 may communicate with the search system 100 using a more general application, such as a web-browser application. The application run by a user device 200 to communicate with the search system 100 may display a search field 210 on a graphical user interface (GUI) in which the user may enter search queries 202. The user may enter a search query 202 using a touchscreen or physical keyboard, a speech-to-text program, or other form of user input.

In general, a search query may be a request for information retrieval (e.g., search results) from the search system 100. For example, a search query may be directed to retrieving a list of links to native application functionality or application states in examples where the search system 100 is configured to generate a list of AAMs 156 as search results. A search query 202 directed to retrieving a list of links to native applications may indicate a user's desire to access functionality of one or more native applications described by the search query 202.

A user device 200 may receive a set of search results from the search system 100 that are responsive to the search query 202 transmitted to the search system 100. The user device 200 may run a search application 116 including a GUI that displays the search results received from the search system 100. For example, the search application 116 used to transmit the search query 202 to the search system 100 may also display the received search results to the user.

The GUI of the search application 116 running on the user device 200 may display the search results to the user in a variety of different ways, depending on what information is transmitted to the user device 200. In examples where the search results include a list of AAMs, the search system 100 may transmit the list of AAMs 156 to the user device 200 along with additional data to be displayed in user selectable links. In some examples, the GUI may display the search results to the user as a list of user selectable links including text and images. The text and images in the links may include the native application names associated with the AAMs, text describing the AAMs, images associated with the native application referenced by the AAMs 156 (e.g., application icons), and images associated with the application states (e.g., application screen images) defined by the AAMs.

In some examples, the GUI may display the search results as a list of links (e.g., the links 206, 208 of FIG. 2) arranged under the search field (e.g., the search field 210 of FIG. 2) in which the user entered the search query 202. The user device 200 may arrange the links in order by result scores associated with the links. In other words, the user device 200 may arrange the links in order by the result scores associated with the AAMs 156 included in the links. In some examples, the user device 200 may group together links that are related to the same native application.

In some examples, user devices 200 may communicate with the search system 100 via a partner computing system (not illustrated). The partner computing system may be a computing system of a third party that may leverage the search functionality of the search system 100. The partner computing system may belong to a company or organization other than that which operates the search system 100. Example third parties, which may leverage the functionality of the search system 100 may include, but are not limited to, Internet search providers and wireless communications service providers. The user devices 200 may send search queries 202 to the search system 100 and receive search results via the partner computing system. The partner computing system may provide a user interface to the user devices 200 in some examples and/or modify the search experience provided on the user devices 200.

FIG. 1 shows a plurality of data sources 104. The data sources 104 may be sources of data, which the search system 100 may use to generate and update the data store 108. For example, the search system 100 may use the data to update one or more databases, indices, tables, files, or other data structures included in the data store 108. The search system 100 may generate new function records and update existing function records based on data retrieved from the data sources 104. Although not illustrated in FIG. 1, the search system 100 may include modules that generate new function records and update existing function records based on the data retrieved from the data sources 104. In some examples, some data included in the data store 108 may be manually generated by a human operator.

The data sources 104 may include a variety of different data providers. The data sources 104 may include data from application developers, such as application developers' websites and data feeds provided by developers. The data sources 104 may include operators of digital distribution platforms configured to distribute applications to user devices 200. The data sources 104 may also include other websites, such as websites that include web logs (i.e., blogs), application review websites, or other websites including data related to applications. Additionally, the data sources 104 may include social networking sites, such as "FACEBOOK®" by Facebook, Inc. (e.g., Facebook posts) and "TWITTER®" by Twitter, Inc. (e.g., text from tweets). The data sources 104 may also include online databases that include, but are not limited to, data related to movies, television programs, music, and restaurants. The data sources 104 may also include additional types of data sources in addition to the data sources described above. Different data sources may have their own content and update rate.

The search system 100 retrieves data from one or more of the data sources 104. The data retrieved from the data sources 104 can include any type of data related to application functionality and/or states. The search system 100 generates function records based on the data retrieved from the data sources 104. In some examples, some data included in the function records (e.g., ASI) is manually generated by a human operator. The data included in the function records may be updated over time so that the search system 100 provides up-to-date results.

As described above, the user devices 200, the search system 100, and the data sources 104 may be in communication with one another via the network 106. The network 106 may include various types of networks, such as a wide area network (WAN) and/or the Internet. Although the network 106 may represent a long range network (e.g., Internet or WAN), in some implementations, the network 106 may include a shorter range network, such as a local area network (LAN). In some implementations, the network 106 uses standard communications technologies and/or protocols. Thus, the network 106 can include links using technologies, such as Ethernet, Wireless Fidelity (WiFi) (e.g., 802.11), worldwide interoperability for microwave access (WiMAX), 3G, Long Term Evolution (LTE), digital subscriber line (DSL), asynchronous transfer mode (ATM), InfiniBand, PCI Express Advanced Switching, etc. Similarly, the networking protocols used on the network 106 can include multiprotocol label switching (MPLS), the transmission control protocol/Internet protocol (TCP/IP), the User Datagram Protocol (UDP), HTTP, the simple mail transfer protocol (SMTP), the file transfer protocol (FTP), etc. The data exchanged over the network 106 can be represented using technologies and/or formats including the hypertext markup language (HTML), the extensible markup language (XML), etc. In addition, all or some of the links can be encrypted using conventional encryption technologies, such as secure sockets layer (SSL), transport layer security (TLS), virtual private networks (VPNs), Internet Protocol security (IPsec), etc. In other examples, the network 106 can use custom and/or dedicated data communications technologies instead of, or in addition to, the ones described above.

FIG. 3A shows an example search module 110, which may be included in the search system 100. The search module 110 includes a query analysis module 122, a consideration set generation module 124 (hereinafter, the "set generation module 124"), and a consideration set processing module 126 (hereinafter, the "set processing module 126"). The query analysis module 122 receives a query wrapper including a search query 202. The query analysis module 122 analyzes the received search query 202. The set generation module 124 identifies a set of function records based on the received search query 202. The identified set of function records may be referred to herein as a "consideration set." The set processing module 126 processes (e.g., scores) the consideration set to generate a set of search results 130 that include a list of AAMs 156 selected from the function records of the consideration set.

Referring now to FIG. 3B, an example function record 150, 150a includes a function ID 152, 152a, ASI 154, 154a, and a native AAM 156a (hereinafter, the "AAM 156a"). The function record 150, 150a may include data related to a function of a native application and/or the state of the native application resulting from performance of the function. The data store 108 may include a plurality of function records each having a similar structure as the function record 150, 150a. Put another way, the data store 108 may include a plurality of function records each having a function ID 152, 152a, ASI 154, 154a, and an AAM 156, 156a.

The function ID 152, 152a may be used to identify the function record 150, 150a among the other function records 150, 150a included in the data store 108. The function ID 152, 152a may be a string of alphabetic, numeric, and/or symbolic characters (e.g., punctuation marks) that uniquely identify the function record 150, 150a. In some examples, the function ID 152, 152a may describe a function and/or an application state in human readable form. For example, the function ID 152, 152a may include the name of the native application referenced in the AAM 156, 156a. Additionally, or alternatively, the function ID 152, 152a may be a human readable string that describes a function performed according to the AAM 156, 156a and/or an application state resulting from performance of the function according to the AAM 156, 156a. In some examples, the function ID 152, 152a may include a string in the format of a URL of a WAM for the function record 150, 150a, which may uniquely identify the function record, as described with respect to FIG. 9.

In a more specific example, if the function record 150, 150a describes a function of the native application Yelp, the function ID 152, 152a may include the name "Yelp" along with a description of the application state described in the ASI 154, 154a. For example, the function ID 152, 152a for a function record that describes the restaurant "The French Laundry®" (hereinafter, "The French Laundry") may be "Yelp - The French Laundry." In an example where the function ID 152, 152a includes a string in the format of a URL, the function ID 152, 152a may include the following string "www.yelp.com/biz/the-french-laundry-yountville-2?ob=1" to uniquely identify the function record 150, 150a.

The ASI 154, 154a may include data that describes an application state into which a native application is set according to the AAM 156, 156a included in the function record 150, 150a. Additionally, or alternatively, the ASI 154, 154a may include data that describes the function performed according to the AAM 156, 156a included in the function record 150, 150a. The ASI 154, 154a may include a variety of different types of data. For example, the ASI 154, 154a may include structured, semi-structured, and/or unstructured data. The ASI 154, 154a may be extracted or inferred from documents retrieved from the data sources 104. In some examples, the ASI 154, 154a may include data that is manually generated. The ASI 154, 154a may be updated so that up-to-date search results can be provided in response to a user search query 202.

In some examples, the ASI 154, 154a may include data that may be presented to the user when the native application is in the application state defined by the AAM 156, 156a. For example, the ASI 154, 154a may include data that describes a state of the native application after the user device 200 has performed the one or more operations indicated in the AAM 156, 156a. In one example, if the function record 150, 150a is associated with a shopping application, the ASI 154, 154a may include data that describes products (e.g., names and prices) that are shown when the shopping application is set to the application state defined by the AAM 156, 156a of the function record 150, 150a. As another example, if the function record 150, 150a is associated with a music player application, the ASI 154, 154a may include data that describes a song (e.g., name and artist) that is played when the music player application is set to the application state defined by the AAM 156, 156A of the function record 150, 150a.

The types of data included in the ASI 154, 154a may depend on the type of information associated with the application state and the functionality defined by the AAM 156, 156a. In one example, if the function record 150, 150a is for a native application that provides reviews of restaurants, the ASI 154, 154a may include information (e.g., text and numbers) related to a restaurant, such as a category of the restaurant, reviews of the restaurant, and a menu for the restaurant. In this example, the AAM 156, 156a may cause the native application to launch and retrieve information for the restaurant. As another example, if the function record 150, 150a is for a native application that plays music, the ASI 154, 154a may include information related to a song, such as the name of the song, the artist, lyrics, and listener reviews. In this example, the AAM 156, 156a may cause the native application to launch and play the song described in the ASI 154, 154a.

The AAM 156, 156a may include an ARI and/or one or more operations for a user device 200 to perform. For example, an ARI may be a string having an application specific scheme. The ARI may include a reference to a native application and indicate one or more operations for the user device 200 (e.g., the native application) to perform. For example, the ARI may include a reference to a native application, a domain name, and a path to be used by the native application to retrieve and display information to the user.

An example ARI for the native application "OPENTABLE®" by OpenTable, Inc. (hereinafter, "OpenTable") on the ANDROID® OS is "vnd.opentable.deeplink://opentable.com/restaurant/profile?rid=88333&refid=1." A portion of the example ARI references OpenTable. For example, the substring "vnd.opentable.deeplink" of the ARI references OpenTable. The example ARI also indicates one or more operations for OpenTable to perform. For example, OpenTable may retrieve and display the information included in the ARI domain and path defined by the substring "opentable.com/restaurant/profile?rid=88333&refid=1." In response to receiving the ARI, a user device 200 may launch OpenTable and display information retrieved from the location indicated in the ARI. The ARI may be provided by an app developer, for example.

In some examples, the AAM 156, 156a may include operations for the user device 200 to perform in addition to the operation(s) indicated in the ARI. For example, the search application 116 on the user device 200, the OS 118 of the user device 200, and/or a native application installed on the user device 200 may perform the operations included in the AAM 156, 156a in order to set the native application into an application state specified by the AAM 156, 156a. In some examples, the operations may be included in a script. Examples of operations may include, but are not limited to, launching a native application, waiting for the native application to start, creating and sending a search request to a server associated with the native application, setting a current geo-location in a native application, making a restaurant reservation, sending a text message, and adding an appointment to a calendar.

In some examples, the AAM 156a may not include an ARI. Instead, the AAM 156, 156a can include one or more other operations that reference a native application. The operations may be performed by the user device 200. The operations may include instructions for at least one of the search application 116, the OS 118, and a native application on the user device 200. In response to selection of the AAM 156, 156a, the user device 200 may perform the operations included in the AAM 156, 156a. In some examples, the operations may be included in a script.

The AAM 156, 156a may also include edition information 163 that indicates the native application edition with which the AAM 156, 156a is compatible. For example, the edition information 163 may indicate the OS with which the AAM 156, 156a is compatible. In some examples, the search system 100 can determine whether to transmit the AAM 156, 156a in the search results based on whether the user device 200 (e.g., the OS 118) can handle the AAM 156, 156a. As one example, the search system 100 may transmit the edition information 163 for the AAM 156, 156a to the user device 200. In the event the user device 200 does not include the native application edition (e.g., for a particular OS) with which the AAM 156, 156a is compatible, the user device 200 may not display a user selectable link for the AAM 156, 156a. In some examples, e.g., in instances where none of the AAM(s) of the function record 150, 150a is compatible with the user device 200 but where the function record 150, 150a also includes a WAM, the user device 200 may instead display a user selectable link for the WAM. In other examples, in cases where the user device 200 does not include the native application edition with which the AAM 156, 156a is compatible, the user device 200 may display a download and install user selectable link for the native application edition to the user. Upon the user selecting the link, the user device 200 may download and install the native application edition, launch the native application edition, and set the native application edition into an application state specified by the AAM 156.

In some examples, an ARI is an application specific resource identifier that is defined by the developer of the application. In this example, the search application 116 receives the ARI and the OS 118 may send the ARI to the native application referenced in the ARI. The native application referenced in the ARI launches and is set into the state specified by the ARI.

In some examples, a native application function may not be accessible using an ARI. For example, a function of the native application may not include a corresponding ARI that the application may use to perform the function. As another example, some native applications may not be configured to receive ARIs. In these examples, an AAM 156 for the native application can include one or more operations that cause the native application to perform the function that may not otherwise be accessible using an ARI. For example, the search application 116 may receive the one or more operations and execute the one or more operations to set the native application into the desired application state. In a specific example, the one or more operations may include launching the native application along with additional operations for the native application to perform. For example, the search application 116 may initially trigger the native application to start the application, and then wait for a period of time for the native application to start. Then the search application 116 may perform additional operations included in the received AAM 156, such as issuing a search instruction to the native application.

In still other examples, a native application may be configured to directly receive the operations transmitted by the search system 100. In these examples, the native application may be launched according to the AAM 156 and then the launched native application may directly perform the operations received from the search system 100.

A single native application can provide a variety of different functionalities. For example, a restaurant reservation application can access reviews for a variety of different restaurants and set up reservations at a variety of different restaurants. Similarly, a travel application can book hotels, book flights, and provide reviews for different travel destinations. The different functionalities associated with a single native application may be accessed using a plurality of different AAMs. For example, with respect to the restaurant reservation application, the data store 108 may include function records having different AAMs 156 for accessing different restaurant reviews and setting up reservations. Similarly, the data store 108 may include function records having different AAMs 156 for booking hotels, booking flights, and accessing reviews for different travel destinations.

The AAMs 156 for a single native application may vary in complexity. In some examples, the AAMs 156 may cause a native application to launch (e.g., the OS 118 may be instructed to launch the application) and then perform additional operations after launching, as described above. In other examples, the AAMs 156 may cause a native application to launch into a default state (e.g., a default homepage) without performing any additional operations. A function record including an AAM 156 that causes a native application to launch into a default state may be thought of as an access mechanism that is related to the native application, but not to any particular state, which may be accessed by the application. A function record including such an AAM 156 may include ASI 154 describing the native application, instead of any particular application state. For example, the ASI 154 may include the name of the developer of the application, the publisher of the application, a category (e.g., genre) of the application, a description of the application (e.g., a developer's description), and the price of the application. The ASI 154 may also include security or privacy data about the application, battery usage of the application, and bandwidth usage of the application. The ASI 154 may also include application statistics. Application statistics may refer to numerical data related to a native application. For example, application statistics may include, but are not limited to, a number of downloads, a download rate (e.g., downloads per month), a number of ratings, and a number of reviews.

FIG. 3C shows an example function record 150, 150a associated with the native application OpenTable. OpenTable is a restaurant-reservation application that allows users to search for restaurants and make restaurant reservations. OpenTable provides information about restaurants, including descriptions of restaurants and user reviews of the restaurants. The example function record 150a of FIG. 3C describes an application state of OpenTable in which OpenTable accesses information for the restaurant The French Laundry.

The function record 150a includes the function ID 152 "Opentable - The French Laundry" indicated at 152,152a, which may uniquely identify the function record 150a. In other examples, the function ID 152,152a could include a URL as a unique identifier for the function record 150a. For example, the function ID 152,152a may include the string "http://www.opentable.com/the-french-laundry" as a unique identifier for the function record 150a. Such a function ID 152 may be included in a WAM of a function record. In another example, the function ID 152,152a could be a string of characters, numbers, and/or symbols that are not in human readable form.

The function record 150a includes ASI 154,154a. The ASI 154,154a includes data fields for restaurant category of the French Laundry, description of the French Laundry, user reviews of the French Laundry, and additional data fields. The restaurant category field may include the text "French cuisine" and "contemporary," for example. The description field for The French Laundry may include text that describes The French Laundry. The user reviews field may include text of user reviews for The French Laundry. The additional data fields may include additional data for The French Laundry that may not specifically fit within the other defined fields, such as a menu for the restaurant, prices, and operating hours for the restaurant.

The function record 150a includes an AAM 156,156a. The AAM 156,156a may include a reference to the native application OpenTable along with one or more operations to be performed by a user device 200. For example, the AAM 156,156a may include a native ARI 160 and/or one or more operations 162 that cause the user device 200 to access the entry for The French Laundry in OpenTable. An example ARI 160 may be "vnd.opentable.deeplink://opentable.com/restaurant/profile?rid=1180&refid=1."

Referring back to FIG. 3A, the search query 202 received by the search module 110 is used to perform a search of the data store 108. The query analysis module 122 receives the search query 202. The query analysis module 122 may perform various analysis operations on the received search query 202. For example, analysis operations performed by the query analysis module 122 may include, but are not limited to, tokenization of the search query 202, filtering of the search query 202, stemming, synonymization, and stop word removal.

The set generation module 124 identifies a set of function records (i.e., the consideration set) based on the search query 202. In some examples, the set generation module 124 may identify the set of function records based on matches between terms of the search query 202 and terms in the function records. For example, the set generation module 124 may identify a set of function records in the data store 108 based on matches between tokens generated by the query analysis module 122 and words included in the function records, such as words included in the ASI 154 and/or function IDs 152 of the function records.

The set processing module 126 processes the consideration set to generate a set of search results 130 that includes a list of AAMs. In some examples, the set processing module 126 scores the functions records included in the consideration set. The scores associated with the function records may be referred to as "result scores." Accordingly, in some examples, each of the function records in the consideration set may have a corresponding result score. The set processing module 126 may then select function records from the consideration set based on the result scores associated with the function records. For example, the set processing module 126 may select the highest scoring function records of the consideration set.

The set processing module 126 selects AAMs 156 from the selected function records (e.g., the highest scoring function records). The set processing module 126 transmits the selected AAMs 156 to the user device 200 that generated the search query 202. The set processing module 126 may also transmit the result scores associated with the AAMs. For example, an AAM 156 may be associated with the result score of the function record from which the AAM 156 was selected.

The information conveyed by the search results 130 may depend on how the result scores are calculated by the set processing module 126. For example, the result scores may indicate the relevance of an application function or state to the search query 202, the popularity of an application function or state, or other properties of the application function or state, depending on what parameters the set processing module 126 uses to score the function records.

The set processing module 126 may generate result scores for function records in a variety of different ways. In some implementations, the set processing module 126 generates a result score for a function record based on one or more scoring features. The scoring features may be associated with the function record and/or the search query 202. A function record scoring feature (hereinafter, "record scoring feature") may be based on any data associated with a function record. For example, record scoring features may be based on any data included in the ASI 154 of the function record. Example record scoring features may be a quality score, whether the function record includes an AAM 156 that leads to a default state or a deeper native application state, and, for newly generated function records, the number of function records used to generate the newly generated function record, as described hereinafter. A query scoring feature may include any data associated with the search query 202. For example, query scoring features may include, but are not limited to, a number of words in the search query 202, the popularity of the search query 202, and the expected frequency of the words in the search query 202. A record-query scoring feature may include any data, which may be generated based on data associated with both the function record and the search query 202 that resulted in identification of the function record by the set generation module 124. For example, record-query scoring features may include, but are not limited to, parameters that indicate how well the terms of the search query 202 match the terms of the ASI 154 of the identified function record. The set processing module 126 may generate a result score for a function record based on at least one of the record scoring features, the query scoring features, and the record-query scoring features.

The set processing module 126 may determine a result score based on one or more of the scoring features listed herein and/or additional scoring features not explicitly listed. In some examples, the set processing module 126 may include one or more machine-learned models (e.g., a supervised learning model) configured to receive one or more scoring features. The one or more machine-learned models may generate result scores based on at least one of the record scoring features, the query scoring features, and the record-query scoring features. For example, the set processing module 126 may pair the search query 202 with each function record and calculate a vector of features for each (query, record) pair. The vector of features may include one or more record scoring features, one or more query scoring features, and one or more record-query scoring features. The set processing module 126 may then input the vector of features into a machine-learned regression model to calculate a result score for the function record. In some examples, the machine-learned regression model may include a set of decision trees (e.g., gradient boosted decision trees). In another example, the machine-learned regression model may include a logistic probability formula. In some examples, the machine-learned task described above can be framed as a semi-supervised learning task, where a minority of the training data is labeled with human curated scores and the rest of the data is used without human labels.

The result scores associated with the AAMs 156 may be used in a variety of different ways. In some examples, the result scores associates with AAMs 156 may be used to rank the list of AAMs. In these examples, a higher result score may indicate that the AAM 156 (e.g., the function or application state) is more relevant to a user than an AAM 156 having a smaller result score. In examples where the search results 130 are displayed as a list on a user device 200, the links for AAMs 156 associated with larger result scores may be listed closer to the top of the results list (e.g., near to the top of the screen). In these examples, links for AAMs 156 having lower result scores may be located farther down the list (e.g., off screen) and may be accessed by scrolling down the screen of the user device 200. In some examples, as illustrated in FIG. 2, the user device 200 may group together the links associated with the same native application.

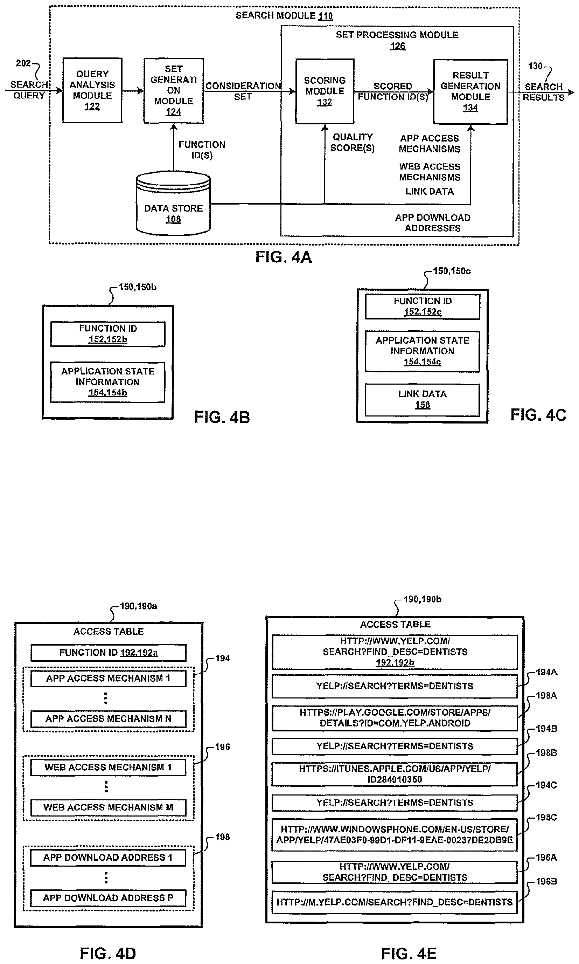

FIG. 4A is a functional block diagram of another example of the search module 110 described above with reference to FIG. 3A. Like the search module 110 of FIG. 3A, the search module 110 of FIG. 4A also includes the query analysis module 122, the set generation module 124, and the set processing module 126. In the example of FIG. 4A, the query analysis module 122 receives a query wrapper that includes a search query 202 from one of the user device(s) 200 and analyzes the received search query 202. Also in this example, the set generation module 124 identifies a consideration set of one or more function records (e.g., the function record 150B or 150C of FIGS. 4B-4C) included in the data store 108 based on the received search query 202. For example, the set generation module 124 may identify the function records of the consideration set based on matches between terms of function IDs 152 and/or ASI 154 included in the function records and terms of the received search query 202. In the example of FIG. 4A, the set generation module 124 retrieves one or more function IDs 152 that correspond to the identified function records of the consideration set from the data store 108. In this example, the consideration set includes the function ID(s) 152 of the identified function records, rather than the function records themselves. In other examples, the set generation module 124 may retrieve the function records of the consideration set from the data store 108 in their entirety. In these examples, the consideration set may include the function records. In any case, as described in greater detail below, the set processing module 126 processes (e.g., scores) the consideration set to generate search results 130 that include one or more access mechanisms (e.g., AAMs, WAMs, and ADAs) selected from the function records of the consideration set.

As shown in FIG. 4A, the set processing module 126 includes a scoring module 132 and a result generation module 134. In the example of FIG. 4A, the scoring module 132 receives the consideration set from the set generation module 124. In this example, the scoring module 132 receives the function ID(s) 152 that correspond to the function records of the consideration set from the set generation module 124. In other examples, the scoring module 132 may receive the function records of the consideration set in their entirety, as described above. Also in this example, the scoring module 132 receives one or more quality scores associated with the function records of the consideration set. Specifically, as shown in FIG. 4A, the scoring module 132 retrieves the quality scores from the data store 108. In some examples, the quality scores may be included in the function records of the consideration set. In other examples, the quality scores may be stored in other data structures included in the data store 108. The scoring module 132 scores the function records of the consideration set using the quality scores in the manner described above with reference to FIG. 3A. As shown in FIG. 4A, upon scoring the function records of the consideration set, the scoring module 132 generates one or more scored function IDs 152 that correspond to the scored function records and transmits the scored function ID(s) 152 to the result generation module 134, which is described in greater detail below.

As also shown in FIG. 4A, the result generation module 134 receives the scored function ID(s) 152 that correspond to the scored function records of the consideration set from the scoring module 132. The result generation module 134 then generates the search results 130 that include the access mechanisms (e.g., AAMs, WAMs, and ADAs) selected from the scored function records. As one example, the result generation module 134 may identify the scored function records in the data store 108 using the received scored function ID(s) 152. The result generation module 134 may then select one or more access mechanisms from the identified scored function records and transmit some or all of the access mechanisms as the search results 130 to the user device 200. As another example, the result generation module 134 may identify one or more access tables (e.g., the access table 190a of FIG. 4D) in the data store 108, or in another data store, using the received scored function ID(s) 152. The result generation module 134 may then select one or more access mechanisms from the identified access tables and transmit some or all of the access mechanisms as the search results 130 to the user device 200. The result generation module 134 may also retrieve link data associated with the access mechanisms and transmit the link data to the user device 200 along with the search results 130. For example, the link data may be stored in the scored function records, or in other data structures included in the data store 108, or in another data store. The user device 200 may use the link data to generate one or more user selectable links for the access mechanisms.

FIGS. 4B-4C illustrate other example function records 150B and 150C that may be included in the data store 108 of the search system 100. Specifically, the search module 110 of FIG. 4A may use the function records 150B and 150C to generate the search results 130 in response to receiving the search query 202 from the user device 200, as described above with reference to FIG. 4A. As shown in FIG. 4B, the function record 150b includes a function ID 152, 152b and ASI 154, 154b. As shown in FIG. 4C, the function record 150C includes a function ID 152, 152c, ASI 154, 154c, and link data 158. The function records 150b and 150c include data that is similar to that of the function record 150, 150a described above with respect to FIG. 3B. In contrast to the function record 150, 150a, the function records 150b and 150c do not include access mechanisms (e.g., AAMs, WAMs, or ADAs). Instead, the access mechanisms that correspond the function records 150B and 150C are included in access tables (e.g., the access table 190), which are described below with respect to FIGS. 4D-4E.

Referring again to FIG. 4A, the set generation module 124 may identify the consideration set based on the received search query 202 such that the consideration set includes one of the function records 150B and 150C. For example, the set generation module 124 may identify the function record 150B or 150C based on matches between terms of the function ID 152, 152b or 152, 152c and/or ASI 154, 154b or 154, 154c and terms of the received search query 202, as described above. As explained below with reference to FIGS. 4D-4E, the set processing module 126 processes (e.g., scores) the consideration set including the function record 150B or 150C and generates the search results 130 that include one or more access mechanisms (e.g., AAMs, WAMs, and ADAs) selected from one or more access tables (e.g., the access table 190a of FIG. 4D) that are associated with the function record 150B or 150C.

FIGS. 4D-4E illustrate example access tables 190,190a, 190b that may be included in the data store 108 of the search system 100. Specifically, the search module 110 of FIG. 4A may use each of the access tables 190,190a, 190b along with a function record 150 (e.g., the function record 150b or 150c) associated with the respective access table to generate search results 130 in response to receiving a search query 202, as described above with reference to FIGS. 4A-4C.

As explained herein, the data store 108 may include one or more databases, indices (e.g., inverted indices), tables, files, or other data structures, which may be used to implement the disclosed techniques. In some examples, the data store 108 may also include one or more access tables that each include one or more different access mechanisms (e.g., one or more AAMs, WAMs, and ADAs). For example, the access table 190a of FIG. 4D includes a function ID 192,192a, AAMs 1-N 194, WAMs 1-M 196, and ADAs 1-P 198, where N, M, and P each represent an integer value that is greater than or equal to 1. The function ID 192,192a may serve as a unique identifier for the access table 190 and associate the access table 190 with a function record included in the data store 108 and having the same function ID 152. In this example, in response to receiving a search query 202 from a user device 200, the search system 100 may identify and score a consideration set of one or more function records, as described above. The consideration set may include a function record that has the function ID 192,192a. The search system 100 may identify the access table 190 using the function ID 192,192a of the identified function record and select one or more access mechanisms (e.g., AAM(s), WAM(s), and/or ADAs) from the access table 190. The search system 100 may transmit the access mechanisms to the user device 200.

The access table 190b of FIG. 4E represents a specific example of the access table 190 of FIG. 4D for a function record having a function ID 192,192b "http://www.yelp.com/search?find_desc=dentists." As shown in FIG. 4E, the access table 190b includes multiple AAMs 194A-194C, multiple WAMs 196A-196B, and multiple ADAs 198A-198C. In the example of FIG. 4E, the AAMs 194A-194C correspond to AAMs 156 for the ANDROID® OS, the IOS® OS, and the WINDOWS PHONE® OS, respectively. Also in this example, the WAMs 196A-196B correspond to WAMs for the desktop and mobile web-based application versions of Yelp, respectively. Additionally, the ADAs 198A-198C shown in FIG. 4D correspond to ADAs for the native application versions of Yelp provided by the GOOGLE PLAY®, ITUNES®, and WINDOWS PHONE® digital distribution platforms, respectively.

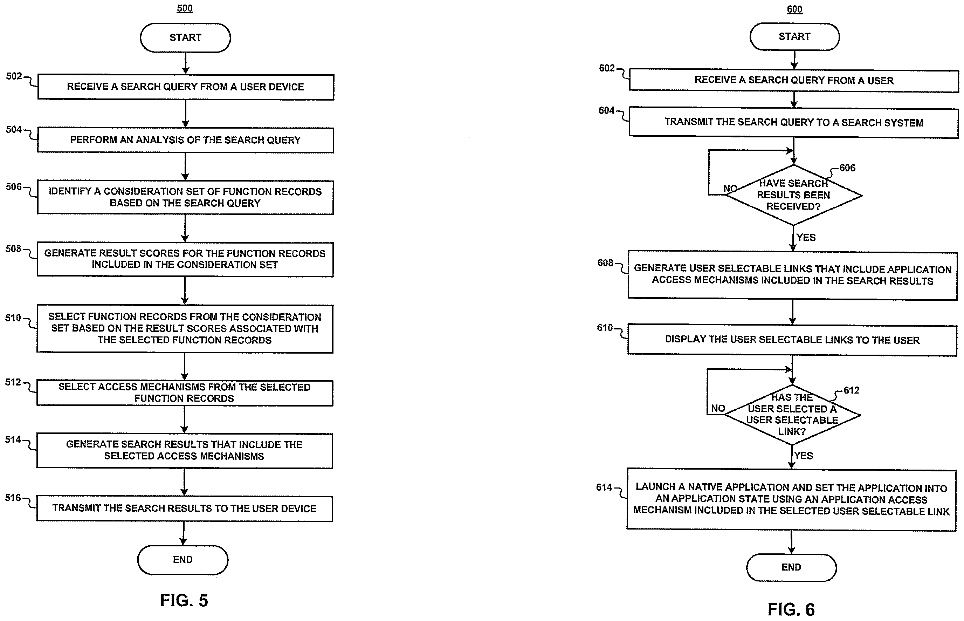

FIG. 5 shows an example method 500 for performing a search for function records (e.g., any of the function records 150, 150a-150g described with reference to FIGS. 3B, 4B, 4C, 8A, and 9-11) based on a search query 202 received from a user device 200. The method 500 is described with reference to the search module 110 of FIGS. 3A and 4A and the various components thereof. In block 502, the query analysis module 122 receives a search query 202 from (e.g., generated by) a user device 200. For example, a user of the user device 200 may have entered the search query 202 into a GUI of a search application 116 included on the user device 200. The user may have then caused the user device 200 to transmit the search query 202 to the query analysis module 122 by interacting with the GUI. In block 504, the query analysis module 122 performs an analysis of the search query 202. For example, the query analysis module 122 may perform one or more of tokenization, filtering, stemming, synonymization, and stop word removal with respect to the search query 202.

In block 506, the set generation module 124 identifies a consideration set of one or more function records included in the data store 108 based on the search query 202 (e.g., based on an output of the query analysis module 122). In blocks 508-510, the set processing module 126 processes the consideration set of function records. Specifically, in block 508, the set processing module 126 generates one or more result scores for the function records included in the consideration set. For example, the set processing module 126 may generate a result score for each function record included in the consideration set. In block 510, the set processing module 126 selects one or more function records from the consideration set based on the result scores associated with the selected function records. For example, the set processing module 126 may select one or more function records having the highest (e.g., largest) result scores.

In block 512, the set processing module 126 selects one or more AMs from the selected function records. For example, the set processing module 126 may select one or more AAMs, WAMs, and/or ADAs from each of the selected function records. In block 514, the set processing module 126 generates search results 130 that include the selected AMs. For example, the set processing module 126 may generate the search results 130 such that the search results 130 include one or more of the AMs selected from each selected function record. In block 516, the set processing module 126 transmits the search results 130 to the user device 200 that generated the search query 202.

FIG. 6 shows an example method 600 describing operation of one of the user devices 200. It may be assumed that the user device 200 described according to the method 600 includes a search application 116 (e.g., a native application, or web browser implementation) that is configured to communicate with the search system 100. It may also be assumed that the search application 116 running on the user device 200 generates a GUI that receives search queries 202 from users of the user device 200, and displays search results 130 received by the user device 200 from the search system 100 in response to the user device 200 transmitting the search queries 202 to the search system 100. The method 600 is described with reference to the search system 100 and one of the user devices 200 of FIGS. 1-2, and the various components thereof.

In block 602, the search application 116 receives a search query 202 from a user of the user device 200. For example, the user may have entered the search query 202 into the GUI (e.g., into a search field of the GUI) of the search application 116. In block 604, the user device 200 transmits the search query 202 to the search system 100. For example, the user may have caused the user device 200 to transmit the search query 202 to the search system 100 by selecting (e.g., touching, or clicking on) a search button included in the GUI. In block 606, the user device 200 waits to receive search results 130 that are responsive to the search query 202 from the search system 100. The method 600 continues in block 608 when the user device 200 receives the search results 130 from the search system 100 in response to transmitting the search query 202 to the search system 100. As described herein, the search results 130 received by the user device 200 from the search system 100 may include one or more AAMs 156 that each reference a native application and indicate one or more operations for the application to perform. In some examples, the search results 130 may further include one or more WAMs and/or ADAs. The search results 130 may also include one or more result scores associated with the AAMs, as also described herein. Additionally, the search results 130 may include link data (e.g., text and/or images) for each of the AAMs, as further described herein. As described below, the search application 116 may generate one or more user selectable links for the AAMs 156 included in the search results 130 using the received link data, and display the links to the user within the GUI (e.g., by arranging the links within a list using the corresponding received results scores).

Accordingly, in block 608, the search application 116 generates one or more user selectable links that include the AAMs 156 included in the search results 130 (e.g., using link data received from the search system 100 as part of the search results 130). For example, the search application 116 may generate one user selectable link for each AAM 156 included in the search results 130. In block, 610, the search application 116 displays the user selectable links to the user. For example, the search application 116 may arrange the user selectable links within a list (e.g., using result scores received from the search system 100 as part of the search results 130), and display the list within the GUI of the search application 116. In block 612, the search application 116 waits for the user to select one of the user selectable links displayed to the user via the GUI. The method 600 continues in block 614 when the user selects (e.g., touches, or clicks on) one of the user selectable links. In block 614, in response to the user selecting one of the user selectable links, the user device 200 launches the native application referenced by the AAM 156 included in the selected user selectable link on the user device 200, and sets the launched application into an application state specified by the AAM 156 using the AAM 156. For example, to set the native application into the application state, the user device 200 may cause the application to perform the one or more operations indicated by the AAM 156.

FIGS. 7A-7B illustrate an example of a search application on a user device 200. In FIG. 7A, a user has entered a search query 202 into a GUI of the search application. Specifically, the user has entered the search query "Late night diners" into a search field (e.g., a search bar) 210 of the GUI. The user can select (e.g., touch or click) a search button 204 of the GUI to transmit a query wrapper including the search query 202 to the search system 100.

The search system 100 receives the query wrapper and identifies one or more function records based on the search query 202 included in the query wrapper. The search system 100 processes the identified function records and selects AAMs 156 from the identified function records. In the example of FIG. 7A, the search system 100 identified function records that represent application states in the native application Yelp and the native application "TRIPADVISOR®" by TripAdvisor, LLC (hereinafter, "TripAdvisor"). For example, the search system 100 identified function records that correspond to the entries in Yelp for "IHOP," "Denny's," and "Taco Bell." The search system 100 also identified function records that correspond to the entries in TripAdvisor for "McDonald's," "Perkins," and "In-N-Out." Although only links for Yelp and TripAdvisor are visible in the GUI in FIG. 7A, the search system 100 may have identified additional function records for Yelp, TripAdvisor, and additional native applications that are not illustrated in FIG. 7A. Furthermore, the search system 100 may have transmitted additional AAMs 156 to the user device 200 that are not shown in the GUI of FIG. 7A.

The search results transmitted to the user device 200 include AAMs 156 for the application functions/states indicated in the links 206-1, 206-2,..., 206-6 (collectively, the "links 206"). The search results also include link data (e.g., text and images) associated with each of the AAMs. For example, the "IHOP" link 206-1 includes the text "IHOP" and an image of pancakes. A user may select (e.g., touch or click) the links 206 to access the application function/state indicated in the links 206. For example, a user may select the area of the GUI including the "IHOP" link 206-1 in order to access the entry in Yelp for "IHOP." In FIG. 7A, the links 206 are grouped together according to the native applications associated with the links 206. For example, the Yelp links 206-1,206-2, and 206-3 and the TripAdvisor links 206-4, 206-5, and 206-6 are grouped together under Yelp and TripAdvisor headers 208-1, 208-2, respectively. In other examples, links for different native applications may be mixed instead of grouped.

In the example of FIG. 7A, the user selects the "Denny's" link 206-2. In response to selection of the "Denny's" link 206-2, the user device 200 launches Yelp and performs one or more operations according to the AAM 156 associated with the "Denny's" link 206-2. In the example of FIG. 7A, the AAM 156 associated with the "Denny's" link 206-2 may reference Yelp and indicate a path for Yelp to find information for the "DENNY'S®" restaurant listed in the link. For example, an ARI may reference Yelp and indicate one or more operations for Yelp to perform, such as retrieving data from the path included in the ARI. Accordingly, the ARI of the AAM 156 may cause Yelp to perform the function of retrieving and displaying information for the "DENNY'S®" restaurant. An example ARI for Yelp may include the string "yelp:///biz/dennys-sunnyvale." FIG. 7B shows an example GUI 212 of Yelp after the user has selected the "Denny's" link 206-2. In FIG. 7B, Yelp is set into a state in which Yelp is displaying retrieved information about the "DENNY'S®" restaurant.

FIG. 8A shows an example function record 150,150d including multiple different AAMs. The function record 150,150d includes a function ID 152, 152d and ASI 154, 154d, as described above. The function record 150,150d includes a first AAM 156, 156d-1, a second AAM 156d-2, and a third AAM 156d-3 (collectively, the "AAMs 156d").

The different AAMs 156d included in the function record 150,150d may be associated with different editions of a native application. For example, the first, second, and third AAMs 156d may be associated with first, second, and third editions of a native application, respectively. The different AAMs 156d in the function record 150,150d may be associated with different operating systems 118 and/or different versions of a native application. In a specific example, the AAMs 156d may be associated with different operating systems. For example, the AAMs 156d may each include an ARI that is specific to a different OS, such as ANDROID®, IOS®, or WINDOWS PHONE®. More specifically, an ARI for a first edition of a native application that runs on a first OS may be different than an ARI for a second edition of the native application that runs on a second OS. As another example, the ARIs of the AAMs 156d may be different for native application editions that are different versions, but run on the same OS. The operations included in the AAMs 156d may also be specific to different operating systems 118 and/or versions.

In some examples, the different AAMs 156d in the function record 150,150d may be associated with different versions of a native application for the same OS. For example, the AAMs 156d may each be associated with a different version of a native application for the ANDROID® OS. Different versions may include a version 1.0 of a native application and a later released version 2.0 of the native application. In another example, different versions of a native application may be versions of the native application designed for different devices. For example, a first version of a native application may be designed for a smart phone. A second version of the native application may be designed for a tablet computing device having a different set of specifications (e.g., screen size and resolution) than the smart phone for which the first version of the native application was designed.

As described with respect to FIG. 3B, an AAM 156 may include edition information that indicates the native application edition with which the AAM 156 is associated. In this context, the first AAM 156d-1 may include an ARI and/or one or more operations that are compatible with a specific native application edition. The first AAM 156d-1 may also include edition information that indicates the specific native application edition with which the ARI and/or the operations are compatible. The second and third AAMs 156d-2, 156d-3 may also include edition information that indicates the specific native application editions with which the second and third AAMs 156d-2, 156d-3 are associated.

The different AAMs 156, 156d included in the function record 150,150d may cause the corresponding native application editions to launch and perform similar functions so that the application editions are set into similar application states. For example, the different AAMs 156, 156d included in the function record 150,150d may cause the corresponding native application editions to be set into the application state described by the function record 150,150d (e.g., the ASI 154, 154d). Accordingly, although the ARIs and/or the operations included in the AAMs 156, 156d may be different, the different AAMs 156, 156d may cause the different native application editions to be set into similar application states. In one example, if the different AAMs 156, 156d reference different editions of an Internet music player application, the different AAMs 156, 156d may cause the different application editions to play the same song. In another example, if the different AAMs 156, 156d reference different editions of a restaurant reservation application, the different AAMs 156, 156d may cause the different editions to retrieve reservation information for the same restaurant.

FIG. 8B shows a specific example of a function record 150, 150d for an entry for The French Laundry in OpenTable. The function record 150, 150d includes a function ID 152,152a "Opentable - The French Laundry." The function record 150, 150d also includes ASI 154,154d that may include information that is similar to that described above with respect to FIG. 3C.

The function record 150, 150d includes two AAMs 156d-1, 156d-2. The first AAM 156d-1 is associated with an edition of OpenTable that runs on the ANDROID® OS. Accordingly, edition (i.e., ANDROID®) information 164d-1 included in the function record 150, 150d may indicate that ANDROID® operations 162d-1 and ANDROID® native ARI 160d-1 also included in the function record 150, 150d are compatible with the ANDROID® OS. Furthermore, the edition information 164d-1 may specify one or more specific versions of the ANDROID® OS and one or more versions of the OpenTable application with which the ARI 160d-1 and the operations 162d-1 are compatible. The second AAM 156d-2 is associated with an edition of OpenTable that runs on the IOS® OS. Accordingly, edition (i.e., IOS) information 164d-2 included in the function record 150, 150d may indicate that IOS® operations 162d-2 and IOS® native ARI 160d-2 also included in the function record 150, 150d are compatible with the IOS® OS. Furthermore, the edition information 164d-2 may specify one or more specific versions of the IOS® OS and one or more versions of the OpenTable application with which the ARI 160d-2 and the operations 162d-2 are compatible.

During a search for function records, the search system 100 (e.g., the set generation module 124) may identify one or more function records that include multiple AAMs, as described above. In these scenarios, the set processing module 126 may process (e.g., score) the identified set of function records in the manner described above. For example, the set processing module 126 may select function records from the consideration set based on the result scores associated with function records.

As described above, the set processing module 126 selects AAMs 156 from the selected function records (e.g., the highest scoring function records) and transmits the selected AAMs 156 to the user device 200 that generated the search query 202. In some implementations of the search system 100, the set processing module 126 may transmit each of the multiple AAMs 156 of a function record to the user device 200 so that the user device 200 can determine which AAM 156 to use. For example, assuming the function record 150, 150d of FIG. 8B was selected by the set processing module 126, the set processing module 126 may transmit both the first and second AAMs 156d-1, 156d-2 to the user device 200. In this example, the user device 200 may determine which of the AAMs 156d-1, 156d-2 to use. If the user device 200 is running an ANDROID® OS, the user device 200 could select the first AAM 156d-1. Alternatively, if the user device 200 is running an IOS® OS, the user device 200 could select the second AAM 156d-2. In other examples where the AAMs 156d-1, 156d-2 reference different versions, or revisions, of OpenTable for the same OS (e.g., ANDROID®), the user device 200 may select the one of the AAMs 156d-1, 156d-2 that is compatible with the version of OpenTable that is installed on the user device 200.

In some implementations of the search system 100, the set processing module 126 determines which of multiple AAMs 156 of a function record to transmit to the user device 200. The set processing module 126 may determine which of the AAMs 156 to transmit using information included in the query wrapper received from the user device 200. For example, the set processing module 126 may select and transmit one or more of the AAMs 156 that are likely to be compatible with the user device 200. In cases where the function record 150, 150d of FIG. 8B is selected by the set processing module 126 and the set processing module 126 determines that the user device 200 is running the ANDROID® OS, the set processing module 126 may select the first AAM 156d-1 to transmit to the user device 200. In this scenario, the set processing module 126 may refrain from transmitting the second AAM 156d-2 associated with the IOS® OS to the user device 200. In other examples where the AAMs 156d-1, 156d-2 reference different versions, or revisions, of OpenTable for the same OS, the user device 200 may transmit an indication of a version, or revision, of each of one or more native applications that are installed on the user device 200, including that of OpenTable, to the search system 100 (e.g., as part of the query wrapper). In these examples, the search system 100 may select the one of the AAMs 156d-1, 156d-2 that is compatible with the version of OpenTable that is installed on the user device 200 using the indication, and transmit the one of the AAMs 156d-1, 156d-2 to the user device 200.

FIG. 9 shows an example function record 150, 150e that includes a WAM 170, 170e. The function record 150, 150e also includes a function ID 152, 152e, ASI 154, 154e, and one or more AAMs 156,156e, as described above. The WAM 170, 170e may be used by a wide variety of user devices 200 running different operating systems. In some examples, the WAM 170, 170e includes a web resource identifier, such as a URL (i.e., a web address) used with HTTP.

The WAM 170, 170e (e.g., a URL) included in the function record 150, 150e may be used by a web browser application to access a web resource that includes similar information and/or performs similar functions as would be performed by a native application that receives the AAM(s) 156, 156e of the function record 150, 150e. In one example, the WAM 170, 170e may direct a web browser to a web version of the native application referenced in the AAM(s) 156,156e. If the function record 150, 150e is for a specific Mexican restaurant in Yelp, the AAM(s) 156,156e may include a reference to Yelp and one or more operations that access an entry for the specific Mexican restaurant in Yelp. In this example, the WAM 170, 170e may include a web address that a web browser may use to access the entry for the specific Mexican restaurant on a Yelp web page.

During a search for function records, the search system 100 (e.g., the set generation module 124) may identify one or more function records that each include a WAM. In these scenarios, the set processing module 126 may process (e.g., score) the identified set of function records in the manner described above. For example, the set processing module 126 may select function records from the consideration set based on the result scores associated with the identified function records.

In some implementations of the search system 100, the set processing module 126 determines which of the multiple AAM(s) 156,156e and the WAM 170, 170e should be transmitted to the user device 200. The set processing module 126 may determine whether to transmit the WAM 170, 170e and/or the AAM(s) 156,156e of the function record 150, 150e based on information included in the query wrapper received from the user device 200. For example, the set processing module 126 may select and transmit the WAM 170, 170e and/or the AAM(s) 156,156e based on which of the WAM 170, 170e and/or the AAM(s) 156,156e are likely to be compatible with the user device 200.

In scenarios where the set processing module 126 determines that one or more of the AAM(s) 156,156e is compatible with the user device 200, the set processing module 126 may transmit the one or more compatible AAMs. In these scenarios, the set processing module 126 may refrain from transmitting the WAM 170, 170e and those AAMs 156 that are determined to be incompatible with the user device 200. In other scenarios, if the set processing module 126 determines that none of the AAM(s) 156,156e is compatible with the user device 200, the set processing module 126 may transmit the WAM 170, 170e and refrain from transmitting the AAM(s) 156,156e.

FIG. 10 shows an example function record 150, 150f that includes one or more ADAs 172, 172f. The function record 150, 150f also includes a function ID 152f, ASI 154f, one or more AAMs 156, 156f, and a WAM 170, 170f, as described above. An ADA 172, 172f can be used by a user device 200 to download the native application referenced in the AAM(s) 156, 156f in the event that the native application is not installed on the user device 200. In some examples, the ADA 172, 172f may include a web address (e.g., a URL) at which the native application can be previewed and downloaded. For example, the ADA 172, 172f may direct a web browser of a user device 200 to a digital distribution platform that is configured to distribute native applications. Example digital distribution platforms include, but are not limited to, GOOGLE PLAY® developed by Google Inc., the APP STORE® developed by Apple Inc., and WINDOWS PHONE STORE developed by Microsoft Corporation. If a user device 200 includes a native download application for accessing a digital distribution platform, the ADA 172, 172f may direct the installed native download application to a site where the native application referenced in the AAM(s) 156, 156f can be downloaded. In other examples, the ADA 172, 172f may indicate a location from which another location where the native application can be downloaded can be accessed.

During a search, the search system 100 (e.g., the set generation module 124) may identify one or more function records that each include an ADA 172, 172f. In these cases, the set processing module 126 may process (e.g., score) the identified set of function records as described above. The set processing module 126 may also select function records from the consideration set and select which AAMs 156 of the selected function records to transmit to the user device 200, as described above. The set processing module 126 may transmit the selected AAMs 156 and the one or more ADAs 172, 172f to the user device 200.

As described above, different AAMs 156 in a function record may be associated with different operating systems. A first AAM 156 may be for a native application running on the ANDROID® OS. A second AAM 156 may be for the native application running on the IOS® OS. In this example, the first AAM 156 can be associated with a first ADA for downloading the ANDROID® edition of the native application. The second AAM 156 can be associated with a second ADA for downloading the IOS® edition of the native application.

As described above, the search system 100 may transmit an AAM 156, 156f and an ADA 172, 172f for downloading the native application referenced in the AAM 156, 156f. If the user device 200 has the native application that is referenced in the AAM 156, 156f installed, then the user device 200 (e.g., the search application 116) can generate a user selectable link that uses the AAM 156, 156f. For example, in response to selection of the user selectable link using the AAM 156, 156f, the user device 200 launches the native application referenced in the AAM 156, 156f and performs one or more operations included in the AAM 156, 156f. If the user device 200 does not have the native application installed, the user device 200 can determine that the application is not installed and then generate a user selectable link that uses the ADA 172, 172f. In response to selection of the user selectable link using the ADA 172, 172f, the user device 200 can launch the web browser or a native application and direct the user to a site (e.g., a digital distribution platform) where the native application can be downloaded. A user selectable link including the ADA 172, 172f may include link data (e.g., text and/or images) indicating that the user can download the native application by selecting the link. An example user selectable link 208-4 including an ADA is shown in FIG. 12.

As described above, the data store 108 may include one or more databases, indices (e.g., inverted indices), tables, files, or other data structures which may be used to implement the techniques of the present disclosure. In some examples, as described above with reference to FIGS. 4D-4E, the data store 108 may include access tables that include different access mechanisms. With respect to FIG. 10, an access table for the function record 150, 150f may include the ADAs 172, 172f, the WAM 170, 170f, and the AAM(s) 156, 156f. The access table may also include the function ID 152f, which serves as a unique identifier for the access table. In examples where the data store 108 includes access tables for function records, the search system 100 may identify function records and score the function records as described above. The search system 100 may then select the access mechanisms from the access tables identified by the function IDs 152 of the function records and transmit the access mechanisms in the access tables to the user device 200. For example, with respect to the function record 150, 150f of FIG. 10, the search system 100 may identify and score the function record 150, 150f as described above. The search system 100 (e.g., the set processing module 126) may then use the function ID 152f to identify an access table that includes the ADAs 172, 172f, the WAM 170, 170f, and the AAM(s) 156, 156f. The search system 100 can then transmit the ADAs 172, 172f, the WAM 170, 170f, and the AAM(s) 156, 156f.

Multiple different ways for accessing native application functionality and/or web application functionality are described above. For example, a user device 200 may access functionality of a native application using an AAM 156. In the case where the user device 200 does not have a native application installed, the user device 200 may download the native application by following the ADA, thereby allowing the user device 200 to use the AAM 156 in the search results. Additionally, or alternatively, the user device 200 may also access functionality of a web application using a WAM. For example, if the user device 200 does not have a native application installed, the user device 200 may instead generate a user selectable link including a WAM to access similar functionality. Providing these different mechanisms for accessing functionality may help ensure that a user device 200 has the ability to access the desired functionality present in the search results.

In some examples, the search application 116 may be configured to generate user selectable links according to a hierarchy. For example, the search application 116 may be configured to generate a link including an AAM 156 if a compatible AAM 156 is received and the native application is currently installed. If the native application is not installed, then the search application 116 may generate a link including the WAM or including the ADA. In some examples, instructions to the search application 116 for which mechanism to use may be included along with the search results.

Referring to FIG. 11, the function record 150, 150g includes a quality score 174, 174g. The function record 150, 150g also includes a function ID 152, 152g, ASI 154, 154g, and one or more AAMs 156, 156g, as described above. The quality score 174, 174g may be included in any of the function records described herein. The quality score 174, 174g may be a number used by the search system 100 to generate a result score for the function record 150, 150g. For example, the set processing module 126 may generate the result score for the function record 150, 150g based on the quality score 174, 174g included in the function record 150, 150g. As described above, in some implementations, the set processing module 126 generates a result score for a function record based on one or more scoring features, including record scoring features that may be based on data associated with a function record. For those function records that include quality scores, the set processing module 126 may use the quality score as a record scoring feature. In these examples, the set processing module 126 may generate a result score based on the quality score 174, 174g. For example, one or more machine-learned models may generate result scores using the quality score 174, 174g as a record scoring feature.

The quality score 174, 174g may be determined based on metrics associated with the person, place, or thing described in the function record 150, 150g (e.g., in the ASI 154, 154g). For example, the quality score 174, 174g may be based on the popularity of a place described in the function record 150, 150g and/or ratings (e.g., user ratings) of the place described in the function record 150, 150g. In another example, the quality score 174, 174g may be based on the popularity of a song described in the function record 150, 150g and/or ratings (e.g., user ratings) of the song described in the function record 150, 150g. The quality score 174, 174g may also be determined based on measurements associated with the function record 150, 150g. For example, the quality score 174, 174g may be determined based on data indicating how often the function record 150, 150g is retrieved during a search and how often the AAM(s) 156, 156g of the function record 150, 150g are selected by a user.

FIG. 12 illustrates an example GUI of a search application 116 running on a user device 200. In FIG. 12, a user has entered a search query 202 ("Late night diners by me") into the GUI of the search application 116 (e.g., into a search field 210 of the GUI). The user has interacted with the GUI in order to transmit a query wrapper including the search query 202 to the search system 100 (e.g., by selecting a search button 204 of the GUI). The search system 100 has identified function records and selected AAMs, WAMs, and ADAs from the identified function records, as described above. In the example of FIG. 12, the search system 100 has identified function records including references to the native applications Yelp, TripAdvisor, OpenTable, and "URBANSPOON®" by Wanderspot LLC (hereinafter, "Urbanspoon"). It may be assumed that the user device 200 of FIG. 12 has Yelp and TripAdvisor installed. It may also be assumed that OpenTable and Urbanspoon are not installed on the user device 200.

The GUI of FIG. 12 illustrates different types of links 206-1, 206-2,..., 208-4 for the function records identified for Yelp, TripAdvisor, OpenTable, and Urbanspoon. As described above, the search system 100 has identified function records that correspond to the entries in Yelp for "IHOP" and "Denny's," which are included in the GUI. The links 206-1, 206-2 include AAMs 156 that launch Yelp and retrieve the entries in Yelp for "IHOP" and "Denny's." If Yelp was not installed on the user device 200, the GUI may still display the entries in Yelp for "IHOP" and "Denny's," but the user device 200 may include an ADA in the links 206-1, 206-2 so that, upon a user selecting any of the links 206-1,206-2, the user device 200 would be directed to download Yelp. In an example where the links 206-1, 206-2 include an ADA, the links 206-1, 206-2 may also include data (e.g., text and/or images) that indicate to a user that selection of the links 206-1, 206-2 will direct the user to a site for downloading Yelp. For example, the links 206-1, 206-2 may include text and/or an image that says "Download." The GUI of FIG. 12 also includes a link 208-1 that represents a Yelp header for the links 206-1,206-2, as described herein.

The link 208-2 may be associated with an AAM 156 for TripAdvisor. For example, the AAM 156 included in the link 208-2 may cause the user device 200 to launch TripAdvisor to a default state, as described above. In other examples, the AAM 156 included in the link 208-2 may cause the user device 200 to launch TripAdvisor and cause TripAdvisor to perform a search within TripAdvisor using the search query 202 (i.e., cause TripAdvisor to search for "Late night diners by me"). In other words, in some examples, a user device 200 may receive an AAM 156 along with search results 130 received in response to transmitting a search query 202 to the search system 100. The user device 200 may include the AAM 156 in a user selectable link as part of displaying the search results 130 to a user. Upon the user selecting the user selectable link, the AAM 156 may cause the user device to perform a search within a native application included on the user device using the search query. In some examples, the AAM 156 may reference the native application. In this manner, the AAM 156 may be used as part of so-called "search forwarding." In search forwarding, a search result 130 received by a user device 200 from the search system 100 in response to a search query 202 causes a native application included on the user device 200 to perform a search using the same search query 202.

The link 208-3 may include a WAM for the OpenTable web-based application. For example, the WAM may direct a web browser of the user device 200 to entries for one or more late night diners in the OpenTable web-based application. In some examples, the WAM included in the link 208-3 may cause the user device 200 to launch the OpenTable web-based application and cause it to perform a search using the search query 202 in a similar manner as described above with respect to search forwarding. Accordingly, in response to selection of the link 208-3, the user device 200 may launch a web browser and retrieve information at the web address included in the WAM. As described above, since OpenTable is not installed on the user device 200, the search application may have presented the link 208-3 to the user so that the user could access the desired functionality via a WAM.

The link 208-4 may include an ADA for Urbanspoon. Since the user device 200 does not have Urbanspoon installed, the user device 200 displays the link 208-4 that includes an ADA for Urbanspoon. The user device 200 also displays the link 208-4 such that it includes a GUI element 230 with a string "Download," which prompts the user to select the link 208-4 to download and install Urbanspoon. In response to selection of the link 208-4, the user device 200 may access a site (e.g., a digital distribution platform) for downloading Urbanspoon.

In some implementations, a function record may include location data. The search system 100 may use location data in function records to filter out function records that may not be relevant to a user because of the location of the user relative to the places described in the function records. For example, the search system 100 may filter out function records in which the user is located too far from the place(s) described in the function records for the place(s) to be relevant to the user.

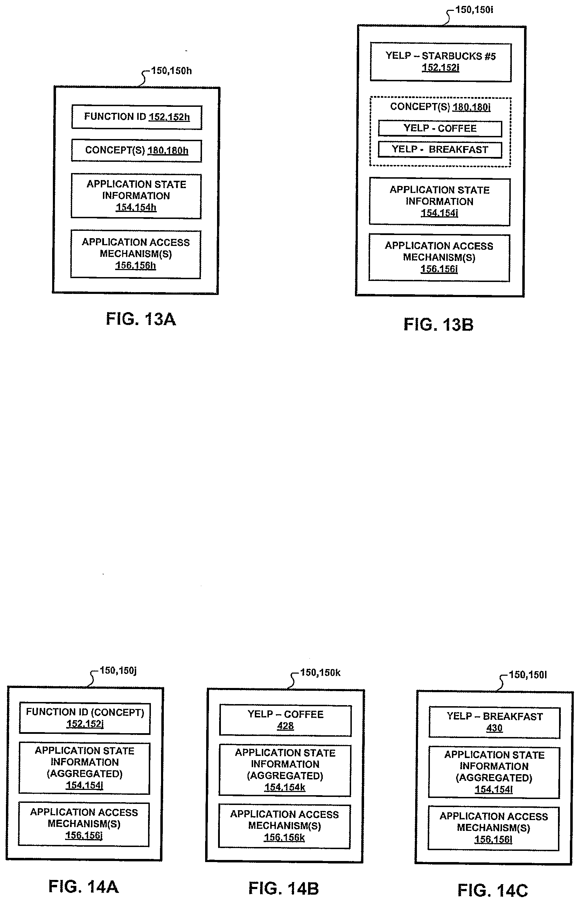

FIGS. 13A-16 describe how the search system 100 may generate new function records 151 based on concepts included in already existing function records. FIGS. 13A-13B show example function records 150, 150h, 150i that include concept fields 180, 180h, 180i. FIGS. 14A-14C show example function records 150, 150j, 150, 150k, 150, 1501 that were generated for individual concepts included in concept fields of already existing function records.

Referring now to FIG. 13A, the function record 150h includes the concept field 180h (i.e., the concept(s) 180h). The function record 150, 150h also includes a function ID 152, 152h, ASI 154,154h, and one or more AAMs 156, 156h, as described above. The concept field 180h may be included in any of the function records described herein. The concept field 180h may include one or more concept names that each describe a concept related to, or associated with, information (e.g., ASI 154,154h) included in the function record 150, 150h and/or functionality provided by the function record 150, 150h. In this disclosure, a concept field of a function record including a concept name that describes a concept related to the function record may be referred to as the function record including the concept, or the concept field including the concept.

A concept name included in the concept field 180h may include one or more words that describe a concept associated with the function record 150, 150h. The one or more concept names included in the concept field 180h may describe the one or more concepts associated with the function record 150, 150h, such as categories or classifications of information (e.g., ASI 154,154h) included in the function record 150, 150h. For example, if the AAM(s) 156, 156h provide access to a movie database application (e.g., "IMDB®" by IMDb.com Inc.), the concepts included in the concept field 180h may include, but are not limited to, a movie genre, a movie rating, and/or a movie director. In a more specific example, if the AAM(s) 156, 156h retrieve information from a movie database for the film "The Godfather," and the ASI 154,154h describes the movie "The Godfather," then the concept field 180h may include concepts, such as "Crime movie," "Drama movie," "1970s movie," "Director - Francis Ford Coppola," "Actor - Marlon Brando," and "R-rated movie." In another example, if the function record 150, 150h describes a restaurant, the concept field 180h may include different categories that are associated with the restaurant described in the function record 150, 150h. In a more specific example, if the function record 150, 150h describes an Italian-American restaurant, the concept field 180h may include the concepts "Italian cuisine" and "American cuisine."

FIG. 13B shows an example function record 150, 150i for an entry in Yelp for a fictional "Starbucks®" store by the Starbucks Coffee Company (hereinafter, "Starbucks"). The function ID 152, 152i of the function record 150, 150i is "Yelp - Starbucks #5." The number "5" of the function ID 152, 152i is a store number used to differentiate the Starbucks store of the function record 150, 150i from other Starbucks stores. The function record 150, 150i also includes ASI 154, 154i and one or more AAMs 156, 156i, as described above. The AAM(s) 156, 156i may cause a user device 200 to launch Yelp and retrieve the entry for the Starbucks #5 store in the Yelp database.

The concept field 180i includes two concepts: "Yelp - Coffee" and "Yelp - Breakfast." The concept "Yelp - Coffee" applies to the function record 150, 150i because the function record 150, 150i includes the AAM(s) 156, 156i for Yelp that access an entry within Yelp for a Starbucks store that serves coffee. The concept "Yelp - Breakfast" also applies to the function record 150, 150i because the function record 150, 150i includes the AAM(s) 156, 156i for Yelp that access an entry within Yelp for a Starbucks store that serves breakfast sandwiches and drinks. In some examples, the ASI 154, 154i may include information related to the coffee served at the Starbucks store and the items that are available for breakfast at the store.

In some examples, the search system 100 may automatically generate one or more concepts included in a concept field of a function record. For example, if ASI 154 of a function record describes a restaurant that serves Italian cuisine, the search system 100 can assign a concept "Italian cuisine" to the function record. Similarly, if ASI 154 of a function record describes an R-rated action movie, the search system 100 can assign the concepts "R-rated movie" and "action movie" to the function record. In other examples, one or more concepts included in a concept field of a function record may be populated by a human operator.

The search system 100 may generate new function records using the concepts included in already existing function records. For example, the search system 100 can generate a new function record for each concept included in the concept fields of already existing function records. For example, with respect to FIGS. 13B, 14B, and 14C, the search system 100 can generate the function record 150k of FIG. 14B for the concept "Yelp - Coffee" and another function record, namely the function record 150, 1501 of FIG. 14C, for the concept "Yelp - Breakfast." As explained above, both of the concepts "Yelp - Coffee" and "Yelp - Breakfast" are included in the concept field 180i of the function record 150, 150i of FIG. 13B.

FIG. 14A shows an example function record 150, 150j that was generated based on a single concept that was included in concept fields of a plurality of different function records. The function ID 152, 152j of the function record 150, 150j may include the concept name associated with the function record 150, 150j. For example, with respect to FIG. 14B, the function ID 428 of the function record 150, 150k is "Yelp - Coffee," which is a concept included in the function record 150, 150i of FIG. 13B. As another example, with respect to FIG. 14C, the function ID 430 of the function record 150, 1501 is "Yelp - Breakfast," which is a concept included in the function record 150, 150i of FIG. 13B.

The function record 150, 150j includes ASI 154, 154j, which is aggregated from multiple different function records. For example, the ASI 154, 154j may include the ASI 154 from multiple different function records having the same concept. In a more specific example, the ASI 154, 154j may include the ASI 154 from multiple different function records each having the concept named in the function ID 152, 152j. For example, if the function record 150, 150j has a function ID 152 "action movie," the ASI 154, 154j may include the ASI 154 from multiple different function records each having the concept "action movie." Accordingly, the ASI 154, 154j generated based on a plurality of different function records may include an aggregation of the ASI 154 of the plurality of different function records. In some examples, the ASI 154, 154j may include all or a subset of the ASI 154 of the plurality of different function records. For instance, the ASI 154, 154j may include certain portions of the ASI 154 of the plurality of different function records, while other portions of the ASI 154 may be filtered or omitted from the ASI 154, 154j in some examples. In other examples, the aggregation of the ASI 154 of the plurality of different function records included in the ASI 154, 154j may represent a concatenation of the ASI, such that the ASI 154, 154j includes the information associated with each of the ASI 154 in its unmodified form. In still other examples, the aggregation of the ASI 154 within the ASI 154, 154j may represent an averaging or other processing of one or more aspects (e.g., ratings) of the ASI.

The function record 150, 150j includes one or more AAMs 156, 156j. The AAM(s) 156, 156j included in the function record 150, 150j may depend on the concept associated with the function record 150, 150j. In general, the AAM(s) 156, 156j may cause a user device 200 to perform a function that is associated with the concept of the function record 150, 150j. Put another way, the AAM(s) 156, 156j may cause a user device 200 to perform a function that is associated in some way with each of the multiple different function records used to generate the function record 150, 150j. As the following examples illustrate, the AAM(s) 156, 156j can be different than any of the AAMs 156 of the function records used to generate the function record 150, 150j. Accordingly, the AAM(s) 156, 156j may cause a user device 200 to perform a function that is different than the functions performed by the AAMs 156 of the multiple different function records used to generate the function record 150, 150j.

In one example, if the function ID 152, 152j of the function record 150, 150j is "Yelp - Italian cuisine," then the AAM(s) 156, 156j may be configured to cause a user device 200 to launch Yelp and generate a search for "Italian cuisine" in Yelp. For example, the AAM(s) 156, 156j may cause the user device 200 to perform a search within Yelp using the string "Italian cuisine" as a search query. Alternatively, the AAM(s) 156, 156j may cause the user device 200 to access a category within Yelp that corresponds to the string "Italian cuisine." In another example, if the function ID 152, 152j of the function record 150, 150j is "IMDB - Martin Scorsese," then the AAM(s) 156, 156j may cause a user device 200 to launch the IMDB native application and generate a search for "Martin Scorsese" in the IMDB native application. In this example, the AAM(s) 156, 156j may cause the user device 200 to perform a search within IMDB using the string "Martin Scorsese" as a search query. Alternatively, the AAM(s) 156, 156j may cause the user device 200 to access a category within IMDB that corresponds to the string "Martin Scorsese."

In some examples, the function record 150, 150j may include one or more WAMs. In these examples, each of the WAM(s) (e.g., a URL) included in the function record 150, 150j may be used by a web browser of a user device 200 to access a web resource that includes similar information and/or performs similar functions as would be performed by a native application that receives the AAM(s) 156, 156j of the function record 150, 150j, as described herein. As one example, the WAM(s) included in the function record 150, 150j may be generated using one or more WAMs included in the multiple different function records used to generate the function record 150, 150j. As another example, the WAM(s) included in the function record 150, 150j may be generated using the AAMs 156 included in the multiple different function records used to generate the function record 150, 150j.

In other examples, the function record 150, 150j may include one or more ADAs that can be used by a user device 200 to download the native application referenced in the AAM(s) 156, 156j in the event that the native application is not installed on the user device 200. In these examples, the one or more ADAs included in the function record 150, 150j may be retrieved from the multiple different function records used to generate the function record 150, 150j.

FIGS. 14B-14C show the two example function records 150, 150k, 150, 1501 that the search system 100 generated based on multiple different function records included in the data store 108. The function record 150, 150k of FIG. 14B was generated from multiple different function records that each include the concept "Yelp - Coffee." Accordingly, the function ID 428 of the function record 150, 150k is "Yelp - Coffee." The multiple function records used to generate the function record 150, 150k may be for entries in Yelp for establishments that sell coffee, such as Starbucks stores (e.g., the function record 150, 150i of FIG. 13B), "McDonald's®" restaurants by McDonald's Corporation (hereinafter, "McDonald's"), and "Dunkin' Donuts®" restaurants by DD IP Holder LLC (hereinafter, "Dunkin' Donuts"), or other establishments. The ASI 154, 154k may include the ASI 154 from the multiple different function records that include the concept "Yelp - Coffee." The AAM(s) 156, 156k may cause the user device 200 to launch Yelp and perform a function associated with the concept "Yelp - Coffee." For example, the AAM(s) 156, 156k may cause the user device 200 to perform a search for "Coffee" in Yelp. As one example, the AAM(s) 156, 156k may cause the user device 200 to perform a search within Yelp using the string "Coffee" as a search query. As another example, the AAM(s) 156, 156k may cause the user device 200 to access a category that corresponds to the string "Coffee" within Yelp.

The function record 150, 1501 of FIG. 14C was generated from multiple different function records that each include the concept "Yelp - Breakfast." Accordingly, the function ID 430 of the function record 150, 1501 is "Yelp - Breakfast." The multiple function records may include entries in Yelp for establishments that sell breakfast, such as Starbucks stores (e.g., the function record 150, 150i of FIG. 13B), "Perkins®" restaurants by Perkins & Marie Callender's, LLC (hereinafter, "Perkins"), "Village Inn®" restaurants by American Blue Ribbon Holdings, LLC (hereinafter, "Village Inn"), "McDonald's®" restaurants, "IHOP®" restaurants by IHOP IP, LLC (hereinafter, "IHOP"), or other establishments. The ASI 154, 1541 may include the ASI 154 from the multiple different function records that include the concept "Yelp - Breakfast." The AAM(s) 156, 1561 may cause the user device 200 to launch Yelp and perform a function associated with the concept "Yelp - Breakfast." For example, the AAM(s) 156, 1561 may cause the user device 200 to perform a search for "Breakfast" in Yelp. As one example, the AAM(s) 156, 1561 may cause the user device 200 to perform a search within Yelp using the string "Breakfast" as a search query. As another example, the AAM(s) 156, 1561 may cause the user device 200 to access a category that corresponds to the string "Breakfast" within Yelp.

In other examples, the function record 150, 150k of FIG. 14B may be generated using multiple different function records that each include the concept "Coffee." In these examples, the function ID 428 of the function record 150, 150k may be "Coffee." The multiple function records used to generate the function record 150, 150k may reference entries in one or more native applications (e.g., Yelp, TripAdvisor, Urbanspoon, and/or OpenTable) for establishments that sell coffee, such as Starbucks stores (e.g., the function record 150i of FIG. 13B), McDonald's restaurants, Dunkin' Donuts restaurants, or other establishments. The ASI 154, 154k of the function record 150, 150k may include ASI 154 from the multiple different function records that include the concept "Coffee." The AAM(s) 156, 156k of the function record 150, 150k may cause the user device 200 to launch a native application (e.g., Yelp, TripAdvisor, Urbanspoon, and/or OpenTable) and perform a function associated with the concept "Coffee." For example, the AAM(s) 156, 156k may cause the user device 200 to perform a search for "Coffee" in the native application.

In a similar manner as described above, in other examples, the function record 150, 1501 of FIG. 14C may be generated using multiple different function records that each include the concept "Breakfast." In this example, the function ID 430 of the function record 150, 1501 may be "Breakfast." The multiple function records may include entries in one or more native applications for establishments that sell breakfast, such as Starbucks stores (e.g., the function record 150i of FIG. 13B), Perkins, Village Inn, McDonald's, or IHOP restaurants, or other establishments. The ASI 154, 1541 of the function record 150, 1501 may include ASI 154 from the multiple different function records that include the concept "Breakfast." The AAM(s) 156, 1561 of the function record 150, 1501 may cause the user device 200 to launch a native application and perform a function associated with the concept "Breakfast." For example, the AAM(s) 156, 1561 may cause the user device 200 to perform a search for "Breakfast" within the native application.

In some examples, one or more of the function records 150, 150j, 150, 150k, and 150, 1501 may each include data (e.g., within a field) that indicates how many already existing function records were used to generate the respective one of the function records 150, 150j, 150, 150k, and 150, 1501.

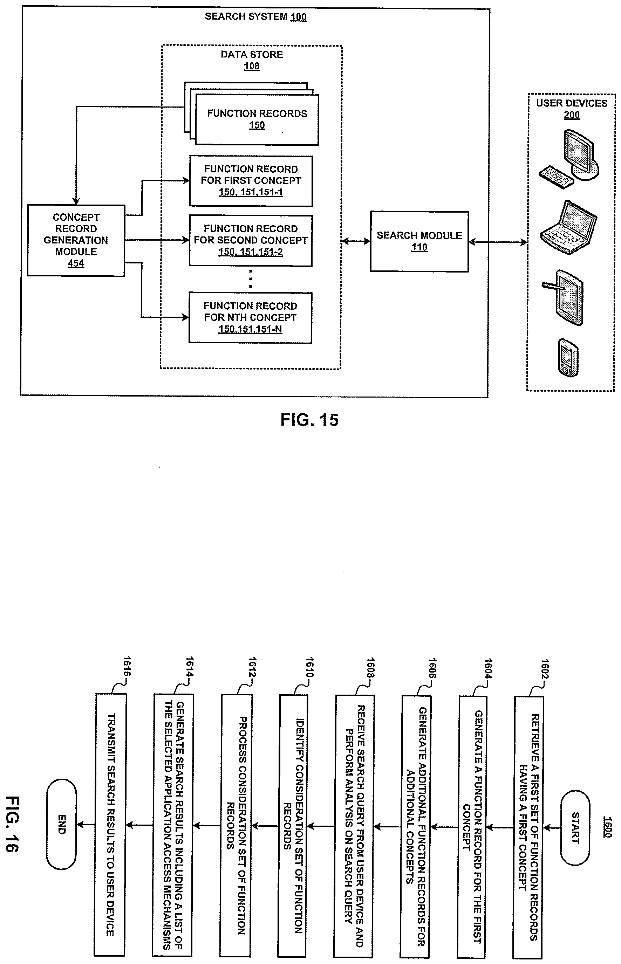

FIG. 15 shows a functional block diagram of an example search system 100. The search system 100 includes the data store 108 and the search module 110, as described above. The data store 108 includes function records 150, which may represent any of the function records described above. Some of the function records 150 include concept fields having one or more concepts. The data store 108 also includes function records 151-1, 151-2,..., 151-N (collectively, the "new function records 151") that were generated based on the already existing function records 150.

The search system 100 includes a concept record generation module 454 (hereinafter, "record generation module 454"). The record generation module 454 generates the new function records 151 based on concepts included in the already existing function records 150 (e.g., the record generation module 454 may generate a new function record 151 for a concept included in multiple existing function records 150). The function records 150 may include N or more different concepts. As shown in FIG. 15, the record generation module 454 generates N function records 151 from the N or more different concepts included in the function records 150.

The record generation module 454 can generate a function record in the following manner. Initially, the record generation module 454 may identify a concept included in the function records 150 (e.g., in a specific one of the function records 150). The record generation module 454 may then generate a new function record 151 for the identified concept. For example, the new function record 151 may have a function ID 152 that includes the identified concept. The record generation module 454 may then populate the newly generated function record 151 (e.g., the ASI 154 of the new function record 151) with the ASI 154 of the function record 150 in which the concept was identified. The record generation module 454 may then select another function record 150 having the same concept and include the ASI 154 from the selected function record 150 in the ASI 154 of the newly generated function record 151. Accordingly, at this point in time, the newly generated function record 151 may include ASI 154 from two different function records 150 each having the same concept. The record generation module 454 may then continue to add ASI 154 to the newly generate function record 151. For example, the record generation module 454 may identify additional function records 150 having the same concept and include the ASI 154 from the additional function records 150 in the ASI 154 of the newly generated function record 151. In this manner, the newly generated function record 151 is populated with ASI 154 from multiple different ones of the function records 150 each having the same concept. In FIG. 15, the record generation module 454 generates N function records 151 based on N different concepts included in the function records 150.

The record generation module 454 then generates AAMs 156 for the newly generated function records 151. As described above, the AAMs 156 may be configured to cause a user device 200 to launch a native application and perform functions associated with the concept upon which the function record 151 is based. For example, the record generation module 454 may generate an AAM 156 that performs a search for the concept in a native application. In some examples, the AAM 156 for the newly generated function record 151 may be generated by a human operator and added to the newly generated function record 151 by the record generation module 454.

In examples where a newly generated function record 151 was generated from already existing function records 150 including location data, the new record 151 may include the location data from each of the existing records 150 used to generate the new record 151. For example, if three already existing function records 150 used to generate a new function record 151 each have location data that defines a distinct geographic area associated with the respective function record, the record generation module 454 may generate the new record 151 to include the location data that defines the three distinct geographic areas.

In some examples, the record generation module 454 may update a previously generated new function record 151, e.g., in instances where information included in one or more already existing function records 150 used to generate the new function record 151 is also updated. For example, the record generation module 454 may update ASI 154 of the new function record 151 with updated ASI 154 of one or more of the function records 150. The record generation module 454 may also update one or more AAMs of the newly generated function record 151 based on the updated ASI 154 of the one or more of the function records 150.

FIG. 16 shows a method 1600 for generating new function records based on concepts included in already existing function records. The method 1600 is described with respect to the search system 100 of FIG. 15 and the search module 110 of FIGS. 3 and 15. It may be assumed that at the start of the method 1600, the data store 108 includes a plurality of function records having multiple different concepts.

In block 1602, the record generation module 454 retrieves a first set (e.g., a subset) of the function records 150, each function record of the first set having a first concept. In block 1604, the record generation module 454 generates a new function record for the first concept 151-1. For example, the record generation module 454 may generate the new function record 151-1 to have a function ID 152 named after the first concept. The record generation module 454 may also generate an ASI 154 field in the new function record 151-1 that includes the ASI 154 from each of the functional records in the first set of the function records 150. The record generation module 454 may then generate one or more access mechanisms (e.g., an AAM 156, a WAM, and/or an ADA) for the newly generated function record 151-1. In block 1606, the record generation module 454 generates one or more additional function records (e.g., one or more of the new function records 151-2...151-N) for one or more additional concepts included in the function records 150, e.g., in other sets (e.g., subsets) of the function records 150. For example, the record generation module 454 may generate a new function record 151 for each concept identified in the already existing function records 150.

In block 1608, the query analysis module 122 receives a search query 202 generated by a user device 200 and then analyzes the search query 202. In block 1610, the set generation module 124 identifies a consideration set of function records based on the search query 202. The consideration set may include one or more function records from the original function records 150 and one or more newly generated function records 151. In block 1612, the set processing module 126 processes (e.g., scores) the consideration set of function records. In block 1614, the set processing module 126 selects one or more function records from the consideration set, selects one or more AAMs 156 from the selected function records, and generates search results including a list of the selected AAMs. In block 1616, the set processing module 126 transmits the search results to the user device 200 that generated the search query 202.

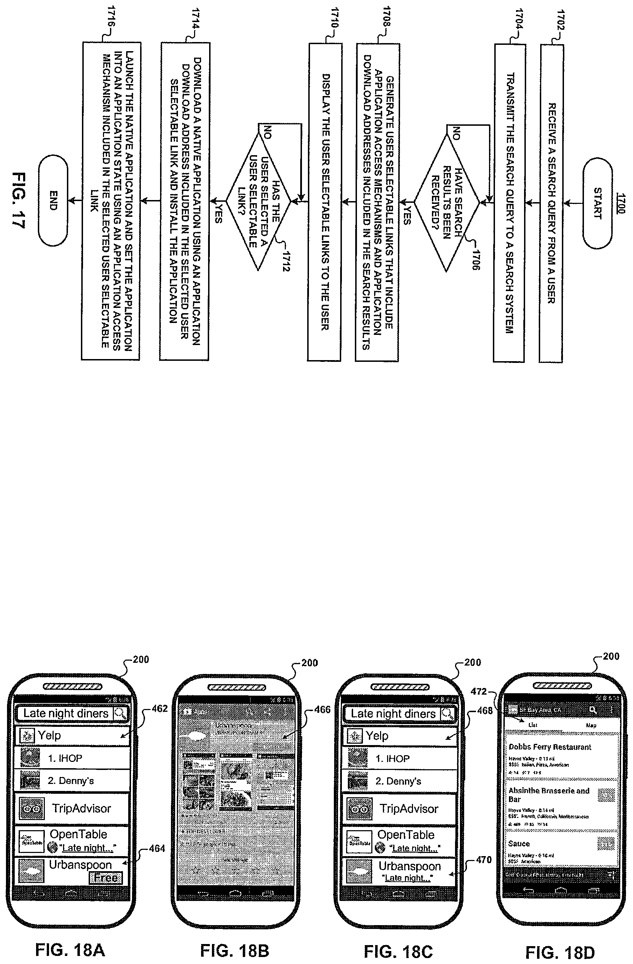

FIGS. 17-18D and the corresponding description below are directed to techniques for installing a native application on a user device 200. Specifically, FIG. 17 is a flow diagram that illustrates an example method for installing a native application on a user device 200 and setting the installed native application into a particular application state, consistent with the techniques of the present disclosure. FIGS. 18A-18D, in turn, illustrate example GUIs that may be displayed on a user device 200 both prior to and after a native application is installed on the user device 200 in the manner described with reference to FIG. 17.

FIG. 17 shows another example method 1700 describing operation of one of the user devices 200. In a similar manner as described above with reference to FIG. 6, it may be assumed that the user device 200 described according to the method 1700 includes a search application 116 that is configured to communicate with the search system 100, and that the search application 116 running on the user device 200 generates a GUI that receives search queries 202 from users of the user device 200, and displays search results 130 received by the user device 200 from the search system 100 in response to the user device 200 transmitting the search queries 202 to the search system 100. The method 1700 is described with reference to the search system 100 and one of the user devices 200 of FIGS. 1-2, and the components thereof.

In block 1702, the search application 116 receives a search query 202 from a user of the user device 200. For example, the user may have entered the search query 202 into the GUI (e.g., into a search field of the GUI) of the search application 116. In block 1704, the user device 200 transmits the search query 202 to the search system 100. For example, the user may have caused the user device 200 to transmit the search query 202 to the search system 100 by selecting (e.g., touching, or clicking on) a search button included in the GUI. In block 1706, the user device 200 waits to receive search results 130 that are responsive to the search query 202 from the search system 100. The method 1700 continues in block 1708 when the user device 200 receives the search results 130 from the search system 100 in response to transmitting the search query 202 to the search system 100. As described herein, the search results 130 received by the user device 200 from the search system 100 may include one or more AAMs 156 that each reference a native application and indicate one or more operations for the application to perform. As also described herein, the search results 130 may further include one or more ADAs that each indicate a location (e.g., a digital distribution platform) at which the user device 200 may download a native application referenced by one of the AAMs 156 included in the search results 130. For example, for each of one or more of the AAMs 156 included in the search results 130, the search results 130 may further include one or more ADAs that are each associated with the AAM 156 (i.e., that each indicate a location at which the user device 200 may download the native application referenced by the AAM 156). In some examples, the search results 130 may further include one or more WAMs. The search results 130 may also include one or more result scores associated with the AAMs, as also described herein. Additionally, the search results 130 may include link data (e.g., text and/or images) for each of the AAMs, as further described herein. As described in greater detail below, the search application 116 may generate one or more user selectable links for the AAMs 156 included in the search results 130 using the received link data, and display the links to the user within the GUI (e.g., by arranging the links within a list using the corresponding received results scores). As also described in greater detail below, the search application 116 may generate the user selectable links such that one or more of the links each includes one or more of the ADAs included in the search results 130.

Accordingly, in block 1708, the search application 116 generates one or more user selectable links that include the AAMs 156 and the ADAs included in the search results 130 (e.g., using link data received from the search system 100 as part of the search results 130). For example, the search application 116 may generate one user selectable link for each AAM 156 included in the search results 130. The search application 116 may further generate the user selectable links such that each of one or more of the links also includes one or more of the ADAs included in the search results 130. For example, the search application 116 may generate the user selectable links such that each of one or more of the links includes one of the AAMs 156 included in the search results 130 and one or more of the ADAs included in the search results 130 that are each associated with the AAM 156 (i.e., that each indicate a location at which the user device 200 may download the native application referenced by the AAM). In some examples, the search application 116 may generate a particular user selectable link such that the link includes one or more of the ADAs in the event the native application referenced by the AAM 156 included in the link is not currently installed on the user device 200. In block, 1710, the search application 116 displays the user selectable links to the user. For example, the search application 116 may arrange the user selectable links within a list (e.g., using result scores received from the search system 100 as part of the search results 130), and display the list within the GUI of the search application 116. In block 1712, the search application 116 waits for the user to select one of the user selectable links displayed to the user via the GUI. The method 1700 continues in block 1714 when the user selects (e.g., touches, or clicks on) one of the user selectable links.

In block 1714, in response to the user selecting one of the user selectable links, the user device 200 downloads the native application referenced by the AAM 156 included in the selected user selectable link onto the user device 200, and installs the downloaded application on the user device 200. For example, to download the native application, the user device 200 may access a location (e.g., a digital distribution platform) indicated by an ADA also included in the selected user selectable link. For instance, the user device 200 may download and install the native application in parallel with (e.g., in the background of) the search application 116 included on the user device 200. In some examples, rather than automatically downloading and installing the native application in response to the user selecting one of the user selectable links, the user device 200 may be directed to the location indicated by the ADA (e.g., an entry, or a page, within a digital distribution platform for the native application). The user device 200 may then prompt (e.g., via a "Download," or "Install" GUI element, or button) the user to download the native application from the location onto the user device 200, and install the downloaded application on the user device 200 (e.g., as shown in FIG. 18B). The user may accept the prompt to cause the user device 200 to download the native application onto the user device 200, and install the downloaded application on the user device 200, in a similar manner as described above with reference to block 1714.

In block 1716, upon downloading and installing the native application, the user device 200 launches the application on the user device 200, and sets the launched application into an application state specified by the AAM 156 using the AAM. For example, to set the native application into the application state, the user device 200 may cause the application to perform the one or more operations indicated by the AAM. In some examples, rather than automatically launching the native application and setting the launched application into the application state upon downloading and installing the application, the user device 200 may prompt (e.g., via an "Open," or a "View" GUI element, or button) the user to launch the application on the user device 200, and set the launched application into the application state (not shown). The user may accept the prompt to cause the user device 200 to launch the native application, and set the launched application into the application state, in a similar manner as described above with reference to block 1716. Additionally, or alternatively, the user device 200 may update the selected user selectable link, or generate a new user selectable link (e.g., as shown in FIG. 18C). The user may then select the updated or new user selectable link to cause the user device 200 to launch the native application on the user device 200, and set the launched application into the application state, in a similar manner as described above with reference to block 1716. In any case, upon launching the native application, and setting the launched application into the application state, the user device 200 may resize, suspend (e.g., pause), minimize, move to the background, terminate (e.g., close), or otherwise manipulate the search application 116 such that the user is able to interact with (e.g., perform one or more functions using) the newly launched native application and the application state thereof on the user device 200.

FIGS. 18A-18D illustrate other example GUIs that may be generated on one of the user devices 200 according to the present disclosure. Specifically, FIG. 18A shows an example GUI 462 of a search application 116 included on a user device 200. The GUI 462 includes some of the same or similar elements (e.g., user selectable links, headers, and other GUI elements, such as search fields, search buttons, and other buttons or links) as those of the GUI of the search application 116 included on the user device 200, as described above with reference to FIG. 12. As shown in FIG. 18A, the GUI 462 includes a user selectable link 464 that specifies an application state of Urbanspoon (e.g., a particular application state, or a main page, or screen of Urbanspoon). For example, as described herein, the link 464 may include an AAM 156 that references Urbanspoon, and indicates one or more operations for Urbanspoon to perform. As also described herein, Urbanspoon performing the operations may set Urbanspoon into the application state. FIGS. 18B-18D, in turn, show other GUIs displayed on the user device 200 as a result of a user of the user device 200 interacting with the GUI 462.

In the example of FIGS. 18A-18D, Urbanspoon is not installed on the user device 200. Accordingly, the link 464 may also include an ADA that indicates a location (e.g., a digital distribution platform, such as Google Play® by Google Inc.) where the user device 200 may download Urbanspoon. In response to the user selecting the link 464, the user device 200 may access the location, download Urbanspoon onto the user device 200, and install Urbanspoon on the user device 200. As shown in FIG. 18A, the link 464 also includes a GUI element, or button including the string "Free," which indicates that the user may select the link 464 (e.g., the button) to download and install Urbanspoon in the manner described above free of charge. In other examples, the link 464 may include a GUI element, or button including the string "Download," which may indicate that the user may select the link 464 (e.g., the button) to download and/or install Urbanspoon (e.g., for a fee).

In the example of FIGS. 18A-18D, the user selects the link 464 included in the GUI 462 of FIG. 18A. As a result of the user selecting the link 464, the user device 200 is directed to a location where the user device 200 may download Urbanspoon (e.g., a download site, or a digital distribution platform) specified by an ADA included in the link 464, as shown in FIG. 18B. Specifically, FIG. 18B shows an example GUI 466 displayed on the user device 200 when the user device 200 accesses the location (in this example, a GUI, or screen within Google Play® by Google Inc. for downloading Urbanspoon. The example GUI 466 of FIG. 18B includes a GUI element, or button, including the text "INSTALL," which the user may select to download and install Urbanspoon on the user device 200. In general, upon downloading Urbanspoon from the location, the user device 200 may install Urbanspoon on the user device 200. As described herein, in some examples, the user device 200 may automatically download and install Urbanspoon (e.g., in the background of the search application 116, without displaying a GUI associated with the location where Urbanspoon may be downloaded, and/or without prompting the user to download and/or install Urbanspoon).

After downloading and installing Urbanspoon in the manner described above, the user device 200 may display either an example GUI 468 shown in FIG. 18C, or an example GUI 472 shown in FIG. 18D. For example, with reference to FIG. 18C, upon the user device 200 downloading and installing Urbanspoon, the search application 116 may display the GUI 468. The GUI 468 is similar to the GUI 462 of FIG. 18A, with the exception that the link 464 of the GUI 468 has been modified, or replaced, to become a user selectable link 470. For example, the absence of the GUI element, or button including the string "Free," in the link 470 may indicate that Urbanspoon has been downloaded and installed on the user device 200. In the example of FIG. 18C, upon the user selecting the modified or replaced link 470, the user device 200 launches the newly installed Urbanspoon, and sets Urbanspoon into an application state specified by an AAM 156 included in the links 470. For example, upon the user selecting the link 470, the user device 200 may launch Urbanspoon, and cause Urbanspoon to perform one or more operations indicated by the AAM. In this example, the AAM 156 included in the link 470 may be the same as the AAM 156 included along with the ADA in the link 464. In this manner, upon the user selecting the link 470, the user device 200 may launch Urbanspoon, and set Urbanspoon into the application state specified by the AAM 156 included in the link 464, as shown in FIG. 18D. Additionally, in some examples, the link 470 may not include the ADA included in the link 464.

With reference to FIG. 18D, the GUI 472 shows an example GUI, or screen of Urbanspoon that may be displayed on the user device 200 upon the user device 200 launching Urbanspoon and setting it into the application state specified by the AAM 156 included in the link 464. As described above, the user device 200 may launch Urbanspoon, and set Urbanspoon into the application state depicted in FIG. 18D in response to (e.g., automatically upon) the user device 200 downloading and installing Urbanspoon. As also described above, alternatively, the user device 200 may launch Urbanspoon, and set Urbanspoon into the application state shown in FIG. 18D in response to the user selecting the link 470 included in the GUI 468 of FIG. 18C.

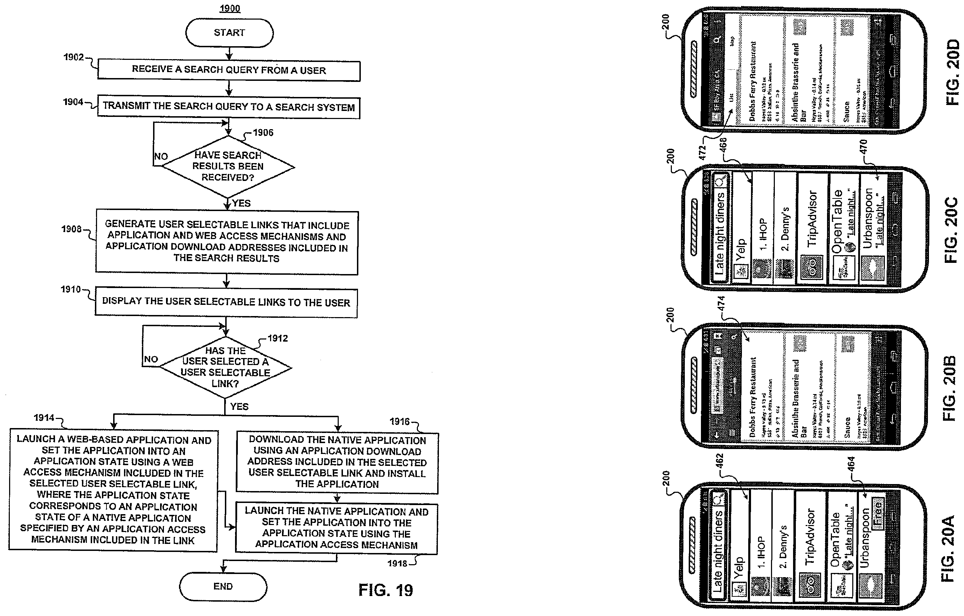

FIGS. 19-20D and the corresponding description below are directed to techniques for launching a web-based application on a user device 200. Specifically, FIG. 19 is a flow diagram that illustrates an example method for launching a web-based application on a user device 200, and setting the launched web-based application into a particular application state, consistent with the techniques of the present disclosure. FIGS. 20A-20D, in turn, illustrate example GUIs that may be displayed on a user device 200 both prior to and after a web-based application is launched on the user device 200 in the manner described with reference to FIG. 19.

FIG. 19 shows another example method 1900 describing operation of one of the user devices 200. In a similar manner as described above with reference to FIGS. 6 and 17, it may be assumed that the user device 200 described according to the method 1900 includes a search application 116 that is configured to communicate with the search system 100, and that the search application 116 running on the user device 200 generates a GUI that receives search queries 202 from users of the user device 200, and displays search results 130 received by the user device 200 from the search system 100 in response to the user device 200 transmitting the search queries 202 to the search system 100. The method 1900 is described with reference to the search system 100 and one of the user devices 200 of FIGS. 1-2, and the components thereof.

In block 1902, the search application 116 receives a search query 202 from a user of the user device 200. For example, the user may have entered the search query 202 into the GUI (e.g., into a search field of the GUI) of the search application 116. In block 1904, the user device 200 transmits the search query 202 to the search system 100. For example, the user may have caused the user device 200 to transmit the search query 202 to the search system 100 by selecting (e.g., touching, or clicking on) a search button included in the GUI. In block 1906, the user device 200 waits to receive search results 130 that are responsive to the search query 202 from the search system 100. The method 1900 continues in block 1908 when the user device 200 receives the search results 130 from the search system 100 in response to transmitting the search query 202 to the search system 100. As described herein, the search results 130 received by the user device 200 from the search system 100 may include one or more AAMs 156 that each reference a native application and indicate one or more operations for the application to perform. As also described herein, the search results 130 may further include one or more WAMs that each specify an application state of a web-based application (e.g., reference the web-based application and indicate one or more operations for the application to perform). For example, each of the one or more WAMs included in the search results 130 may specify an application state of a web-based application that corresponds, or is similar to an application state of a native application specified by one of the one or more AAMs 156 included in the search results 130. For instance, for each of one or more of the AAMs 156 included in the search results 130, the search results 130 may further include one or more WAMs that are each associated with the AAM 156 (i.e., that each specify an application state of a web-based application that corresponds, or is similar to an application state of a native application specified by the AAM). As described herein, each of the one or more WAMs included in the search results 130 may include a resource identifier (e.g., a URL, or a web address) that identifies a web resource (e.g., a web page of a website). In this manner, each WAM may specify a web page of a website that includes the same or similar information as that of a GUI, or screen, of a native application specified by one of the AAMs.

As also described herein, the search results 130 may still further include one or more ADAs that each indicate a location (e.g., a digital distribution platform) at which the user device 200 may download a native application referenced by one of the AAMs 156 included in the search results 130. For example, for each of one or more of the AAMs 156 included in the search results 130, the search results 130 may further include one or more ADAs that are each associated with the AAM 156 (i.e., that each indicate a location at which the user device 200 may download the native application referenced by the AAM). The search results 130 may also include one or more result scores associated with the AAMs, as also described herein. Additionally, the search results 130 may include link data (e.g., text and/or images) for each of the AAMs, as further described herein. As described below, the search application 116 may generate one or more user selectable links for the AAMs 156 included in the search results 130 using the received link data, and display the links to the user within the GUI (e.g., by arranging the links within a list using the corresponding received results scores). As also described below, the search application 116 may generate the user selectable links such that one or more of the links each includes one or more of the WAMs included in the search results 130. As further described below, the search application 116 may generate the user selectable links such that one or more of the links each includes one or more of the ADAs included in the search results 130.

Accordingly, in block 1908, the search application 116 generates one or more user selectable links that include the AAMs, the WAMs, and the ADAs included in the search results 130 (e.g., using link data received from the search system 100 as part of the search results 130). For example, the search application 116 may generate one user selectable link for each AAM 156 included in the search results 130. The search application 116 may further generate the user selectable links such that each of one or more of the links also includes one or more of the WAMs included in the search results 130. For example, the search application 116 may generate the user selectable links such that each of one or more of the links includes one of the AAMs 156 included in the search results 130 and one or more of the WAMs included in the search results 130 that are each associated with the AAM 156 (i.e., that each specify an application state of a web-based application that corresponds, or is similar to an application state of a native application specified by the AAM). In some examples, the search application 116 may generate a particular user selectable link such that the link includes one or more of the WAMs in the event the native application referenced by the AAM 156 included in the link is not currently installed on the user device 200. The search application 116 may still further generate the user selectable links such that each of one or more of the links also includes one or more of the ADAs included in the search results 130. For example, the search application 116 may generate the user selectable links such that each of one or more of the links includes one of the AAMs 156 included in the search results 130 and one or more of the ADAs included in the search results 130 that are each associated with the AAM 156 (i.e., that each indicate a location at which the user device 200 may download the native application referenced by the AAM). In some examples, the search application 116 may generate a particular user selectable link such that the link includes one or more of the ADAs in the event the native application referenced by the AAM 156 included in the link is not currently installed on the user device 200.

In block, 1910, the search application 116 displays the user selectable links to the user. For example, the search application 116 may arrange the user selectable links within a list (e.g., using result scores received from the search system 100 as part of the search results 130), and display the list within the GUI of the search application 116. In block 1912, the search application 116 waits for the user to select one of the user selectable links displayed to the user via the GUI. The method 1900 continues in blocks 1914 and 1916 when the user selects (e.g., touches, or clicks on) one of the user selectable links.

In block 1914, in response to the user selecting one of the user selectable links, the user device 200 launches a web-based application referenced by a WAM included in the selected user selectable link on the user device 200, and sets the launched application into an application state specified by the WAM using the WAM. In this example, the application state corresponds, or is similar to an application state of a native application specified by the AAM 156 included in the selected user selectable link. For example, to set the web-based application into the application state, the user device 200 may cause the web-based application to perform the one or more operations indicated by the WAM. For instance, the user device 200 may launch a web browser application 120 included on the user device 200, and cause the launched web browser application 120 to access a web resource (e.g., a web page of a website) identified by the WAM (e.g., by a resource identifier, such as a URL, or a web address, included in the WAM). In some examples (not shown), rather than automatically launching the web-based application and setting the launched application into the application state specified by the WAM in response to the user selecting the one of the user selectable links, the user device 200 may prompt (e.g., via a "View Web Version," or another GUI element, or button) the user to launch the web-based application and set the launched application into the application state. The user may accept the prompt to cause the user device 200 to launch the web-based application and set the launched application into the application state, in a similar manner as described above with reference to block 1914. In any case, upon the user device 200 launching the web-based application and setting the launched application into the application state, the user may interact with the application state of the web-based application. For example, the user may cause the web-based application to perform some or all of the functions associated with the corresponding, or similar application state of the native application specified by the AAM 156 included in the selected user selectable link.

In block 1916, also in response to the user selecting the one of the user selectable links, the user device 200 downloads the native application referenced by the AAM 156 included in the selected user selectable link onto the user device 200, and installs the downloaded application on the user device 200, in a similar manner as described above with reference to FIG. 17. For example, to download the native application, the user device 200 may access a location (e.g., a digital distribution platform) indicated by an ADA also included in the selected user selectable link. For instance, the user device 200 may download and install the native application in parallel with (e.g., in the background of) the user device 200 launching the web-based application and setting the launched application into the application state specified by the WAM, as described above. In some examples, rather than automatically downloading and installing the native application in response to the user selecting the one of the user selectable links, the user device 200 may be directed to the location indicated by the ADA (e.g., an entry, or a page, within a digital distribution platform for the native application). The user device 200 may then prompt (e.g., via a "Download," or "Install" GUI element, or button) the user to download the native application from the location onto the user device 200, and install the downloaded application on the user device 200 (e.g., as shown in FIG. 18B). The user may accept the prompt to cause the user device 200 to download the native application onto the user device 200, and install the downloaded application on the user device 200, in a similar manner as described above with reference to block 1916.

The method 1900 continues from each of blocks 1914 and 1916 to block 1918. In some examples, the method 1900 may automatically continue from blocks 1914 and 1916 to block 1918 upon the user device 200 downloading and installing the native application, as described above with reference to block 1916. In these examples, upon downloading and installing the native application, the user device 200 may launch the application on the user device 200, and set the launched application into the application state specified by the AAM 156 using the AAM, as described below with reference to block 1918. In other examples, the method 1900 may continue from blocks 1914 and 1916 to block 1918 in response to a user input. In these examples, upon downloading and installing the native application, the user device 200 may prompt (e.g., via a "View Native Version," or another GUI element, or button) the user to launch the native application on the user device 200, and set the launched application into the application state specified by the AAM 156 (not shown). The user may accept the prompt to cause the user device 200 to launch the native application, and set the launched application into the application state, in a similar manner as described below with reference to block 1918. Additionally, or alternatively, upon downloading and installing the native application, the user device 200 may update the selected user selectable link, or generate a new user selectable link (e.g., as shown in FIG. 20C). The user may then select the updated or new user selectable link to cause the user device 200 to launch the native application on the user device 200, and set the launched application into the application state specified by the AAM, in a similar manner as described below with reference to block 1918. In any case, upon launching the native application, and setting the launched application into the application state, the user device 200 may resize, suspend (e.g., pause), minimize, move to the background, terminate (e.g., close), or otherwise manipulate the previously launched web-based application and the application state thereof such that the user is able to interact with (e.g., perform one or more functions using) the newly launched native application and the application state thereof on the user device 200.

Accordingly, in block 1918, upon downloading and installing the native application, the user device 200 launches the application on the user device 200, and sets the launched application into the application state specified by the AAM 156 using the AAM, in a similar manner as described above with reference to FIG. 17 (e.g., automatically, or in response to a user input, such as an acceptance of a user prompt, or a selection of an updated or new user selectable link). For example, to set the native application into the application state, the user device 200 may cause the application to perform the one or more operations indicated by the AAM.

FIGS. 20A-20D illustrate still other example GUIs that may be generated on one of the user devices 200 according to the present disclosure. FIGS. 20A, 20C, and 20D are analogous to FIGS. 18A, 18C, and 18D, respectively, and include some of the same or similar elements (e.g., user selectable links, headers, and other GUI elements, such as search fields, search buttons, and other buttons or links) as those described above with reference to FIG. 18A, 18C, and 18D. FIG. 20B shows a GUI 474 displayed on the user device 200 as a result of the user of the user device 200 interacting with the GUI 462 of FIG. 20A, as described below.

As described herein, the user selectable link 464 included in the GUI 462 of FIG. 20A may include an AAM 156 that specifies an application state of Urbanspoon. As also described herein, because Urbanspoon is not installed on the user device 200, the link 464 may further include an ADA that indicates a location (e.g., a digital distribution platform) where the user device 200 may download Urbanspoon. In the example of FIGS. 20A-20D, the link 464 may also include a WAM that specifies an application state of a web-based version of Urbanspoon (e.g., reference the web-based version and indicates one or more operations for it to perform). For example, the application state of the web-based version of Urbanspoon specified by the WAM may correspond, or be similar to (e.g., include some or all of the information as) the application state of Urbanspoon specified by the AAM 156 included in the link 464.

In the example of FIGS. 20A-20D, in response to the user selecting the link 464, the user device 200 may access (e.g., automatically, or via a user prompt) the application state of the web-based version of Urbanspoon using the WAM, as shown in FIG. 20B. For example, the user device 200 may launch a web browser application 120 included on the user device 200. The user device 200 may then direct the launched web browser application 120 to a web resource (e.g., a web page of a website) corresponding to the application state of the web-based version of Urbanspoon using a resource identifier (e.g., a URL, or a web address) included in the WAM. The example GUI 474 of FIG. 20B depicts what the GUI, or screen, of the web-based version of Urbanspoon might look like upon the user device 200 accessing the application state of the web-based version of Urbanspoon in the manner described above. The user may then interact with the application state (e.g., perform one or more functions that may be the same as, or similar to, functions provided by the application state of Urbanspoon specified by the AAM 156 included in the link 464). Notably, as shown in FIG. 20B, the GUI 474 includes the same or similar information as the GUI 472 corresponding to the application state of Urbanspoon specified by the AAM.

Additionally, also in response to the user selecting the link 464 (e.g., in parallel with accessing the application state of the web-based version of Urbanspoon), the user device 200 may download and install Urbanspoon (e.g., automatically, or via a user prompt) using the ADA included in the link 464, as described herein. Upon downloading and installing Urbanspoon, the user device 200 may display (e.g., automatically, or via a user prompt) the GUI 468 of FIG. 20C, or the GUI 472 of FIG. 20D, as also described herein. For example, the user device 200 may display any of the GUIs 468, 472 in place of the GUI 474 of FIG. 20B. With reference to FIG. 20C, upon the user selecting the link 470, the user device 200 may launch Urbanspoon, and set it into the application state specified by the AAM 156 included in the links 464 and 470, as shown in FIG. 20D. With reference to FIG. 20D, alternatively, upon the user device 200 downloading and installing Urbanspoon, the user device 200 may automatically launch Urbanspoon and set it into the application state depicted in FIG. 20D, without displaying the GUI 468.

In some examples consistent with the techniques of this disclosure, the search system 100 may transmit one or more AAMs 156 to the user device 200, including AAM(s) that reference native applications that are included (e.g., installed) on the user device 200 and/or AAM(s) that reference native applications that are not included on the user device 200. The user device 200 may generate a user selectable link for each AAM, such that the link includes the AAM. In some examples, the user device 200 may first determine whether the native applications referenced by the AAMs 156 are included on the user device 200, and then generate the user selectable links for the AAMs 156 such that each link indicates (e.g., using text and/or image data) to the user whether the corresponding native application is included on the user device 200. For example, each link that is associated with a native application that is included on the user device 200 may include a GUI element that includes the string "Open," indicating that the application is included on the user device 200. In contrast, each link that is associated with a native application that is not included on the user device 200 may include a GUI element that includes the string "Download," or "Install," indicating that the application is not included on the user device 200. In other examples, the links may not indicate whether the corresponding native applications are included on the user device 200. In these examples, the user device 200 may determine whether the native application referenced by a particular one of the AAMs 156 is included on the user device 200 upon the user selecting the corresponding link. In the event the native application is included on the user device 200, the user device 200 may launch the application and set the application into an application state specified by the AAM. Alternatively, in the event the native application is not included on the user device 200, the user device 200 may download, install, and launch the application, and set the application into the application state specified by the AAM.

In some examples, the user device 200 may determine whether the native applications referenced by the AAMs 156 are included (e.g., installed) on the user device 200 by analyzing (e.g., parsing) the search results 130 received from the search system 100 and interacting with an OS of the user device 200. In one example (e.g., when using the Android® OS), the user device 200 (e.g., the search application 116) may parse the search results 130 for application identifiers (ApplDs), package names, or equivalent data structures that identify the native applications referenced by the AAMs. For each AppID, package name, or equivalent data structure, the user device 200 may then query the OS to determine whether the corresponding native application is included on the user device 200. In response to the query, the OS (e.g., Android® OS) may return an indication (e.g., a Boolean character) of whether the corresponding native application is included on the user device 200. The user device 200 may then determine whether the native application is included on the user device 200 using the indication. In other examples, the user device 200 may determine whether the native applications referenced by the AAMs 156 are included on the user device 200 using other techniques.

As described herein, upon the user selecting a particular one of the user selectable links, the user device 200 launches the native application referenced by the AAM 156 included in the link, and sets the application into an application state specified by the AAM. According to the techniques described herein, each of the AAMs 156 may be associated with a particular edition of the native application referenced by the AAM. For example, the OS (e.g., the Android® OS) may provide an indication (e.g., a version code) that specifies (e.g., via integer) an edition of a particular native application that is included on the user device 200. In some examples, upon the user selecting a user selectable link that includes an AAM, the user device 200 may determine whether the AAM 156 references an edition of a native application that is included on the user device 200. Additionally, or alternatively, in examples where the link includes multiple AAMs 156 that reference different editions of a native application, the user device 200 may determine whether any of the AAMs 156 references the edition of the native application that is included on the user device 200. In the event an AAM 156 included in the link reference the edition of the native application that is included on the user device 200, the user device 200 may launch the native application and set the application into an application state specified by the AAM.

In some examples, upon the user selecting a header used to group one or more of the links according to native application (e.g., the Yelp header 208-1 of FIG. 2), the user device 200 may launch the native application referenced by the one or more AAMs 156 included in the links grouped by the header, and set the application into a default, or main application state (e.g., a home screen, or page). In other examples, the user selecting the header may lead to a different response (e.g., launching the native application and setting the application into a specific, or non-default application state), or to no response, by the user device 200.

Additionally, in some examples, upon the user selecting a particular one of the user selectable links, the search application 116 may continue to execute in the background (e.g., as a service) on the user device 200. For example, upon the user selecting the link, the user device 200 may download, install, and launch the native application referenced by the AAM 156 included in the link, and set the application into an application state specified by the AAM, while the search application 116 executes in the background on the user device 200. In this example, the search application 116 executing in the background may launch the native application and set the application into the application state upon the user device 200 downloading and installing the application. Additionally, or alternatively, upon the user selecting the link, the user device 200 may launch a web-based application referenced by a WAM included in the link, and set the application into an application state specified by the WAM, while the search application 116 executes in the background on the user device 200. In this example, the search application 116 executing in the background may resize, suspend, minimize, move to the background, or close the web-based application upon the user device 200 downloading and installing the application.

The modules and data stores included in the search systems 100 represent features that may be included in the search systems 100 of the present disclosure. For example, the search module 110, the record generation module 454, and the data store 108 may represent features included in the search systems 100. The modules and data stores described herein may be embodied by electronic hardware, software, firmware, or any combination thereof. Depiction of different features as separate modules and data stores does not necessarily imply whether the modules and data stores are embodied by common or separate electronic hardware or software components. In some implementations, the features associated with the one or more modules and data stores depicted herein may be realized by common electronic hardware and software components. In other implementations, the features associated with the one or more modules and data stores depicted herein may be realized by separate electronic hardware and software components.

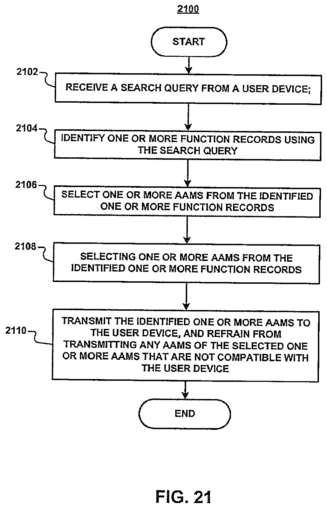

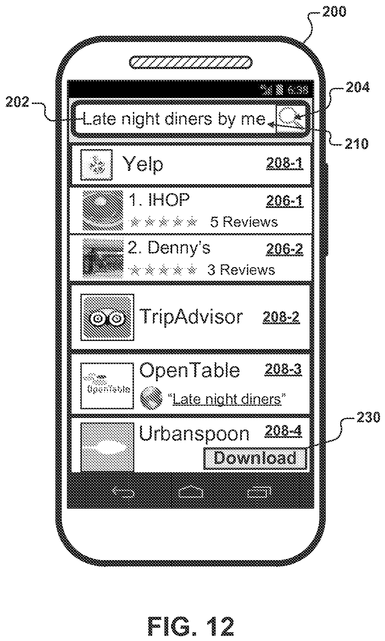

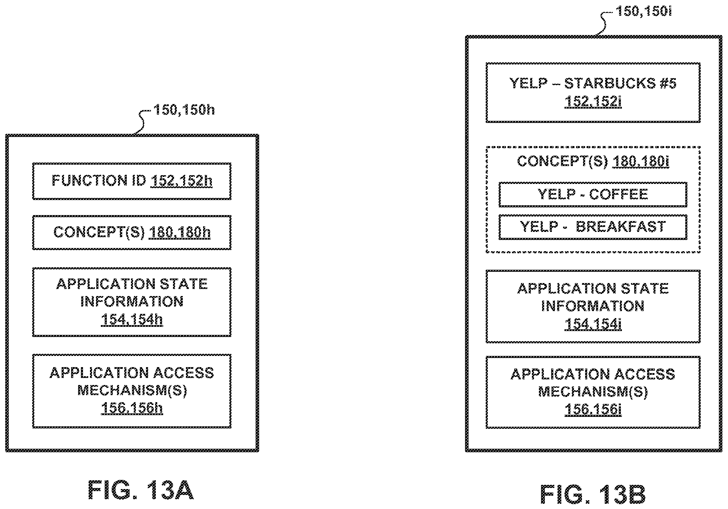

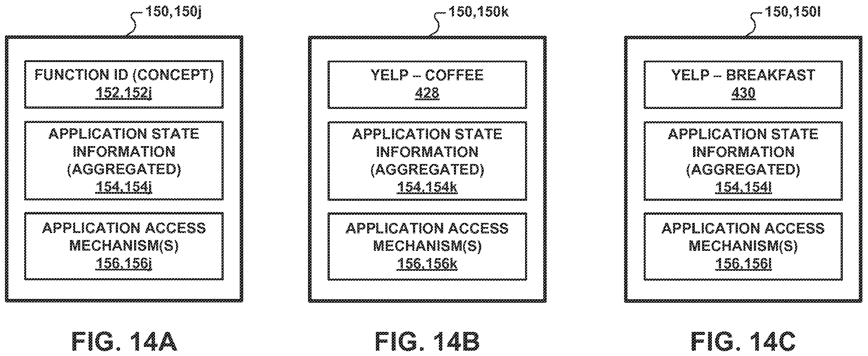

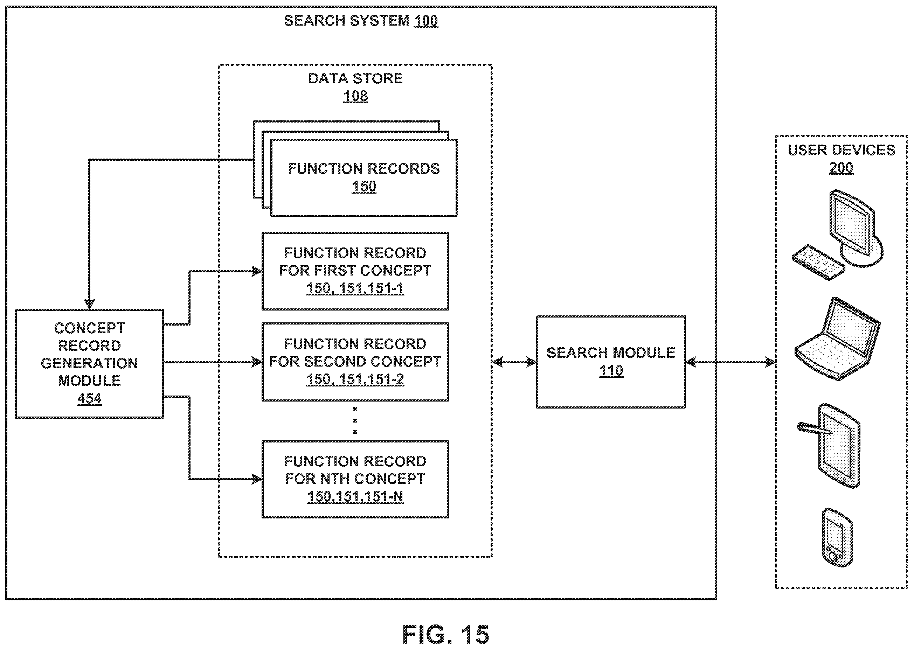

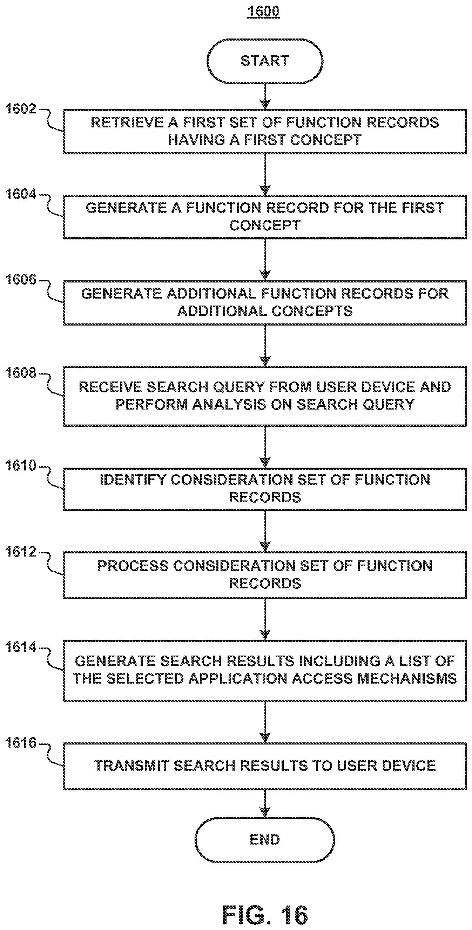

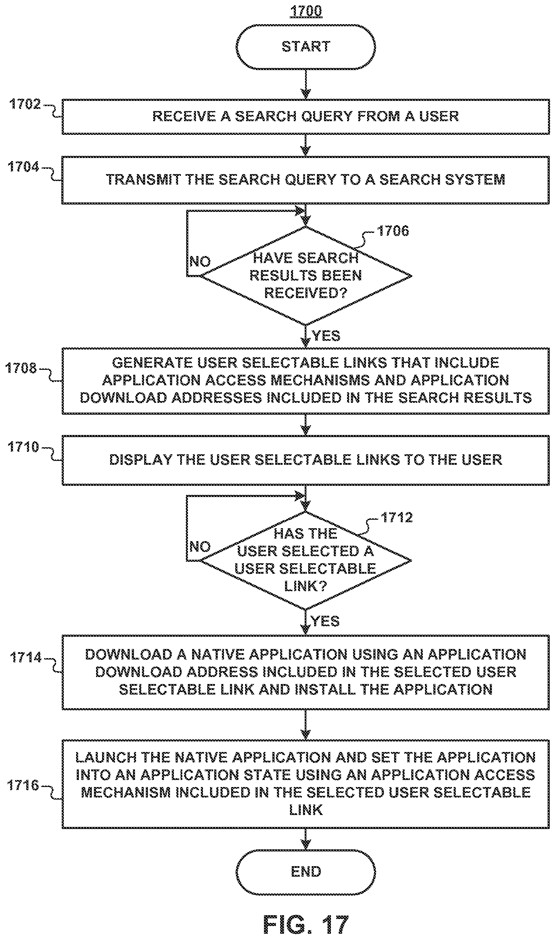

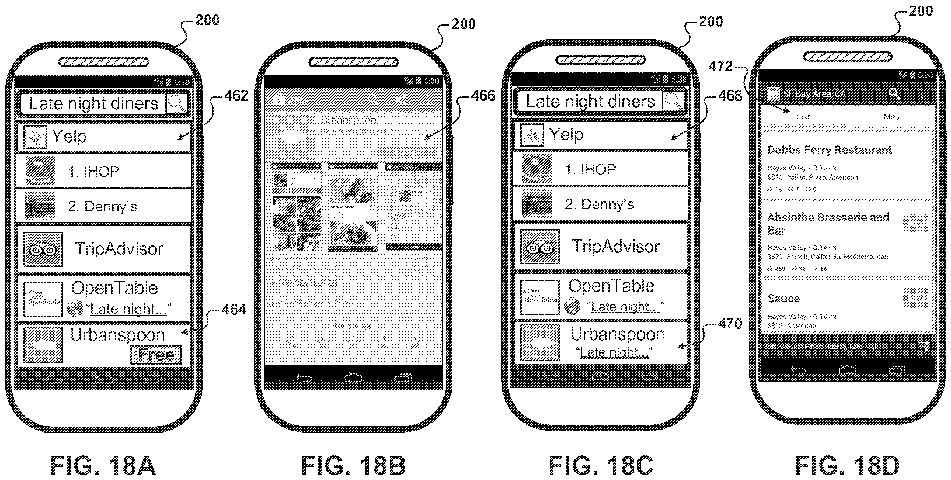

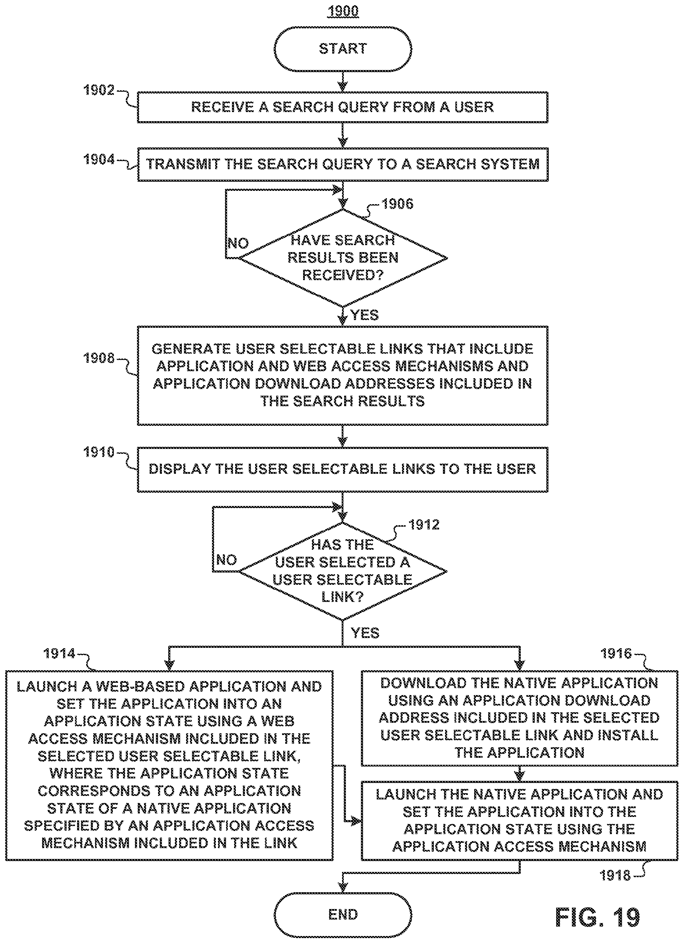

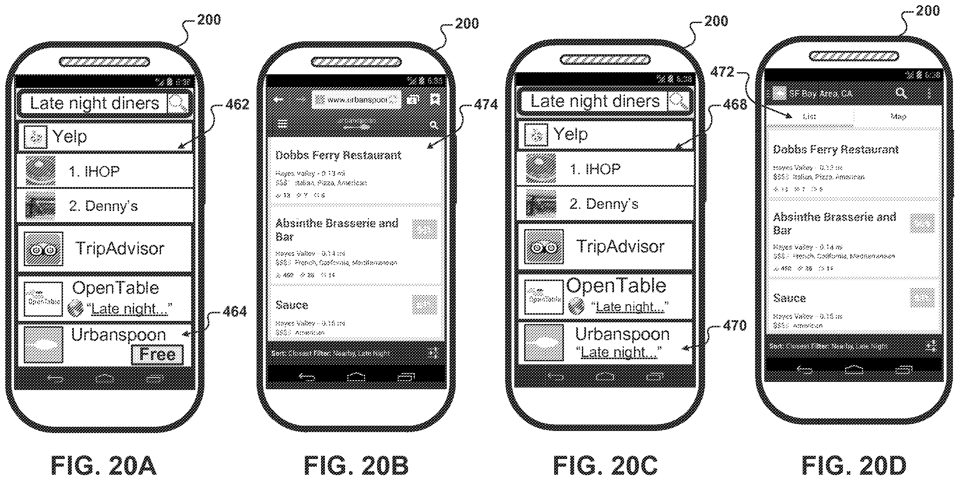

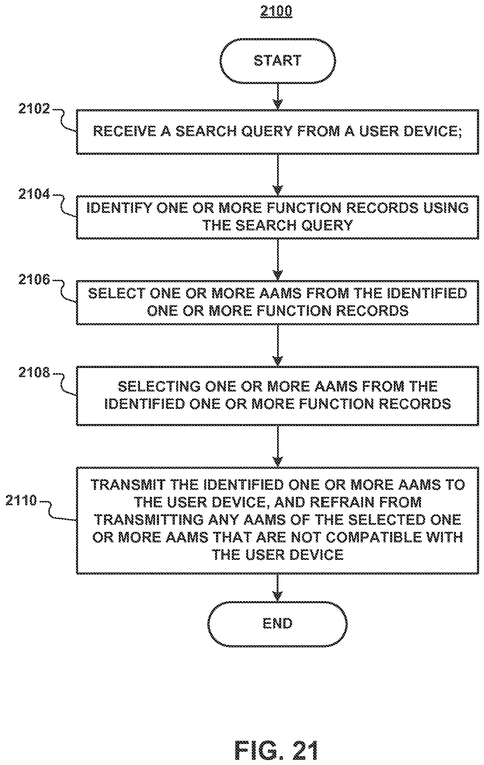

FIG. 21 illustrates an example arrangement of operation for a method 2100 of performing a search for a search query 202. At block 2102, the method 2100 includes receiving a search query 202 from a user device 200. At block 2104, the method 2100 includes identifying one or more function records 150, 150a-I using the search query 202. Each function record 150, 150a-I includes an AAM 156, 156a-I and ASI 154, 154a-I. The AAM 156, 156a-I includes a reference to a native application 112 and indicates one or more operations 162 for the native application 112 to perform. The ASI 154, 154a-I describes a state of the native application 112 after the native application 112 has performed the one or more operations 162 indicated by the AAM 156, 156a-I. At block 2106, the method 2100 includes selecting one or more AAMs 156, 156a-I from the identified one or more function records 150, 150a-I. In addition, at block 2018, the method 2100 includes identifying one or more AAMs 156, 156a-I of the selected one or more AAMs 156, 156a-I that are each compatible with the user device 200. Finally, at block 2110, the method 2100 includes transmitting the identified one or more AAMs 156, 156a-I to the user device 200, and refraining from transmitting any AAMs 156, 156a-I of the selected one or more AAMs 156, 156a-I that are not compatible with the user device 200.

In some implementation, identifying the one or more AAMs 156, 156a-I of the selected one or more AAMs 156, 156a-I that are each compatible with the user device 200 includes determining that the identified one or more AAMs 156, 156a-I are each compatible with an operating system 118 of the user device 200. Additionally, in some examples, each of the selected one or more AAMs 156, 156a-I further includes edition information that indicates an operating system 118 with which the native application 112 referenced by the AAM 156, 156a-I is compatible. Determining that the identified one or more AAMs 156, 156a-I are each compatible with the operating system 118 of the user device 200 may include receiving an indication of the operating system 118 of the user device 200. For each of the selected one or more AAMs 156, 156a-I, the method 2100 may include determining whether the AAM 156, 156a-I is compatible with the operating system 118 of the user device 200 using the edition information 163 included in the AAM 156, 156a-I and the indication, including the AAM 156, 156a-I in the identified one or more AAMs 156, 156a-I in response to determining that the AAM 156, 156a-I is compatible with the operating system 118 of the user device 200, and excluding the AAM 156, 156a-I from the identified one or more AAMs 156, 156a-I in response to determining that the AAM 156, 156a-I is not compatible with the operating system 118 of the user device 200. In some implementations, each of the identified one or more function records 150, 150a-I further includes an additional AAM 156, 156a-I in addition to the AAM 156, 156a-I. The additional AAM 156, 156a-I includes a reference to an edition of the native application 112 that is different than an edition of the native application 112 referenced by the AAM 156, 156a-I. The different editions of the native application 112 include different versions of the native application 112 for different operating systems 118. Selecting the one or more AAMs 156, 156a-I from the identified one or more function records 150, 150a-I includes selecting the AAM 156, 156a-I and the additional AAM 156, 156a-I from each of the identified one or more function records 150, 150a-I. In some examples, determining that the identified one or more AAMs 156, 156a-I are each compatible with the operating system 118 of the user device 200 includes receiving an indication of the operating system 118, and for each of the identified one or more function records 150, 150a-I, the method 2100 includes determining whether one of the AAM 156, 156a-I and the additional AAM 156, 156a-I is compatible with the operating system 118 using the indication, including one of the AAM 156, 156a-I and the additional AAM 156, 156a-I in the identified one or more AAMs 156, 156a-I in response to determining that the corresponding AAM 156, 156a-I is compatible with the operating system 118. The method 2100 also includes excluding any of the AAM 156, 156a-I and the additional AAM 156, 156a-I from the identified one or more AAMs 156, 156a-I in response to determining that the corresponding AAM 156, 156a-I is not compatible with the operating system 118.

In some examples, each of the identified one or more function records 150, 150a-I further includes a web address e.g., a web access mechanism 170 in addition to the AAM 156, 156a-I. The web address is configured to direct a web browser to a web version of the native application 112 referenced by the AAM 156, 156a-I. In some examples, selecting the one or more AAMs 156, 156a-I from the identified one or more function records 150, 150a-I includes selecting the AAM 156, 156a-I from each of the identified one or more function records 150, 150a-I. Determining that the identified one or more AAMs 156, 156a-I are each compatible with the operating system 118 of the user device 200 may include receiving an indication of the operating system 118. Determining that the identified one or more AAMs 156, 156a-I are each compatible with the operating system 118 of the user device 200 also includes, for each of the identified one or more function records 150, 150a-I, determining whether the AAM 156, 156a-I is compatible with the operating system 118 using the indication, including the AAM 156, 156a-I in the identified one or more AAMs 156, 156a-I in response to determining that the AAM 156, 156a-I is compatible with the operating system 118, and excluding the AAM 156, 156a-I from the identified one or more AAMs 156, 156a-I and transmitting the web address to the user device 200 in response to determining that the AAM 156, 156a-I is not compatible with the operating system 118.

In some implementations, each of the identified one or more function records 150, 150a-I further includes an additional AAM 156, 156a-I in addition to the AAM 156, 156a-I and a web address. The additional AAM 156, 156a-I includes a reference to an edition of the native application 112 that is different than an edition of the native application 112 referenced by the AAM 156, 156a-I. The different editions of the native application 112 include different versions of the native application 112 for different operating systems 118. The web address is configured to direct a web browser to a web version of the native application 112. Selecting the one or more AAMs 156, 156a-I from the identified one or more function records 150, 150a-I includes selecting the AAM 156, 156a-I and the additional AAM 156, 156a-I from each of the identified one or more function records 150, 150a-I. Determining that the identified one or more AAMs 156, 156a-I are each compatible with the operating system 118 of the user device 200 includes receiving an indication of the operating system 118. For each of the identified one or more function records 150, 150a-I, determining that the identified one or more AAMs 156, 156a-I are each compatible with the operating system 118 of the user device 200 further includes determining whether one of the AAM 156, 156a-I and the additional AAM 156, 156a-I is compatible with the operating system 118 using the indication, including one of the AAM 156, 156a-I and the additional AAM 156, 156a-I in the identified one or more AAMs 156, 156a-I in response to determining that the corresponding AAM 156, 156a-I is compatible with the operating system 118, and excluding the AAM 156, 156a-I and the additional AAM 156, 156a-I from the identified one or more AAMs 156, 156a-I and transmitting the web address to the user device 200 in response to determining that the AAM 156, 156a-I and the additional AAM 156, 156a-I are not compatible with the operating system 118.

Identifying the one or more AAMs 156, 156a-I of the selected one or more AAMs 156, 156a-I that are each compatible with the user device 200 may include determining that the identified one or more AAMs 156, 156a-I are each compatible with a native application 112 that is installed on the user device 200. Each of the selected one or more AAMs 156, 156a-I may further include edition information that indicates a version the native application 112 referenced by the AAM 156, 156a-I with which the AAM 156, 156a-I is compatible. Determining that the identified one or more AAMs 156, 156a-I are each compatible with a native application 112 that is installed on the user device 200 includes: receiving an indication of a version of each of one or more native applications 112 that are installed on the user device 200; and for each of the selected one or more AAMs 156, 156a-I, determining whether the AAM 156, 156a-I is compatible with any of the one or more native applications 112 using the edition information included in the AAM 156, 156a-I and the indication, including the AAM 156, 156a-I in the identified one or more AAMs 156, 156a-I in response to determining that the AAM 156, 156a-I is compatible with any of the one or more native applications 112, and excluding the AAM 156, 156a-I from the identified one or more AAMs 156, 156a-I in response to determining that the AAM 156, 156a-I is not compatible with any of the one or more native applications 112. Additionally, in some examples, each of the identified one or more function records 150, 150a-I further includes an additional AAM 156, 156a-I in addition to the AAM 156, 156a-I, where the additional AAM 156, 156a-I includes a reference to an edition of the native application 112 that is different than an edition of the native application 112 referenced by the AAM 156, 156a-I. The different editions of the native application 112 include different versions of the native application 112 for the same operating system 118. Selecting the one or more AAMs 156, 156a-I from the identified one or more function records 150, 150a-I includes selecting the AAM 156, 156a-I and the additional AAM 156, 156a-I from each of the identified one or more function records 150, 150a-I. Determining that the identified one or more AAMs 156, 156a-I are each compatible with a native application 112 that is installed on the user device 200 includes: receiving an indication of a version of each of one or more native applications 112 that are installed on the user device 200; and for each of the identified one or more function records 150, 150a-I, determining whether any of the AAM 156, 156a-I and the additional AAM 156, 156a-I is compatible with any of the one or more native applications 112 using the indication, including any of the AAM 156, 156a-I and the additional AAM 156, 156a-I in the identified one or more AAMs 156, 156a-I in response to determining that the corresponding AAM 156, 156a-I is compatible with any of the one or more native applications 112, and excluding any of the AAM 156, 156a-I and the additional AAM 156, 156a-I from the identified one or more AAMs 156, 156a-I in response to determining that the corresponding AAM 156, 156a-I is not compatible with any of the one or more native applications 112.

Each of the identified one or more function records 150, 150a-I further includes a web address in addition to the AAM 156, 156a-I, wherein the web address is configured to direct a web browser to a web version of the native application 112 referenced by the AAM 156, 156a-I, wherein selecting the one or more AAMs 156, 156a-I from the identified one or more function records 150, 150a-I comprises selecting the AAM 156, 156a-I from each of the identified one or more function records 150, 150a-I. Determining that the identified one or more AAMs 156, 156a-I are each compatible with a native application 112 that is installed on the user device 200 includes: receiving an indication of a version of each of one or more native applications 112 that are installed on the user device 200; and for each of the identified one or more function records 150, 150a-I, determining whether the AAM 156, 156a-I is compatible with any of the one or more native applications 112 using the indication, including the AAM 156, 156a-I in the identified one or more AAMs 156, 156a-I in response to determining that the AAM 156, 156a-I is compatible with any of the one or more native applications 112, and excluding the AAM 156, 156a-I from the identified one or more AAMs 156, 156a-I and transmitting the web address to the user device 200 in response to determining that the AAM 156, 156a-I is not compatible with any of the one or more native applications 112.

In some implementations, each of the identified one or more function records 150, 150a-I further includes an additional AAM 156, 156a-I in addition to the AAM 156, 156a-I and a web address. The additional AAM 156, 156a-I includes a reference to an edition of the native application 112 that is different than an edition of the native application 112 referenced by the AAM 156, 156a-I. The different editions of the native application 112 include different versions of the native application 112 for the same operating system 118. The web address is configured to direct a web browser to a web version of the native application 112. Selecting the one or more AAMs 156, 156a-I from the identified one or more function records 150, 150a-I includes selecting the AAM 156, 156a-I and the additional AAM 156, 156a-I from each of the identified one or more function records 150, 150a-I. Determining that the identified one or more AAMs 156, 156a-I are each compatible with a native application 112 that is installed on the user device 200 includes: receiving an indication of a version of each of one or more native applications 112 that are installed on the user device 200; and for each of the identified one or more function records 150, 150a-I, determining whether any of the AAM 156, 156a-I and the additional AAM 156, 156a-I is compatible with the one or more native applications 112 using the indication, including any of the AAM 156, 156a-I and the additional AAM 156, 156a-I in the identified one or more AAMs 156, 156a-I in response to determining that the corresponding AAM 156, 156a-I is compatible with the one or more native applications 112, and excluding the AAM 156, 156a-I and the additional AAM 156, 156a-I from the identified one or more AAMs 156, 156a-I and transmitting the web address to the user device 200 in response to determining that the AAM 156, 156a-I and the additional AAM 156, 156a-I are not compatible with any of the one or more native applications 112.

In some examples, identifying the one or more AAMs 156, 156a-I of the selected one or more AAMs 156, 156a-I that are each compatible with the user device 200 includes determining that the identified one or more AAMs 156, 156a-I are each compatible with a device type of the user device 200. Each of the selected one or more AAMs 156, 156a-I further includes edition information that indicates a device type with which the native application 112 referenced by the AAM 156, 156a-I is compatible. Determining that the identified one or more AAMs 156, 156a-I are each compatible with the device type of the user device 200 includes: receiving an indication of the device type of the user device 200; and for each of the selected one or more AAMs 156, 156a-I, determining whether the AAM 156, 156a-I is compatible with the device type of the user device 200 using the edition information included in the AAM 156, 156a-I and the indication, including the AAM 156, 156a-I in the identified one or more AAMs 156, 156a-I in response to determining that the AAM 156, 156a-I is compatible with the device type of the user device 200, and excluding the AAM 156, 156a-I from the identified one or more AAMs 156, 156a-I in response to determining that the AAM 156, 156a-I is not compatible with the device type of the user device 200. Each of the identified one or more function records 150, 150a-I further includes an additional AAM 156, 156a-I in addition to the AAM 156, 156a-I. The additional AAM 156, 156a-I includes a reference to an edition of the native application 112 that is different than an edition of the native application 112 referenced by the AAM 156, 156a-I. The different editions of the native application 112 include different versions of the native application 112 for different device types, where selecting the one or more AAMs 156, 156a-I from the identified one or more function records 150, 150a-I includes selecting the AAM 156, 156a-I and the additional AAM 156, 156a-I from each of the identified one or more function records 150, 150a-I. In some examples, determining that the identified one or more AAMs 156, 156a-I are each compatible with the device type of the user device 200 includes: receiving an indication of the device type; and for each of the identified one or more function records 150, 150a-I, determining whether one of the AAM 156, 156a-I and the additional AAM 156, 156a-I is compatible with the device type using the indication, including one of the AAM 156, 156a-I and the additional AAM 156, 156a-I in the identified one or more AAM 156, 156a-I in response to determining that the corresponding AAM 156, 156a-I is compatible with the device type, and excluding any of the AAM 156, 156a-I and the additional AAM 156, 156a-I from the identified one or more AAM 156, 156a-I in response to determining that the corresponding AAM 156, 156a-I is not compatible with the device type.

In some examples, each of the identified one or more function records 150, 150a-I further includes a web address in addition to the AAM 156, 156a-I, wherein the web address is configured to direct a web browser to a web version of the native application 112 referenced by the AAM 156, 156a-I. Selecting the one or more AAMs 156, 156a-I from the identified one or more function records 150, 150a-I comprises selecting the AAM 156, 156a-I from each of the identified one or more function records 150, 150a-I. Determining that the identified one or more AAMs 156, 156a-I are each compatible with the device type of the user device 200 includes: receiving an indication of the device type; and for each of the identified one or more function records 150, 150a-I, determining whether the AAM 156, 156a-I is compatible with the device type using the indication, including the AAM 156, 156a-I in the identified one or more AAMs 156, 156a-I in response to determining that the AAM 156 is compatible with the device type, and excluding the AAM 156 from the identified one or more AAMs 156, 156a-I and transmitting the web address to the user device 200 in response to determining that the AAM 156, 156a-I is not compatible with the device type.

In some examples, each of the identified one or more function records 150, 150a-I further includes an additional AAM 156, 156a-I in addition to the AAM 156, 156a-I and a web address, wherein the additional AAM 156, 156a-I includes a reference to an edition of the native application 112 that is different than an edition of the native application 112 referenced by the AAM 156, 156a-I, wherein the different editions of the native application 112 include different versions of the native application 112 for different device types, wherein the web address is configured to direct a web browser to a web version of the native application 112, wherein selecting the one or more AAMs 156, 156a-I from the identified one or more function records 150, 150a-I comprises selecting the AAM 156, 156a-I and the additional AAM 156, 156a-I from each of the identified one or more function records 150, 150a-I, and wherein determining that the identified one or more AAMs 156, 156a-I are each compatible with the device type of the user device 200 includes: receiving an indication of the device type; and for each of the identified one or more function records 150, 150a-I, determining whether one of the AAM 156, 156a-I and the additional AAM 156, 156a-I is compatible with the device type using the indication, including one of the AAM 156, 156a-I and the additional AAM 156, 156a-I in the identified one or more AAMs 156, 156a-I in response to determining that the corresponding AAM 156, 156a-I is compatible with the device type, and excluding the AAM 156, 156a-I and the additional AAM 156, 156a-I from the identified one or more AAMs 156, 156a-I and transmitting the web address to the user device 200 in response to determining that the AAM 156, 156a-I and the additional AAM 156, 156a-I are not compatible with the device type.

Identifying the one or more function records 150, 150a-I using the search query 202 my include identifying the one or more function records 150, 150a-I based on one or more matches between one or more terms of the search query 202 and one or more terms of the ASI 154, 154a-I included in the identified one or more function records 150, 150a-I. In some examples, for each of the identified one or more AAMs 156, 156a-I, the method 2100 includes transmitting link data 158 to the user device 200. The link data 158 includes at least one of text and an image that are associated with the state of the native application 112 described by the ASI 154, 154a-I included in the one of the identified one or more function records 150, 150a-I from which the AAM 156, 156a-I was selected.

The modules and data stores may be embodied by electronic hardware and software components including, but not limited to, one or more processing units, one or more memory components, one or more input/output (I/O) components, and interconnect components. The interconnect components may be configured to provide communication between the one or more processing units, the one or more memory components, and the one or more I/O components. For example, the interconnect components may include one or more buses that are configured to transfer data between electronic components. The interconnect components may also include control circuits (e.g., a memory controller and/or an I/O controller) that are configured to control communication between electronic components.

The one or more processing units may include one or more central processing units (CPUs), graphics processing units (GPUs), digital signal processing units (DSPs), or other processing units. The one or more processing units may be configured to communicate with the one or more memory components and I/O components. For example, the one or more processing units may be configured to communicate with the one or more memory components and I/O components via the interconnect components.

A memory component, or memory, may include any volatile or non-volatile media. For example, the memory may include, but is not limited to, electrical media, magnetic media, and/or optical media, such as a random access memory (RAM), read-only memory (ROM), non-volatile RAM (NVRAM), electrically-erasable programmable ROM (EEPROM), Flash memory, hard disk drives (HDD), magnetic tape drives, optical storage technology (e.g., compact disc, digital versatile disc, and/or Blu-ray Disc), or any other memory components.

The one or more memory components may include (e.g., store) the data described herein. For example, the one or more memory components may include the data included in the function records of the data store 108. The one or more memory components may also include instructions that may be executed by the one or more processing units. For example, the one or more memory components may include computer-readable instructions that, when executed by one or more processing units, cause the one or more processing units to perform the various functions attributed to the modules and data stores described herein.

The one or more I/O components may refer to electronic hardware and software that provides communication with a variety of different devices. For example, the one or more I/O components may provide communication between other devices and the one or more processing units and memory components. In some examples, the one or more I/O components may be configured to communicate with a computer network. For example, the one or more I/O components may be configured to exchange data over a computer network using a variety of different physical connections, wireless connections, and protocols. The one or more I/O components may include network interface components (e.g., a network interface controller), repeaters, network bridges, network switches, routers, and firewalls. In some examples, the one or more I/O components may include hardware and software that is configured to communicate with various human interface devices, including, but not limited to, display screens, keyboards, pointer devices (e.g., a mouse), touchscreens, speakers, and microphones. In other examples, the one or more I/O components may include hardware and software that is configured to communicate with additional devices, such as external memory (e.g., external HDDs).

In some implementations, the search systems 100 may be systems of one or more computing devices (e.g., a computer search system) that are configured to implement the techniques described herein. Put another way, the features attributed to the modules and data stores described herein may be implemented by one or more computing devices. Each of the one or more computing devices may include any combination of electronic hardware, software, and/or firmware described above. For example, each of the one or more computing devices may include any combination of the one or more processing units, memory components, I/O components, and the interconnect components described above. The one or more computing devices may also include various human interface devices, including, but not limited to, display screens, keyboards, pointing devices (e.g., a mouse), touchscreens, speakers, and microphones. The one or more computing devices may also be configured to communicate with additional devices, such as external memory (e.g., external HDDs).
The one or more computing devices of the search systems 100 may be configured to communicate with the network 106. The one or more computing devices may also be configured to communicate with one another via a computer network. In some examples, the one or more computing devices may include one or more server computing devices configured to communicate with the user devices 200 (e.g., receive search queries 202, and transmit search results 130), gather data from the data sources 104, index the data, store the data, and store other documents. The one or more computing devices may reside within a single machine at a single geographic location in some examples. In other examples, the one or more computing devices may reside within multiple machines at a single geographic location. In still other examples, the one or more computing devices may be distributed across a number of geographic locations. Additionally, the various implementations of the search system 100 described above (e.g., using one or more computing devices that include one or more processing units, memory components, I/O components, and interconnect components) are equally applicable to any of the user devices 200, as well as to the various components thereof, as described herein.

## Claims

1. A method (2100) comprising:
receiving, at a computing device, a search query (202) from a user device (200);
identifying, by the computing device, one or more function records (150, 150a-1) using the search query (202), wherein:
each function record (150, 150a-1) includes an application access mechanism, AAM (156, 156a-1), additional AAM (156, 156a-1), and a web access mechanism (170, 170e),
wherein the AAM (156, 156a-1) includes a reference to a native application (112) executable on the user device (200) and indicates one or more operations (162) for the native application (112) to perform, and a web address,
the additional AAM (156, 156a-1) includes a reference to an edition of the native application (112) that is different than an edition of the native application (112) referenced by the AAM (156, 156a-1), and
the web address is for a web browser of the user device (200) to access a web version of the native application (112) referenced by the AAM (156, 156a-1);
selecting, by the computing device, the AAM (156, 156a-1) from the identified one or more function records (150, 150a-1);
receiving an indication of an operating system (118) of the user device (200);
identifying whether the AAM (156, 156a-1) associated with the function record (150, 150a-1) is compatible with the operating system (118) using the indication of the operating system (118);
in response to determining that the AAM (156, 156a-1) is compatible with the operating system (118), transmitting the AAM (156, 156a-1) from the computing device to the user device (200);
in response to determining that the AAM (156, 156a-1) is not compatible with the operating system (118), identifying whether the additional AAM (156, 156a-1) associated with the function record (150, 150a-1) is compatible with the operating system (118) using the indication of the operating system (118);
in response to determining that the additional AAM (156, 156a-1) is compatible with the operating system (118), transmitting the additional AAM (156, 156a-1) from the computing device to the user device (200); and
in response to determining that the additional AAM (156, 156a-1) is not compatible with the operating system (118), transmitting the web address.

2. The method (2100) of claim 1, wherein the AAM (156, 156a-1) further includes edition information that indicates the operating system (118) with which the native application (112) referenced by the AAM (156, 156a-1) is compatible, and
wherein identifying whether the AAM (156, 156a-1) is compatible with the operating system (118) of the user device (200) uses the edition information included in the AAM (156, 156a-1) and the indication.

3. The method (2100) of claim 1, wherein the additional AAM (156, 156a-1) further includes different edition information, wherein the different edition information comprise different versions of the native application (112) for different operating systems (118).

4. The method (2100) of claim 1, further comprising: determining that the AAM (156, 156a-1) or the additional AAM (156, 156a-1) is compatible with the native application (112) that is installed on the user device (200).

5. The method (2100) of claim 4, wherein the edition information further indicates a version of the native application (112) referenced by the AAM (156, 156a-1) with which the AAM (156, 156a-1) is compatible, and wherein determining that the AAM (156, 156a-1) is compatible with the native application (112) that is installed on the user device (200) comprises:
receiving an indication of a version of each of one or more native applications (112) that are installed on the user device (200); and
determining whether the AAM (156, 156a-1) is compatible with any of the one or more native applications (112) using the version of the native application (112) of the edition information included in the AAM (156, 156a-1) and the indication.

6. The method (2100) of claim 1, wherein the edition information further indicates a device type with which the native application (112) referenced by the AAM (156, 156a-1) is compatible,
and wherein the method further comprises:
receiving an indication of the device type of the user device (200); and
determining whether the AAM (156, 156a-1) is compatible with the device type of the user device (200) using the device type of the edition information included in the AAM (156, 156a-1).

7. The method (2100) of claim 1, wherein the each function record (150, 150a-I) further includes an ASI (154, 154a-I) describes a state of the native application (112) after the native application (112) has performed the one or more operations (162) indicated by the AAM (156, 156a-I), and wherein identifying the one or more function records (150, 150a-1) using the search query (202) comprises identifying the one or more function records (150, 150a-1) based on one or more matches between one or more terms of the search query (202) and one or more terms of the ASI (154, 154a-1) included in the identified one or more function records (150, 150a-1).

8. The method (2100) of claim 1, further comprising, transmitting link data (158) to the user device (200), wherein the link data (158) includes at least one of text and an image that are associated with a state of the native application (112) described by application state information, ASI (154, 154a-1) included in the one of the identified one or more function records (150, 150a-1) from which the AAM (156, 156a-1) was selected, wherein the each function record (150, 150a-1) further includes the ASI (154, 154a-1) described the state of the native application (112) after the native application (112) has performed the one or more operations (162) indicated by the AAM (156, 156a-1).

9. A computing device comprising:
one or more processors; and memory in communication with the one or more processors, wherein the memory stores instructions that, when executed on the one or more processors, cause the one or more processors to perform operations comprising:
receiving a search query (202) from a user device (200);
identifying one or more function records (150, 150a-1) using the search query (202), wherein:
each function record (150, 150a-1) includes an application access mechanism, AAM (156, 156a-1), additional AAM (156, 156a-1), and a web access mechanism (170, 170e),
wherein the AAM (156, 156a-1) includes a reference to a native application (112) executable on the user device (200) and indicates one or more operations (162) for the native application (112) to perform, and a web address,
the additional AAM (156, 156a-1) includes a reference to an edition of the native application (112) that is different than an edition of the native application (112) referenced by the AAM (156, 156a-1), and
the web address is for a web browser of the user device (200) to access a web version of the native application (112) referenced by the AAM (156, 156a-1);
selecting the AAM (156, 156a-1) from the identified one or more function records (150, 150a-1);
receiving an indication of an operating system (118) of the user device (200);
identifying whether the AAM (156, 156a-1) associated with the function record (150, 150a-1) is compatible with the operating system (118) using the indication of the operating system (118);
in response to determining that the AAM (156, 156a-1) is compatible with the operating system (118), transmitting the AAM (156, 156a-1) from the computing device to the user device (200);
in response to determining that (i) the AAM (156, 156a-1) is not compatible with the operating system (118), identifying whether the additional AAM (156, 156a-1) associated with the function record (150, 150a-1) is compatible with the operating system (118) using the indication of the operating system (118);
in response to determining that the additional AAM (156, 156a-1) is compatible with the operating system (118), transmitting the additional AAM (156, 156a-1) from the computing device to the user device (200); and
in response to determining that the additional AAM (156, 156a-1) is not compatible with the operating system (118), transmitting the web address.

10. The system of claim 9, wherein the operations further comprising:
transmitting link data (158) to the user device (200), wherein the link data (158) includes at least one of text and an image that are associated with a state of the native application (112) described by application state information, ASI (154, 154a-1) included in the one of the identified one or more function records (150, 150a-1) from which the AAM (156, 156a-1) was selected,
wherein the each function record (150, 150a-1) further includes the ASI (154, 154a-1) described the state of the native application (112) after the native application (112) has performed the one or more operations (162) indicated by the AAM (156, 156a-1).

11. A non-transitory computer-readable storage medium comprising instructions that cause a computing device to:
receive a search query (202) from a user device (200);
identify one or more function records (150, 150a-1) using the search query (202), wherein:
each function record (150, 150a-1) includes an application access mechanism, AAM (156, 156a-1), additional AAM (156, 156a-1), and a web access mechanism (170, 170e),
wherein the AAM (156, 156a-1) includes a reference to a native application (112) executable on the user device (200) and indicates one or more operations (162) for the native application (112) to perform, and a web address,
the additional AAM (156, 156a-1) includes a reference to an edition of the native application (112) that is different than an edition of the native application (112) referenced by the AAM (156, 156a-1), and
the web address is for a web browser of the user device (200) to access a web version of the native application (112) referenced by the AAM (156, 156a-1);
select the AAM (156, 156a-1) from the identified one or more function records (150, 150a-1);
receive an indication of an operating system (118) of the user device (200);
identify whether the AAM (156, 156a-1) associated with the function record (150, 150a-1) is compatible with the operating system (118) using the indication of the operating system (118);
in response to determining that the AAM (156, 156a-1) is compatible with the operating system (118), transmit the AAM (156, 156a-1) from the computing device to the user device (200);
in response to determining that the AAM (156, 156a-1) is not compatible with the operating system (118), identify whether the additional AAM (156, 156a-1) associated with the function record (150, 150a-1) is compatible with the operating system (118) using the indication of the operating system (118);
in response to determining that the additional AAM (156, 156a-1) is compatible with the operating system (118), transmit the additional AAM (156, 156a-1) from the computing device to the user device (200); and
in response to determining that the additional AAM (156, 156a-1) is not compatible with the operating system (118), transmit the web address.

## Patentansprüche

1. Verfahren (2100), welches Folgendes umfasst:
Empfangen einer Suchanfrage (202) von einer Benutzervorrichtung (200) an einer Computervorrichtung;
Identifizieren eines oder mehrerer Funktionsdatensätze (150, 150a-1) durch die Computervorrichtung unter Verwenden der Suchanfrage (202), wobei:
jeder Funktionsdatensatz (150, 150a-1) einen Anwendungszugriffsmechanismus, AAM (156, 156a-1), einen zusätzlichen AAM (156, 156a-1) und einen Webzugriffsmechanismus (170, 170e) enthält,
wobei der AAM (156, 156a-1) einen Verweis auf eine native Anwendung (112) enthält, die auf der Benutzervorrichtung (200) ausführbar ist, und eine oder mehrere Operationen (162), die die native Anwendung (112) ausführen soll, und eine Webadresse angibt,
der zusätzliche AAM (156, 156a-1) einen Verweis auf eine Ausgabe der nativen Anwendung (112) enthält, die sich von einer Ausgabe der nativen Anwendung (112) unterscheidet, auf die der AAM (156, 156a-1) verweist, und
die Webadresse für einen Webbrowser der Benutzervorrichtung (200) ist, um auf eine Webversion der nativen Anwendung (112) zuzugreifen, auf die der AAM (156, 156a-1) verweist;
Auswählen des AAM (156, 156a-1) aus den identifizierten einem oder mehreren Funktionsdatensätzen (150, 150a-1) durch die Computervorrichtung;
Empfangen einer Angabe eines Betriebssystems (118) der Benutzervorrichtung (200);
Identifizieren, ob der AAM (156, 156a-1), der mit dem Funktionsdatensatz (150, 150a-1) assoziiert ist, mit dem Betriebssystem (118) kompatibel ist, unter Verwenden der Angabe des Betriebssystems (118);
als Reaktion auf das Bestimmen, dass der AAM (156, 156a-1) mit dem Betriebssystem (118) kompatibel ist, Übertragen des AAM (156, 156a-1) von der Computervorrichtung an die Benutzervorrichtung (200);
als Reaktion auf das Bestimmen, dass der AAM (156, 156a-1) nicht mit dem Betriebssystem (118) kompatibel ist, Identifizieren, ob der zusätzliche AAM (156, 156a-1), der mit dem Funktionsdatensatz (150, 150a-1) assoziiert ist, mit dem Betriebssystem (118) kompatibel ist, unter Verwenden der Angabe des Betriebssystems (118);
als Reaktion auf das Bestimmen, dass der zusätzliche AAM (156, 156a-1) mit dem Betriebssystem (118) kompatibel ist, Übertragen des zusätzlichen AAM (156, 156a-1) von der Computervorrichtung an die Benutzervorrichtung (200); und
als Reaktion auf das Bestimmen, dass der zusätzliche AAM (156, 156a-1) nicht mit dem Betriebssystem (118) kompatibel ist, Übertragen der Webadresse.

2. Verfahren (2100) nach Anspruch 1, wobei der AAM (156, 156a-1) ferner Ausgabeinformationen enthält, die das Betriebssystem (118) angeben, mit dem die native Anwendung (112) kompatibel ist, auf die der AAM (156, 156a-1) verweist, und
wobei das Identifizieren, ob der AAM (156, 156a-1) mit dem Betriebssystem (118) der Benutzervorrichtung (200) kompatibel ist, die Ausgabeinformationen, die in dem AAM (156, 156a-1) enthalten sind, und die Angabe verwendet.

3. Verfahren (2100) nach Anspruch 1, wobei der zusätzliche AAM (156, 156a-1) ferner verschiedene Ausgabeinformationen enthält, wobei die verschiedenen Ausgabeinformationen verschiedene Versionen der nativen Anwendung (112) für verschiedene Betriebssysteme (118) umfassen.

4. Verfahren (2100) nach Anspruch 1, welches ferner Folgendes umfasst: Bestimmen, dass der AAM (156, 156a-1) oder der zusätzliche AAM (156, 156a-1) mit der nativen Anwendung (112) kompatibel ist, die auf der Benutzervorrichtung (200) installiert ist.

5. Verfahren (2100) nach Anspruch 4, wobei die Ausgabeinformationen ferner eine Version der nativen Anwendung (112) angeben, auf die der AAM (156, 156a-1) verweist, mit der der AAM (156, 156a-1) kompatibel ist, und wobei das Bestimmen, dass der AAM (156, 156a-1) mit der nativen Anwendung (112) kompatibel ist, die auf der Benutzervorrichtung (200) installiert ist, Folgendes umfasst:
Empfangen einer Angabe einer Version von jeder der einen oder mehreren nativen Anwendungen (112), die auf der Benutzervorrichtung (200) installiert sind; und
Bestimmen, ob der AAM (156, 156a-1) mit einer der einen oder mehreren nativen Anwendungen (112) kompatibel ist, unter Verwenden der Version der nativen Anwendung (112) der Ausgabeinformationen, die in dem AAM (156, 156a-1) enthalten sind, und der Angabe.

6. Verfahren (2100) nach Anspruch 1, wobei die Ausgabeinformationen ferner einen Vorrichtungstyp angeben, mit dem die native Anwendung (112) kompatibel ist, auf die der AAM (156, 156a-1) verweist, und wobei das Verfahren ferner Folgendes umfasst:
Empfangen einer Angabe des Vorrichtungstyps der Benutzervorrichtung (200); und
Bestimmen, ob der AAM (156, 156a-1) mit dem Vorrichtungstyp der Benutzervorrichtung (200) kompatibel ist, unter Verwenden des Vorrichtungstyps der Ausgabeinformationen, die in dem AAM (156, 156a-1) enthalten sind.

7. Verfahren (2100) nach Anspruch 1, wobei jeder Funktionsdatensatz (150, 150a-I) ferner ASI (154, 154a-I) enthält, die einen Zustand der nativen Anwendung (112) beschreiben, nachdem die native Anwendung (112) die eine oder mehreren Operationen (162) ausgeführt hat, die durch den AAM (156, 156a-I) angegeben werden, und wobei das Identifizieren des einen oder der mehreren Funktionsdatensätze (150, 150a-1) unter Verwenden der Suchanfrage (202) das Identifizieren des einen oder der mehreren Funktionsdatensätze (150, 150a-1) basierend auf einer oder mehreren Übereinstimmungen zwischen einem oder mehreren Begriffen der Suchanfrage (202) und einem oder mehreren Begriffen der ASI (154, 154a-1) umfasst, die in den identifizierten einem oder mehreren Funktionsdatensätzen (150, 150a-1) enthalten sind.

8. Verfahren (2100) nach Anspruch 1, welches ferner das Übertragen von Verbindungsdaten (158) an die Benutzervorrichtung (200) umfasst, wobei die Verbindungsdaten (158) einen Text und/oder ein Bild enthalten, die mit einem Zustand der nativen Anwendung (112) assoziiert sind, der durch Anwendungszustandsinformationen, ASI (154, 154a-1) beschrieben wird, die in dem einen der identifizierten einen oder mehreren Funktionsdatensätze (150, 150a-1) enthalten sind, aus denen der AAM (156, 156a-1) ausgewählt wurde, wobei jeder Funktionsdatensatz (150, 150a-1) ferner die ASI (154, 154a-1) enthält, die den Zustand der nativen Anwendung (112) beschreiben, nachdem die native Anwendung (112) die eine oder mehreren Operationen (162) ausgeführt hat, die durch den AAM (156, 156a-1) angegeben werden.

9. Computervorrichtung, die Folgendes umfasst:
einen oder mehrere Prozessoren; und einen Speicher, der mit dem einen oder den mehreren Prozessoren in Verbindung steht, wobei der Speicher Anweisungen speichert, die, wenn sie auf dem einen oder den mehreren Prozessoren ausgeführt werden, den einen oder die mehreren Prozessoren veranlassen, Operationen auszuführen, die Folgendes umfassen:
Empfangen einer Suchanfrage (202) von einer Benutzervorrichtung (200);
Identifizieren eines oder mehrerer Funktionsdatensätze (150, 150a-1) unter Verwenden der Suchanfrage (202), wobei:
jeder Funktionsdatensatz (150, 150a-1) einen Anwendungszugriffsmechanismus, AAM (156, 156a-1), einen zusätzlichen AAM (156, 156a-1) und einen Webzugriffsmechanismus (170, 170e) enthält,
wobei der AAM (156, 156a-1) einen Verweis auf eine native Anwendung (112) enthält, die auf der Benutzervorrichtung (200) ausführbar ist, und eine oder mehrere Operationen (162), die die native Anwendung (112) ausführen soll, und eine Webadresse angibt,
der zusätzliche AAM (156, 156a-1) einen Verweis auf eine Ausgabe der nativen Anwendung (112) enthält, die sich von einer Ausgabe der nativen Anwendung (112) unterscheidet, auf die der AAM (156, 156a-1) verweist, und
die Webadresse für einen Webbrowser der Benutzervorrichtung (200) ist, um auf eine Webversion der nativen Anwendung (112) zuzugreifen, auf die der AAM (156, 156a-1) verweist;
Auswählen des AAM (156, 156a-1) aus den identifizierten einem oder mehreren Funktionsdatensätzen (150, 150a-1);
Empfangen einer Angabe eines Betriebssystems (118) der Benutzervorrichtung (200);
Identifizieren, ob der AAM (156, 156a-1), der mit dem Funktionsdatensatz (150, 150a-1) assoziiert ist, mit dem Betriebssystem (118) kompatibel ist, unter Verwenden der Angabe des Betriebssystems (118);
als Reaktion auf das Bestimmen, dass der AAM (156, 156a-1) mit dem Betriebssystem (118) kompatibel ist, Übertragen des AAM (156, 156a-1) von der Computervorrichtung an die Benutzervorrichtung (200);
als Reaktion auf das Bestimmen, dass (i) der AAM (156, 156a-1) nicht mit dem Betriebssystem (118) kompatibel ist, Identifizieren, ob der zusätzliche AAM (156, 156a-1), der mit dem Funktionsdatensatz (150, 150a-1) assoziiert ist, mit dem Betriebssystem (118) kompatibel ist, unter Verwenden der Angabe des Betriebssystems (118);
als Reaktion auf das Bestimmen, dass der zusätzliche AAM (156, 156a-1) mit dem Betriebssystem (118) kompatibel ist, Übertragen des zusätzlichen AAM (156, 156a-1) von der Computervorrichtung an die Benutzervorrichtung (200); und
als Reaktion auf das Bestimmen, dass der zusätzliche AAM (156, 156a-1) nicht mit dem Betriebssystem (118) kompatibel ist, Übertragen der Webadresse.

10. System nach Anspruch 9, wobei die Operationen ferner Folgendes umfassen:
Übertragen von Verbindungsdaten (158) an die Benutzervorrichtung (200), wobei die Verbindungsdaten (158) einen Text und/oder ein Bild enthalten, die mit einem Zustand der nativen Anwendung (112) assoziiert sind, der durch Anwendungszustandsinformationen, ASI (154, 154a-1) beschrieben wird, die in dem einen der identifizierten einen oder mehreren Funktionsdatensätze (150, 150a-1) enthalten sind, aus denen der AAM (156, 156a-1) ausgewählt wurde,
wobei jeder Funktionsdatensatz (150, 150a-1) ferner die ASI (154, 154a-1) enthält, die den Zustand der nativen Anwendung (112) beschreiben, nachdem die native Anwendung (112) die eine oder mehreren Operationen (162) ausgeführt hat, die durch den AAM (156, 156a-1) angegeben werden.

11. Nicht-transitorisches computerlesbares Speichermedium, das Anweisungen enthält, die eine Computervorrichtung veranlassen zum:
Empfangen einer Suchanfrage (202) von einer Benutzervorrichtung (200);
Identifizieren eines oder mehrerer Funktionsdatensätze (150, 150a-1) unter Verwenden der Suchanfrage (202), wobei:
jeder Funktionsdatensatz (150, 150a-1) einen Anwendungszugriffsmechanismus, AAM (156, 156a-1), einen zusätzlichen AAM (156, 156a-1) und einen Webzugriffsmechanismus (170, 170e) enthält,
wobei der AAM (156, 156a-1) einen Verweis auf eine native Anwendung (112) enthält, die auf der Benutzervorrichtung (200) ausführbar ist, und eine oder mehrere Operationen (162), die die native Anwendung (112) ausführen soll, und eine Webadresse angibt,
der zusätzliche AAM (156, 156a-1) einen Verweis auf eine Ausgabe der nativen Anwendung (112) enthält, die sich von einer Ausgabe der nativen Anwendung (112) unterscheidet, auf die der AAM (156, 156a-1) verweist, und
die Webadresse für einen Webbrowser der Benutzervorrichtung (200) ist, um auf eine Webversion der nativen Anwendung (112) zuzugreifen, auf die der AAM (156, 156a-1) verweist;
Auswählen des AAM (156, 156a-1) aus den identifizierten einem oder mehreren Funktionsdatensätzen (150, 150a-1);
Empfangen einer Angabe eines Betriebssystems (118) der Benutzervorrichtung (200);
Identifizieren, ob der AAM (156, 156a-1), der mit dem Funktionsdatensatz (150, 150a-1) assoziiert ist, mit dem Betriebssystem (118) kompatibel ist, unter Verwenden der Angabe des Betriebssystems (118);
als Reaktion auf das Bestimmen, dass der AAM (156, 156a-1) mit dem Betriebssystem (118) kompatibel ist, Übertragen des AAM (156, 156a-1) von der Computervorrichtung an die Benutzervorrichtung (200);
als Reaktion auf das Bestimmen, dass der AAM (156,1 56a-1) nicht mit dem Betriebssystem (118) kompatibel ist, Identifizieren, ob der zusätzliche AAM (156, 156a-1), der mit dem Funktionsdatensatz (150, 150a-1) assoziiert ist, mit dem Betriebssystem (118) kompatibel ist, unter Verwenden der Angabe des Betriebssystems (118);
als Reaktion auf das Bestimmen, dass der zusätzliche AAM (156, 156a-1) mit dem Betriebssystem (118) kompatibel ist, Übertragen des zusätzlichen AAM (156, 156a-1) von der Computervorrichtung an die Benutzervorrichtung (200); und
als Reaktion auf das Bestimmen, dass der zusätzliche AAM (156, 156a-1) nicht mit dem Betriebssystem (118) kompatibel ist, Übertragen der Webadresse.

## Revendications

1. Procédé (2100) comprenant :
recevoir, à un dispositif informatique, une requête de recherche (202) en provenance d'un dispositif d'utilisateur (200) ;
identifier, par le dispositif informatique, un ou plusieurs enregistrements de fonction (150, 150a-1) en utilisant la requête de recherche (202), où :
chaque enregistrement de fonction (150, 150a-1) comprend un mécanisme d'accès à une application, AAM (156, 156a-1), un AAM supplémentaire (156, 156a-1) et un mécanisme d'accès au Web (170, 170e),
où l'AAM (156, 156a-1) comprend une référence à une application native (112) exécutable sur le dispositif d'utilisateur (200) et indique une ou plusieurs opérations (162) à être exécutées par l'application native (112), et une adresse Web,
l'AAM supplémentaire (156, 156a-1) comprend une référence à une édition de l'application native (112) qui est différente d'une édition de l'application native (112) référencée par l'AAM (156, 156a-1), et
l'adresse Web est destinée à un navigateur Web du dispositif d'utilisateur (200) pour accéder à une version Web de l'application native (112) référencée par l'AAM (156, 156a-1) ;
sélectionner, par le dispositif informatique, l'AAM (156, 156a-1) à partir des un ou plusieurs enregistrements de fonction identifiés (150, 150a-1) ;
recevoir une indication d'un système d'exploitation (118) du dispositif d'utilisateur (200) ;
identifier si l'AAM (156, 156a-1) associé à l'enregistrement de fonction (150, 150a-1) est compatible avec le système d'exploitation (118) en utilisant l'indication du système d'exploitation (118) ;
en réponse à la détermination selon laquelle l'AAM (156,156a-1) est compatible avec le système d'exploitation (118), transmettre l'AAM (156,156a-1) du dispositif informatique au dispositif d'utilisateur (200) ;
en réponse à la détermination selon laquelle l'AAM (156, 156a-1) n'est pas compatible avec le système d'exploitation (118), identifier si l'AAM supplémentaire (156, 156a-1) associé à l'enregistrement de fonction (150,150a-1) est compatible avec le système d'exploitation (118) en utilisant l'indication du système d'exploitation (118) ;
en réponse à la détermination selon laquelle l'AAM supplémentaire (156, 156a-1) est compatible avec le système d'exploitation (118), transmettre l'AAM supplémentaire (156, 156a-1) du dispositif informatique au dispositif d'utilisateur (200) ; et
en réponse à la détermination selon laquelle l'AAM supplémentaire (156,156a-1) n'est pas compatible avec le système d'exploitation (118), transmettre l'adresse Web.

2. Procédé (2100) selon la revendication 1, où l'AAM (156, 156a-1) comprend en outre des informations d'édition qui indiquent le système d'exploitation (118) avec lequel l'application native (112) référencée par l'AAM (156,156a-1) est compatible, et
où l'identification de la compatibilité de l'AAM (156, 156a-1) avec le système d'exploitation (118) du dispositif d'utilisateur (200) utilise les informations d'édition incluses dans l'AAM (156, 156a-1) et l'indication.

3. Procédé (2100) selon la revendication 1, où l'AAM supplémentaire (156, 156a-1) comprend en outre des informations d'édition différentes, où les informations d'édition différentes comprennent des versions différentes de l'application native (112) pour des systèmes d'exploitation différents (118).

4. Procédé (2100) selon la revendication 1, comprenant en outre : la détermination selon laquelle l'AAM (156,156a-1) ou l'AAM supplémentaire (156, 156a-1) est compatible avec l'application native (112) qui est installée sur le dispositif d'utilisateur (200).

5. Procédé (2100) selon la revendication 4, où les informations d'édition indiquent en outre une version de l'application native (112) référencée par l'AAM (156, 156a-1) avec laquelle l'AAM (156,156a-1) est compatible, et où la détermination selon laquelle l'AAM (156, 156a-1) est compatible avec l'application native (112) qui est installée sur le dispositif d'utilisateur (200) comprend :
recevoir une indication d'une version de chacune d'une ou de plusieurs applications natives (112) qui sont installées sur le dispositif d'utilisateur (200) ; et
déterminer si l'AAM (156, 156a-1) est compatible avec l'une quelconque des une ou plusieurs applications natives (112) en utilisant la version de l'application native (112) des informations d'édition incluses dans l'AAM (156, 156a-1) et l'indication.

6. Procédé (2100) selon la revendication 1, où les informations d'édition indiquent en outre un type de dispositif avec lequel l'application native (112) référencée par l'AAM (156,156a-1) est compatible, et où le procédé comprend en outre :
recevoir une indication du type de dispositif du dispositif d'utilisateur (200) ; et
déterminer si l'AAM (156, 156a-1) est compatible avec le type de dispositif du dispositif d'utilisateur (200) en utilisant le type de dispositif des informations d'édition incluses dans l'AAM (156, 156a-1).

7. Procédé (2100) selon la revendication 1, où chaque enregistrement de fonction (150, 150a-I) comprend en outre des ASI (154, 154a-1) qui décrivent un état de l'application native (112) après l'exécution par l'application native (112) des une ou plusieurs opérations (162) indiquées par l'AAM (156, 156a-I), et où l'identification des un ou plusieurs enregistrements de fonction (150, 150a-1) en utilisant la requête de recherche (202) comprend l'identification des un ou plusieurs enregistrements de fonction (150, 150a-1) sur la base d'une ou plusieurs correspondances entre un ou plusieurs termes de la requête de recherche (202) et un ou plusieurs termes des ASI (154, 154a-1) inclus dans les un ou plusieurs enregistrements de fonction identifiés (150, 150a-1).

8. Procédé (2100) selon la revendication 1, comprenant en outre la transmission de données de liaison (158) au dispositif d'utilisateur (200), où les données de liaison (158) comprennent au moins l'un parmi un texte et une image qui sont associés à un état de l'application native (112) décrit par des informations d'état d'application, ASI (154, 154a-1), incluses dans l'un des un ou plusieurs enregistrements de fonction identifiés (150, 150a-1) à partir desquels l'AAM (156, 156a-1) a été sélectionné, où chaque enregistrement de fonction (150, 150a-1) comprend en outre les ASI (154, 154a-1) qui décrivent l'état de l'application native (112) après l'exécution par l'application native (112) des une ou plusieurs opérations (162) indiquées par l'AAM (156, 156a-1).

9. Dispositif informatique comprenant :
un ou plusieurs processeurs ; et une mémoire en communication avec les un ou plusieurs processeurs, où la mémoire stocke des instructions qui, lorsqu'elles sont exécutées sur les un ou plusieurs processeurs, amènent les un ou plusieurs processeurs à effectuer des opérations comprenant :
recevoir une requête de recherche (202) d'un dispositif d'utilisateur (200) ;
identifier un ou plusieurs enregistrements de fonction (150, 150a-1) en utilisant la requête de recherche (202), où :
chaque enregistrement de fonction (150, 150a-1) comprend un mécanisme d'accès à une application, AAM (156, 156a-1), un AAM supplémentaire (156,156a-1) et un mécanisme d'accès au Web (170, 170e),
où l'AAM (156,156a-1) comprend une référence à une application native (112) exécutable sur le dispositif d'utilisateur (200) et indique une ou plusieurs opérations (162) à être exécutées par l'application native (112), et une adresse Web,
l'AAM supplémentaire (156, 156a-1) comprend une référence à une édition de l'application native (112) qui est différente d'une édition de l'application native (112) référencée par l'AAM (156, 156a-1), et
l'adresse Web est destinée à un navigateur Web du dispositif d'utilisateur (200) pour accéder à une version Web de l'application native (112) référencée par l'AAM (156, 156a-1) ;
sélectionner l'AAM (156, 156a-1) à partir des un ou plusieurs enregistrements de fonction identifiés (150, 150a-1) ;
recevoir une indication d'un système d'exploitation (118) du dispositif d'utilisateur (200) ;
identifier si l'AAM (156, 156a-1) associé à l'enregistrement de fonction (150, 150a-1) est compatible avec le système d'exploitation (118) en utilisant l'indication du système d'exploitation (118) ;
en réponse à la détermination selon laquelle l'AAM (156, 156a-1) est compatible avec le système d'exploitation (118), transmettre l'AAM (156, 156a-1) du dispositif informatique au dispositif d'utilisateur (200) ;
en réponse à la détermination selon laquelle (i) l'AAM (156, 156a-1) n'est pas compatible avec le système d'exploitation (118), identifier si l'AAM supplémentaire (156, 156a-1) associé à l'enregistrement de fonction (150, 150a-1) est compatible avec le système d'exploitation (118) en utilisant l'indication du système d'exploitation (118) ;
en réponse à la détermination selon laquelle l'AAM supplémentaire (156, 156a-1) est compatible avec le système d'exploitation (118), transmettre l'AAM supplémentaire (156,156a-1) du dispositif informatique au dispositif d'utilisateur (200) ; et
en réponse à la détermination selon laquelle l'AAM supplémentaire (156,156a-1) n'est pas compatible avec le système d'exploitation (118), transmettre l'adresse Web.

10. Système selon la revendication 9, où les opérations comprennent en outre :
transmettre des données de liaison (158) au dispositif d'utilisateur (200), où les données de liaison (158) comprennent au moins l'un parmi un texte et une image qui sont associés à un état de l'application native (112) décrit par des informations d'état d'application, ASI (154, 154a-1), incluses dans l'un des un ou plusieurs enregistrements de fonction identifiés (150, 150a-1) à partir desquels l'AAM (156, 156a-1) a été sélectionné, où chaque enregistrement de fonction (150, 150a-1) comprend en outre les ASI (154, 154a-1) qui décrivent l'état de l'application native (112) après l'exécution par l'application native (112) des une ou plusieurs opérations (162) indiquées par l'AAM (156, 156a-1).

11. Support de stockage non transitoire lisible par ordinateur comprenant des instructions qui amènent un dispositif informatique à :
recevoir une requête de recherche (202) en provenance d'un dispositif d'utilisateur (200) ;
identifier un ou plusieurs enregistrements de fonction (150,150a-1) en utilisant la requête de recherche (202), où :
chaque enregistrement de fonction (150, 150a-1) comprend un mécanisme d'accès à une application, AAM (156, 156a-1), un AAM supplémentaire (156,156a-1) et un mécanisme d'accès au Web (170, 170e),
où l'AAM (156, 156a-1) comprend une référence à une application native (112) exécutable sur le dispositif d'utilisateur (200) et indique une ou plusieurs opérations (162) à être exécutées par l'application native (112), et une adresse Web,
l'AAM supplémentaire (156, 156a-1) comprend une référence à une édition de l'application native (112) qui est différente d'une édition de l'application native (112) référencée par l'AAM (156, 156a-1), et
l'adresse Web est destinée à un navigateur Web du dispositif d'utilisateur (200) pour accéder à une version Web de l'application native (112) référencée par l'AAM (156, 156a-1) ;
sélectionner l'AAM (156, 156a-1) à partir des un ou plusieurs enregistrements de fonction identifiés (150, 150a-1) ;
recevoir une indication d'un système d'exploitation (118) du dispositif d'utilisateur (200) ;
identifier si l'AAM (156, 156a-1) associé à l'enregistrement de fonction (150, 150a-1) est compatible avec le système d'exploitation (118) en utilisant l'indication du système d'exploitation (118) ;
en réponse à la détermination selon laquelle l'AAM (156,156a-1) est compatible avec le système d'exploitation (118), transmettre l'AAM (156,156a-1) du dispositif informatique au dispositif d'utilisateur (200) ;
en réponse à la détermination selon laquelle l'AAM (156, 156a-1) n'est pas compatible avec le système d'exploitation (118), identifier si l'AAM supplémentaire (156, 156a-1) associé à l'enregistrement de fonction (150, 150a-1) est compatible avec le système d'exploitation (118) en utilisant l'indication du système d'exploitation (118) ;
en réponse à la détermination selon laquelle l'AAM supplémentaire (156, 156a-1) est compatible avec le système d'exploitation (118), transmettre l'AAM supplémentaire (156, 156a-1) du dispositif informatique au dispositif d'utilisateur (200) ; et
en réponse à la détermination selon laquelle l'AAM supplémentaire (156, 156a-1) n'est pas compatible avec le système d'exploitation (118), transmettre l'adresse Web.
